# EUROPEAN PATENT APPLICATION

(11) **EP 4 692 835 A1**
(43) Date of publication of application: **11.02.2026**
(21) Application number: 24780575.7
(22) Date of filing: 27.03.2024
(51) Int. Cl.: G01S 5/14

(54) **MOVING BODY MANAGEMENT SYSTEM**

(30) Priority: 29.03.2023 JP 2023053943; 29.03.2023 JP 2023053955; 29.03.2023 JP 2023053956; 30.03.2023 JP 2023056246; 30.03.2023 JP 2023056247; 30.03.2023 JP 2023056320; 31.03.2023 JP 2023059100; 31.03.2023 JP 2023059101; 31.03.2023 JP 2023059102
(71) Applicant: The Chugoku Electric Power Co., Inc., Hiroshima-shi, Hiroshima 730-8701 (JP)
(72) Inventor: FUKUHARA Yoji, Hiroshima-shi, Hiroshima 730-8701 (JP); KAMATA Ryosuke, Hiroshima-shi, Hiroshima 730-8701 (JP); TANABE Ryota, Hiroshima-shi, Hiroshima 730-8701 (JP); TAKANO Tomohiro, Hiroshima-shi, Hiroshima 730-8701 (JP); TOYOTA Mitsuo, Hiroshima-shi, Hiroshima 730-8701 (JP); MIYOSHI Momoko, Hiroshima-shi, Hiroshima 730-8701 (JP); OBARA Takaaki, Hiroshima-shi, Hiroshima 730-8701 (JP); TAKI Yoshihiko, Tokyo 102-0094 (JP)
(74) Representative: Hoffmann Eitle
(86) International application number: PCT/JP2024/012519
(87) International publication number: WO 2024/204474

(57) **Abstract**

The present invention provides a system and a method capable of specifying a position of a mobile object.

A system comprising a plurality of first devices and a mobile object including a second device is provided. The system comprises a distance calculator that calculates a distance between each of the plurality of first devices and the second device based on a propagation time of information or a signal between each of the plurality of first devices and the second device; and a position specifier that specifies a position of the second device based on the calculated distance between each of the plurality of first devices and the second device. **It** is preferable that the distance calculator calculates the distance based on a time deviation between a clock of one of the first devices and a clock of the second device.

## Description

### Technical Field

The present invention relates to a system, a method, and a mobile object.

### Background Art

In order to solve various problems caused due to a decrease in the number of agricultural workers and aging of population and to make agricultural works more efficient, efforts have been made to make work such as rice planting, grass cutting, and pesticide spraying unmanned or automated. In order to make the work unmanned or automated, an apparatus capable of executing autonomous traveling has been developed (for example, see Patent Literature 1).

In Patent Literature 1, an apparatus capable of executing autonomous traveling is able to control a position of a traveling apparatus by controlling positional information of the apparatus using positioning satellites. A method of acquiring positional information has important and essential roles in managing control of such an autonomously traveling apparatus. Various techniques have been examined (for example, Patent Literature 2).

Rental services for home electric appliances, vehicles such as automobiles and bicycles, agricultural machines such as cultivators and grass cutters, and the like have been widely spread. In a home appliance rental service, a service for billing a user according to a power consumption amount has been examined (for example, see Patent Literature 3).

On the other hand, in a rental service such as a vehicle or an agricultural machine of which an operation state is difficult to ascertain, a usage fee is generally set per day, per use, or in a predetermined time unit. Therefore, for example, even when a time for renting the agricultural machine is different, such as 2 hours and 10 hours, the same amount of billing may be given. Thus, the user has a sense of unfairness. Even when the renting time is short and an agricultural machine is operated excessively and overused, a proportion of cost for maintenance relative to revenue increases for a rental dealer, which causes concern of sufficient revenue being difficult to secure. In such a service, it is desirable to provide an appropriate billing method according to the actual operation time and operation content from the viewpoint of both a user and a rental dealer.

In order to eliminate manpower shortage and achieve labor saving, various robots that execute standard operations such as cooking, serving, payment processing, security, and cleaning, and work vehicles that execute transportation of package in warehouses have been introduced. In order to introduce indoor work robots such as the robots or the work vehicles, it is necessary to cause the indoor work robots to autonomously travel.

In general, radio waves from satellites cannot be received indoors, and satellite positioning systems using positioning satellites cannot be used. Therefore, in order to control the autonomous traveling of the indoor work robots, it is general to execute guidance using markers such as magnetic markers, optical markers, or QR codes (registered trademark). For example, Patent Literature 3 discloses an indoor work vehicle capable of easily coping with a layout change of an indoor facility. In Patent Literature 4, an image with a specific shape or pattern is projected as a landmark image. Then, a projection position or the like of the projected image can be changed according to the change in layout.

In recent years, automation of pharmacy dispensing processes has advanced with development of automated packaging machines that automatically package prescribed medications into single-dose sachets and automated inspection machines that verify the packaged medications. For example, Patent Literature 5 discloses a drug feeder capable of automating work of weighing out powdered medicine or the like.

On the other hand, automation of medication work for inpatients has not progressed. For example, Patent Literature 6 discloses a medication cart used when delivering a medicine, an infusion, or the like to an inpatient or the like in a medical facility or the like, but the cart is manually pushed by a nurse or the like to go near the patient, and automation of medication work is not taken into account.

In recent years, the number of workers engaged in restaurants has been drastically reduced, and securing of workers who provide food and drink has become a problem. Due to an influence of the novel coronavirus, there is an increasing demand for non-face-to-face and non-contact when food and drink are served, and there has been a demand for an apparatus that automatically serves food and drink to be served to tables of customers.

For example, Patent Literature 7 discloses an unmanned food delivery system that delivers food and drink from a kitchen to guest rooms. In Patent Literature 7, an unmanned food delivery apparatus has a main route that goes around the kitchen and the guest seats, and branch routes that branch from the main route toward tables disposed in the guest seats. The unmanned food delivery apparatus that travels along the main route and the branch routes can freely switch between the main route and the branch routes, and thus it is possible to achieve labor saving and personnel saving for serving dishes.

In recent years, various products such as automobiles have diversified, and a burden of management work of components necessary for assembling products has increased. Due to an increase in stay-at-home demand caused by spread of the new coronavirus, the number of packages handled by home delivery services has continued to increase significantly, and thus personnel saving and labor saving related to transportation of packages are required.

Therefore, in order to reduce the burden of management work, address manpower shortage, and labor saving, a transport apparatus transporting items including components used to manufacture products in a warehouse has been introduced. For example, Patent Literature 8 discloses an unmanned transport vehicle that can automatically travel in an indoor facility such as a warehouse where loads are stored, delivered, and transported.

In recent years, business and the like for selling images captured by imaging predetermined positions have been conducted. In such a business, accuracy of information regarding positions where the images are captured is required. In order to prove non-s fungibility of digital data, a non-fungible token (NFT) is issued in association with digital data.

Transportation by ground routes in disaster or disaster recovery is not easy. There are many problems in transportation from ground routes, such as deterioration in road conditions due to debris or abandoned vehicles, occurrence of heavy traffic congestion caused by vehicles heading for evacuation or transportation of supplies, and traffic restrictions. Therefore, a transportation method different from the ground routes has been desired.

In recent years, a self-propelled ropeway has been developed as a means for transporting people and supplies. Since the ropeway does not have to be subjected to large-scale construction work as in the case of newly providing a railroad, the ropeway can be installed at a relatively low construction cost. For example, Patent Literature 9 discloses a simple and inexpensive self-propelled ropeway system that is easy to introduce even in an existing complicated region such as an urban area. However, the mode in which a self-propelled ropeway is used for rescue and transportation of supplies in disaster and disaster recovery or reconstruction was not taken into account.

Further, an electric storage apparatus is known as a backup power supply in a disaster (for example, see Patent Literature 10). The position and the like of such an electric storage apparatus are ascertained in each of municipalities, local governments, and the like. However, it is difficult to say that a system capable of quickly and reliably supplying an electric storage apparatus to a location where electric power is required in an emergency such as a disaster is constructed.

An loT platform provides services for collecting, visualizing, analyzing, and controlling information acquired by loT devices. On the other hand, there is a security problem such as leakage of collected information.

Incidentally, in order to protect information, techniques of encrypting and handling information are known. Examples of encryption schemes include a common key encryption scheme in which the same key is used for encryption and decryption, and a public key encryption scheme in which encryption is executed using a public key and decryption is executed using a private key. There is an encryption scheme called ID-based encryption in which any identifier can be used as a public key. According to the ID-based encryption, it is possible to generate a public key from any identifier such as an email address of a user or a product number of a product.

### Citation List

### Patent Literature

Patent Literature 1: JP 2019-208424 A
Patent Literature 2: JP 2018-004589 A
Patent Literature 3: JP 2022 033054 A
Patent Literature 4: JP 2022-093887 A
Patent Literature 5: JP 2023-014239 A
Patent Literature 6: JP 2007-307997 A
Patent Literature 7: JP 2019-191715 A
Patent Literature 8: JP 2022-093887 A
Patent Literature 9: JP 6889874 B1
Patent Literature 10: JP 2014-187865 A

### Summary of Invention

### Technical Problem

An object of the present invention is, for example, any of the following. A first object of the present invention is to provide a system and a method capable of specifying a position of a mobile object. A second object of the present invention is to provide a system and a method capable of calculating a billing amount to a user. A third object of the present invention is to provide a system and method capable of specifying a position of an indoor work robot. A fourth object of the present invention is to provide a system, a method, and a medication cart capable of specifying a position of a medication cart capable of transporting medicine to be provided to a patient. A fifth object of the present invention is to provide a system and a method capable of specifying a position of a serving device capable of automatically traveling to serve food and drink. A sixth object of the present invention is to provide a system and a method capable of specifying a position of an item collection apparatus. A seventh object of the present invention is to provide a novel system that issues an NFT. An eighth object of the present invention is to provide a system and a method capable of specifying a position of a receptacle transported by a suspended rope. A ninth object of the present invention is to provide a system and a method capable of specifying a position of an electric storage apparatus. A tenth object of the present invention is to provide a novel system for protecting information.

### Solution to Problem

The present invention solves the above problem by any of the following:
[1] A system including a plurality of first devices and a mobile object including a second device, the system comprising: a distance calculator that calculates a distance between each of the plurality of first devices and the second device based on a propagation time of information or a signal between each of the plurality of first devices and the second device; and a position specifier that specifies a position of the second device based on the calculated distance between each of the plurality of first devices and the second device;
[2] The system according to [1], wherein the distance calculator calculates the distance based on a time deviation between a clock of one of the first device and a clock of the second device;
[3] The system according to [1] or [2], comprising: a time deviation calculator that calculates a time deviation between one of the first device and the second device by executing communication between the one first device and the second device; and a time corrector that corrects a time in the second device based on the calculated time deviation;
[4] The system according to any one of [1] to [3], comprising: a phase deviation calculator that calculates a phase deviation of a clock between one of the first device and the second device by executing communication between the one first device and the second device; and a phase corrector that corrects a phase in the second device based on the calculated phase deviation;
[5] The system according to any one of [1] to [4], wherein the mobile object executes automatic driving according to predetermined movement route information;
[6] The system according to [5], comprising: a first determinator that determines whether the specified position matches predetermined movement route information; and a movement route modifier that modifies the movement route information when it is determined that the specified position does not match the predetermined movement route information;
[7] The system according to any one of [1] to [6], wherein the mobile object is an agricultural machine;
[8] The system according to any one of [1] to [6], wherein the mobile object is an indoor work robot;
[9] The system according to any one of [1] to [6], wherein the mobile object is a medication cart capable of transporting medicine to be provided to a patient;
[10] The system according to [9], wherein the medication cart has an automatic driving function and sequentially moves to positions corresponding to a plurality of patients;
[11] The system according to [10], comprising: a position storage that stores a position of a bed for each patient; a first patient specifier that specifies a plurality of patients to whom medicine is to be delivered; a movement route generator that generates movement route information of the medication cart based on positions corresponding to the specified patients; and a movement controller that controls the medication cart to move according to the generated movement route information;
[12] The system according to any one of [9] to [11], wherein the medication cart includes a plurality of trays, and wherein the system comprising: a second patient specifier that specifies the patient scheduled to use contents of one of the plurality of trays; and a notifier that notifies of the tray corresponding to the specified patient and/or an enablementer that controls the tray corresponding to the specified patient such that the tray is available;
[13] The system according to [12], wherein, when the patient specified from the position of the medication cart does not match the patient specified by the second patient specifier, the notifier and the enablementer are not executed;
[14] The system according to any one of [1] to [6], wherein the mobile object is a serving device capable of automatically traveling to serve food and drink;
[15] The system according to [14], comprising: an order device operated by a customer of a restaurant; a first order information transmitter that transmits order information input through an operation executed by the customer on the order device to the serving device; and a first movement controller that controls the serving device such that the food and drink are moved to a position corresponding to the order device after the food and drink is placed in the serving device;
[16] The system according to [14] or [15], comprising: a management apparatus operated by a store clerk of a restaurant; a second order information transmitter that transmits order information input through an operation of a customer on an order device to the management apparatus; and an order information display that displays at least a part of the order information by the management apparatus;
[17] The system according to any one of [14] to [16], comprising: a management apparatus operated by a store clerk of a restaurant; and a second movement controller that controls the serving device to move to a predetermined position in response to an operation of the store clerk on the management apparatus;
[18] The system according to any one of [14] to [17], wherein the serving device includes a weight sensor; and wherein the system comprising a movement controller that controls such that movement of the serving device starts in response to placement of the food and drink on the serving device by the weight sensor and/or serving of the food and drink from the serving device by the weight sensor;
[19] The system according to any one of [14] to [18], wherein a food and drink dish on which food and drink are placed includes an RF tag, and wherein the system comprising: a specifier that specifies food and drink information regarding the served food and drink by reading the RF tag using a reading terminal; a second determinator that determines whether order information input through an operation of a customer on an order device matches the food and drink information; and a first display that displays a determined result;
[20] The system according to any one of [14] to [19], wherein a food and drink dish on which food and drink are placed includes an RF tag, and wherein the system comprising: a specifier that specifies food and drink information regarding the served food and drink by reading the RF tag using a reading terminal; and a second display that displays order information and the food and drink information input through an operation of a customer on an order device;
[21] The system according to any one of [1] to [6], wherein the mobile object is an item collection apparatus capable of automatically traveling to collect items;
[22] The system according to [21], comprising: an instruction apparatus that gives an instruction to produce a product that is able to be produced from a plurality of items or collect an item; an information transmitter that transmits collection information of the item to the item collection apparatus by an input to the instruction apparatus; and a first movement controller that controls the item collection apparatus such that the item collection apparatus is moved to a position at which the item included in the collection information is stored;
[23] The system according to [22], comprising a second movement controller that controls the item collection apparatus such that the item collection apparatus is moved to a predetermined position after the item collection apparatus collects the item included in the collection information;
[24] The system according to any one of [21] to [23], wherein the item includes an RF tag and the item collection apparatus includes a reading device of the RF tag, and wherein the system comprising a detector that detects that the item has been collected by reading the RF tags by the reading device;
[25] The system according to [24], comprising: a third determinator that determines, based on identification information of the item read from the RF tags by the reading device, whether the identification information is identification information corresponding to the item included in the collection information; and a notifier that notifies that items different from the item included in the collection information are collected when the second determinator determines that the identification information of the item read from the RF tags does not correspond to the identification information corresponding to the item included in the collection information;
[26] The system according to any one of [1] to [6], wherein the mobile object includes an electronic information creation apparatus;
[27] The system according to [26], wherein a position specifier specifies the position of the electronic information creation apparatus, and wherein the system comprising: a creator that creates electronic information; and an NFT issuance requestor that makes a request for issuing a non-fungible token (NFT) in association with the electronic information created by the creator and positional information specified by the position specifier and related to the position of the electronic information creation apparatus during creation of the electronic information;
[28] The system according to [27], comprising a viewing enablementer that enables the electronic information and the positional information to be viewed on a viewer terminal;
[29] The system according to [27] or [28], wherein the electronic information creation apparatus is an imaging apparatus, the electronic information is image information regarding an image, the creator creates image information regarding an image by imaging landscape, and the NFT issuance requestor makes the request for issuing the NFT in association with a position of the imaging apparatus during capturing of the image and/or a right holder of a real estate corresponding to a position of an imaging target object in the landscape;
[30] The system according to any one of [27] to [29], wherein the electronic information creation apparatus is an imaging apparatus, the electronic information is image information regarding an image, the creator creates image information regarding an image by imaging landscape, and the NFT issuance requestor makes the request for issuing the NFT in association with time information regarding a time at which the image is being captured, information regarding real estate corresponding to a position of the imaging apparatus at which the image is being captured and/or a position of an imaging target in the landscape, and/or information regarding the landscape;
[31] The system according to any one of [1] to [6], wherein the mobile object is a vehicle that includes a receptacle that has a space capable of storing items and is capable of traveling on ground;
[32] The system according to [31], wherein the vehicle has an automatic traveling function;
[33] The system according to [32], comprising: a transport request receptor that receives a transport request for an item from a user terminal operated by a user; a route information generator that generates route information for moving the receptacle from a departure point to a target point corresponding to the received transport request; and a movement controller that controls the receptacle such that the receptacle is moved in accordance with the generated route information, wherein a route corresponding to the generated route information includes a route along which the receptacle is transported by a suspended rope;
[34] The system according to any one of [31] to [33], wherein the receptacle is a cargo container;
[35] The system according to any one of [1] to [6], wherein the mobile object includes an electric storage apparatus;
[36] The system according to any one of [35], wherein predetermined information regarding a first electric storage apparatus is transmitted to a first computer apparatus when a voltage output from a storage battery or a storage amount of the storage battery of the first electric storage apparatus executing power feeding satisfies a predetermined first condition;
[37] The system according to [36], comprising a specifier that specifies a second electric storage apparatus that satisfies a predetermined second condition among the second electric storage apparatuses different from the first electric storage apparatus;
[38] The system according to [37], comprising a movement controller that controls such that the specified second electric storage apparatus is moved to the vicinity of the first electric storage apparatus;
[39] The system according to any one of [1] to [38], comprising a billing amount calculator that calculates a billing amount for a user of a mobile object based on an operation time or an operation distance of the mobile object;
[40] The system according to [39], comprising an operation time calculator that calculates the operation time or the operation distance of the mobile object based on the propagation time of information or the signal between the first device and the second device, and wherein the operation time calculator calculates the operation time or the operation distance of the mobile object based on the calculated distance between the first device and the second device;
[41] The system according to [40], wherein the operation time calculator calculates the operation time or the operation distance based on a change in the specified position;
[42] The system according to [39] or [40], comprising a billing amount adder that adds another billing amount for the user of the mobile object to the calculated billing amount;
[43] The system according to any one of [1] to [4], wherein the mobile object is a mobile object that includes an loT device or an loT device is the mobile object that has a function of moving;
[44] The system according to [43], comprising an encryptor that encrypts information acquired by the loT device based on the position specified by the position specifier and a time, and wherein the time is a time at which a distance is calculated by the distance calculator, a time at which a position is specified by the position specifier, or a time at which information is encrypted by the encryptor;
[45] The system according to [44], wherein the encryptor encrypts information through ID-based encryption using a public key corresponding to an identifier generated based on a position and a time specified by the position specifier;
[46] The system according to [44] or [45], comprising: a prediction model generator that generates a prediction model by executing machine learning using the encrypted information as input data or output data of the prediction model while the encrypted information remains;
[47] The system according to any one of [44] to [46], wherein the loT device includes a sensor, and the encryptor encrypts information acquired by the sensor;
[48] The system according to any one of [1] to [47], comprising a user terminal, wherein the user terminal includes a position display that displays the specified position on a map;
[49] A method executed in a system including a plurality of first devices and a mobile object including a second device, the method comprising: a distance calculation step of calculating a distance between each of the plurality of first devices and the second device based on a propagation time of information or a signal between each of the plurality of first devices and the second device; and a position specification step of specifying a position of the second device based on the calculated distance between each of the plurality of first devices and the second device;
[50] A mobile object comprising: a second device; a distance calculator that calculates a distance between each of the plurality of first devices and the second device based on a propagation time of information or a signal between each of the plurality of first devices and the second device; and a position specifier that specifies a position of the second device based on the calculated distance between each of the plurality of first devices and the second device;
[51] A system including a first device and a mobile object including a second device, the system comprising: an operation time calculator that calculates an operation time or an operation distance of the mobile object based on a propagation time of information or a signal between the first device and the second device; and a billing amount calculator that calculates a billing amount for a user of a mobile object according to the calculated operation time or operation distance of the mobile object;
[52] A system including an electronic information creation apparatus comprising: an electronic information creator that creates an electronic information; a position specifier that specifies a position of electronic information creation apparatus; and an NFT issuance requestor that makes a request for issuing a non-fungible token (NFT) in association with the electronic information created by the electronic information creator and the positional information specified by the position specifier and related to the position of the electronic information creation apparatus when the electronic information is created;
[53] The system according to [52], wherein the NFT issuance requestor makes a request for issuing the NFT in association with the time information related to the time at which the electronic information is created and the positional information of the electronic information creation apparatus when the electronic information is created;
[54] The system according to [52] or [53], wherein the electronic information is a digital data selected from the group consisting of an image, a sound, a text, a symbol, and numerical value;
[55] A system including a plurality of first devices and a receptacle including a space capable of storing an item, the system is for transporting the receptacle by a suspended rope, wherein the receptacle including a second device, and wherein the system comprising: a distance calculator that calculates a distance between each of the plurality of first devices and the second device based on a propagation time of information or a signal between each of the plurality of first devices and the second device; and a position specifier that specifies a position of the second device based on the calculated distance between each of the plurality of first devices and the second device;
[56] A method for transporting a vehicle capable of traveling on ground by a suspended rope;
[57] A system including a plurality of first devices and an electric storage apparatus including a second device, the system comprising: a distance calculator that calculates a distance between each of the plurality of first devices and the second device based on a propagation time of information or a signal between each of the plurality of first devices and the second device; and a position specifier that specifies a position of the second device based on the calculated distance between each of the plurality of first devices and the second device.

### Advantageous Effects of Invention

According to the present invention, it is possible to provide a system and a method capable of specifying a position of a mobile object. According to the present invention, it is possible to provide a system and a method capable of calculating a billing amount to a user. According to the present invention, it is possible to provide a system and method capable of specifying a position of an indoor work robot. According to the present invention, it is possible to provide a system, a method, and a medication cart capable of specifying a position of the medication cart capable of transporting medicine to be provided to a patient. According to the present invention, it is possible to provide a system and a method capable of specifying a position of a serving device capable of automatically traveling to serve food and drink. According to the present invention, it is possible to provide a system and a method capable of specifying a position of an item collection apparatus. According to the present invention, it is possible to provide a novel system that issues an NFT. According to the present invention, it is possible to provide a system and a method capable of specifying a position of a receptacle transported by a suspended rope. According to the present invention, it is possible to provide a system and a method capable of specifying a position of an electric storage apparatus. According to the present invention, it is possible to provide a novel system for protecting information.

### Brief Description of Drawings

Fig. 1 is a block diagram illustrating a configuration of a system according to the embodiment of the present invention.
Fig. 2 is a block diagram illustrating a hardware configuration of the first device according to the embodiment of the present invention.
Fig. 3 is a block diagram illustrating a hardware configuration of a mobile object according to the embodiment of the present invention.
Fig. 4 is a block diagram illustrating a hardware configuration of a server apparatus according to the embodiment of the present invention.
Fig. 5 is a flowchart illustrating work vehicle control processing according to the embodiment of the present invention.
Fig. 6 is a flowchart illustrating distance calculation processing according to the embodiment of the present invention.
Fig. 7 is a flowchart illustrating the position specifying processing according to the embodiment of the present invention.
Fig. 8 is a flowchart illustrating determination processing according to the embodiment of the present invention.
Fig. 9 is a flowchart illustrating billing amount calculation processing according to the embodiment of the present invention.
Fig. 10 is a diagram illustrating a positional information table according to the embodiment of the present invention.
Fig. 11 is a view illustrating a movement route according to the embodiment of the present invention.
Fig. 12 is a block diagram illustrating a configuration of a system according to the embodiment of the present invention.
Fig. 13 is a block diagram illustrating a configuration of a system according to the embodiment of the present invention.
Fig. 14 is a schematic diagram illustrating a medication cart according to the embodiment of the present invention.
Fig. 15 is a flowchart illustrating medication processing according to the embodiment of the present invention.
Fig. 16 is a schematic diagram illustrating a medication method according to the embodiment of the present invention.
Fig. 17 is a diagram illustrating an example of a medication information management table according to the embodiment of the present invention.
Fig. 18 is a block diagram illustrating a configuration of a system according to the embodiment of the present invention.
Fig. 19 is a flowchart illustrating serving processing according to the embodiment of the present invention.
Fig. 20 is a schematic diagram illustrating a serving method according to the embodiment of the present invention.
Fig. 21 is a flowchart illustrating the second determination processing according to the embodiment of the present invention.
Fig. 22 is a block diagram illustrating a configuration of a system according to the embodiment of the present invention.
Fig. 23 is a schematic diagram illustrating an item collection apparatus according to the embodiment of the present invention.
Fig. 24 is a flowchart illustrating collection processing according to the embodiment of the present invention.
Fig. 25 is a schematic diagram illustrating a movement route specifying method according to the embodiment of the present invention.
Fig. 26 is a diagram illustrating a product master table according to the embodiment of the present invention.
Fig. 27 is a block diagram illustrating a configuration of a system according to the embodiment of the present invention.
Fig. 28 is a block diagram illustrating a hardware configuration of the viewer terminal according to the embodiment of the present invention.
Fig. 29 is a flowchart illustrating imaging processing according to the embodiment of the present invention.
Fig. 30 is a flowchart illustrating viewing processing according to the embodiment of the present invention.
Fig. 31 is a flowchart illustrating NFT issuance processing according to the embodiment of the present invention.
Fig. 32 is a block diagram illustrating a configuration of a system according to the embodiment of the present invention.
Fig. 33 is a diagram illustrating an example of a connection body in which a vehicle and a suspender are connected according to the embodiment of the present invention.
Fig. 34 is a flowchart illustrating transport processing according to the embodiment of the present invention.
Fig. 35 is a block diagram illustrating a configuration of a system according to the embodiment of the present invention.
Fig. 36 is a block diagram illustrating a configuration of the second device according to the embodiment of the present invention.
Fig. 37 is a flowchart illustrating control processing according to the embodiment of the present invention.
Fig. 38 is a block diagram illustrating a configuration of a system according to the embodiment of the present invention.
Fig. 39 is a diagram illustrating a flowchart of encryption processing according to the embodiment of the present invention.
Fig. 40 is a diagram illustrating a flowchart of machine learning processing according to the embodiment of the present invention.

### Description of Embodiments

Hereinafter, embodiments of the invention will be described with reference to the accompanying drawings. It should be noted that the description regarding the effects illustrates one aspect of the effects of the embodiments of the invention and is not limited to those specifically mentioned herein. The order of the respective processes constituting the flowchart described hereinafter may be changed as long as such a change does not cause contradictions or inconsistencies in the processing contents. Furthermore, as long as it does not cause any contradictions or inconsistencies in the processing contents, some of the processes constituting the flowchart may be omitted, or new processes may be added. Furthermore, an apparatus that primarily executes each process of the flowchart may be changed to another apparatus, provided that such a change does not depart from the spirit of the present invention. In that case, it is also possible to modify the processing contents so as to avoid any contradictions or inconsistencies.

The system according to the present invention is a system that includes at least one computer apparatus. A system according to the present invention includes a mobile object including a second device and specifies a position of the mobile object based on a distance between each of a plurality of wireless devices and the second device. The system according to the present invention will be described in detail in the following first to ninth embodiments.

### [First Embodiment]

In a first embodiment, as an example, a case where the mobile object is applied to a work vehicle will be described. A case where a system executes processing for calculating a billing amount for a user will be described.

### [Configuration of System]

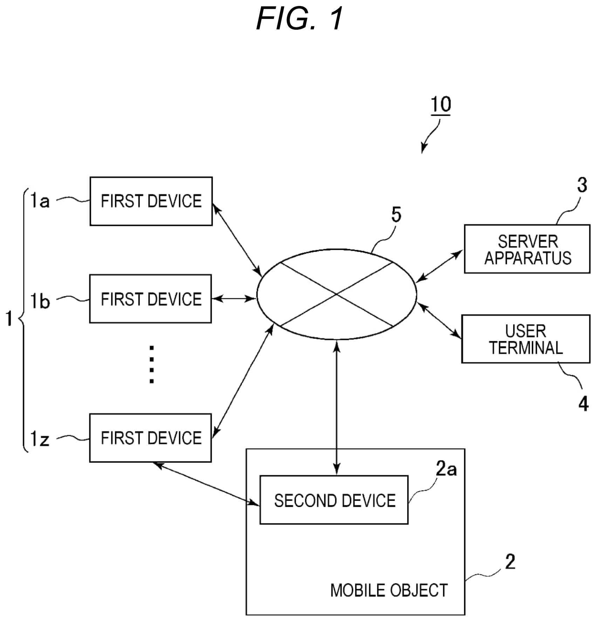

Fig. 1 is a block diagram illustrating a configuration of a system according to the first embodiment of the present invention. As illustrated, a system 10 according to the first embodiment of the present invention includes a plurality of first devices 1 (first devices 1a to 1z) and a mobile object 2 including a second device 2a. The system 10 preferably includes three or more first devices 1. The system 10 may include a server apparatus 3, a user terminal 4, and a communication network 5.

The first devices 1a to 1z and the second device 2a (or the mobile object 2) can be directly communicably connected without the communication network 5. The first devices 1a to 1z can be communicably connected to the server apparatus 3 via the communication network 5. The second device 2a (or the mobile object 2) can be communicably connected to the server apparatus 3 via the communication network 5. Further, the user terminal 4 can be communicably connected to the server apparatus 3 via the communication network 5.

### [First Device]

The first device 1 is a reference device that synchronizes a clock of the second device 2a. One first device 1 can also function as a reference device that synchronizes the clocks of the second device 2a with the plurality of second devices 2a. Further, the first device 1 may synchronize a clock with a certain first device 1 serving as a reference, and can also function as a reference device that synchronizes clocks of other second devices. Since the first device 1 is a reference device that synchronizes a clock of the second device 2a, the first device 1 preferably has a clock with higher accuracy.

Further, a plurality of second devices 2a may be provided for any one first device 1, and each of the plurality of second devices 2a may function as a reference device that synchronizes clocks of a plurality of other second devices, which forms a pyramidal relationship.

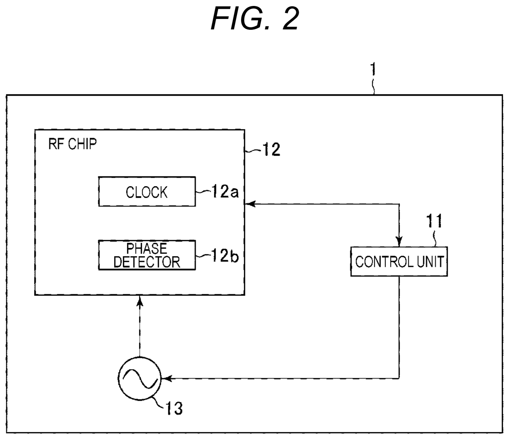

A configuration of a first device 1 according to the first embodiment of the present invention will be described. Fig. 2 is a block diagram illustrating a hardware configuration of the first device according to the first embodiment of the present invention. The first device 1 includes a control unit 11, an RF chip 12, and an oscillator 13. The RF chip 12 includes a clock 12a and a phase detector 12b. The first device 1 may have other configurations as necessary in addition to the control unit 11, the RF chip 12, the oscillator 13, the clock 12a, and the phase detector 12b.

The control unit 11 is not particularly limited. For example, a microcomputer (microcontroller) can be used. The control unit 11 executes program execution processing based on a program and data. The RF chip 12 executes processing for receiving and transmitting a radio signal. Data received by the RF chip 12 is subjected to an arithmetic processing by the control unit 11.

The oscillator 13 oscillates at a predetermined frequency and outputs a signal for providing an operational timing of each unit of an apparatus. As the oscillator 13, an atomic oscillator or a crystal oscillator can be used. The clock 12a clocks an output signal of the oscillator 13 as a vibration source and outputs time. A time clocked by the clock 12a is controlled by the control unit 11 such that the time is transmitted to the second device 2a via the RF chip 12. The phase detector 12b detects a phase of a carrier wave included in information received from the second device 2a and detects a phase of a signal oscillated by the oscillator 13 in the first device 1.

In the system 10, the plurality of first devices 1 are installed. In the first embodiment of the present invention, a location at which the first device 1 is installed is not particularly limited. The first device 1 may be installed indoors or outdoors. For example, the first device 1 may be installed outdoors where the mobile object 2 moves or works. In this case, some of the plurality of first devices 1 may be installed outdoors, and the other first devices 1 may be installed indoors. When the plurality of first devices 1 are installed, a positional relationship among the plurality of first devices 1 to be installed is not particularly limited. For example, in order to cover a region where the position of the second device 2a can be specified, the plurality of first devices 1 may be arranged to be positioned at intersections of grids, or the first devices 1 may be arrayed at predetermined intervals on the outer circumference of a work region to surround the work region where the mobile object 2 works. The first device 1 is preferably installed at a fixed position at which the installation position can be specified. The first device 1 may be disposed, for example, in a power transmission tower that supports a power transmission line. The positional information regarding a position at which the first device 1 is installed may be stored in the second device 2a, the server apparatus 3, or the like in association with identification information with which the first device 1 can be identified.

### [Mobile Object and Second Device]

The second device 2a (or the mobile object 2) can establish communication connection with the first device 1 without being involved in the communication network 5, and can establish communication connection with the server apparatus 3 via the communication network 5.

A time of the second device 2a is synchronized with reference to a time clocked by the first device 1, and a phase of the signal generated by the oscillator in the second device 2a is synchronized with reference to a phase of a signal generated by the oscillator in the first device 1. The second device 2a may function as a reference device that synchronizes a clock of another second device with another second device. The time of the other second device is synchronized based on the time clocked by the second device 2a, and the phase of the signal generated by the oscillator in the other second device is synchronized based on the phase of the signal generated by the oscillator in the second device 2a. In the second to fifth and seventh to ninth embodiments to be described below, the second devices 2a function similarly. In the sixth embodiment to be described below, an imaging apparatus 2E functions similarly to the second device 2a.

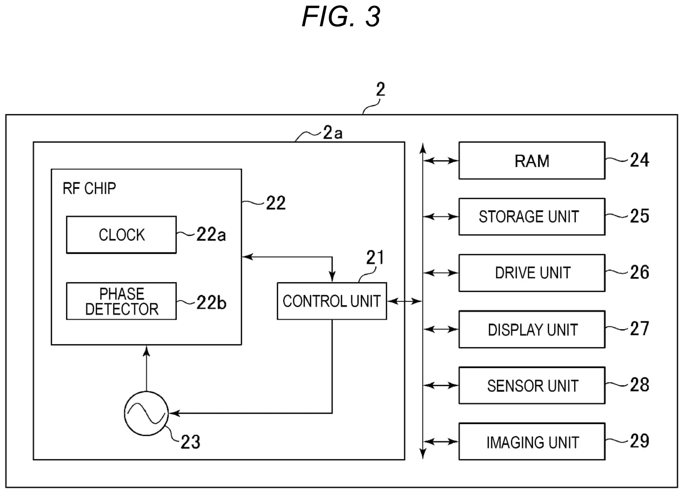

The mobile object 2 and the second device 2a will be described. Fig. 3 is a block diagram illustrating a hardware configuration of a mobile object according to the first embodiment of the present invention. The mobile object 2 includes a control unit 21, an RF chip 22, an oscillator 23, a RAM 24, a storage unit 25, and a drive unit 26 that are connected via a bus. The mobile object 2 may include a display unit 27, a sensor unit 28, an imaging unit 29, and an input unit (not illustrated). The second device 2a is included in the mobile object 2 and includes the control unit 21, the RF chip 22, and the oscillator 23.

The RF chip 22 includes a clock 22a and a phase detector 22b. The second device 2a may have another configuration as necessary in addition to the control unit 21, the RF chip 22, the oscillator 23, the clock 22a, and the phase detector 22b.

The control unit 21 includes a CPU and a ROM. The control unit 21 executes a program stored in the storage unit 25 and controls the second device 2a and the mobile object 2. The RAM 24 is a work area of the control unit 21. The storage unit 25 is a storage area where programs and data are stored. The control unit 21 executes arithmetic processing based on a program and data read from the RAM 24 and data input by an input unit (not illustrated).

The RF chip 22 can transmit and receive data to and from other computer apparatuses. The data received by the RF chip 22 is loaded into the RAM 24 and is subjected to an arithmetic processing by the control unit 21.

The oscillator 23 oscillates at a predetermined frequency and outputs a signal for giving an operational timing of each unit of the apparatus. As the oscillator 23, for example, a crystal oscillator can be used. The clock 22a clocks the output signal of the oscillator 23 as a vibration source and outputs a time. The time clocked by the clock 22a is controlled by the control unit 21 such that the time is transmitted to the first device 1 via the RF chip 22. The phase detector 22b detects a phase of a carrier wave included in information received from the first device 1 and detects a phase of a signal oscillated by the oscillator 23 of the second device 2a.

The drive unit 26 operates the mobile object 2 according to a predetermined program or human operation.

The display unit 27 has a display screen. The control unit 21 outputs a video signal for displaying an image on the display screen in accordance with a result of the arithmetic processing. Here, the display screen of the display unit 27 may be a touch panel including a touch sensor. In this case, the touch panel functions as an input unit. The touch panel can execute an operation such as turning on and off power of the second device 2a and the mobile object 2, a start operation, an operation, and a stop operation.

The sensor unit 28 may include various sensors such as an infrared sensor, a pressure sensor, an acceleration sensor, and a gyro sensor. For example, the sensor unit 28 can measure a distance to another obstacle by an infrared sensor. The sensor unit 28 can detect collision by a pressure sensor or an acceleration sensor. For example, the pressure sensor may be included in a portion that is a front surface in a traveling direction of the mobile object 2 or a convex portion of the outer shape of the mobile object 2. The sensor unit 28 can detect an overturn of the mobile object 2 by an acceleration sensor or a gyro sensor.

The control unit 21 detects that an overturn or collision has occurred based on information acquired by the sensor unit 28. When the control unit 21 detects that the mobile object 2 has overturned or collided, the control unit 21 can also transmit a notification indicating that the mobile object 2 has overturned or collided from the mobile object 2 to the user terminal 4 via the server apparatus 3.

The imaging unit 29 includes a camera and can image the surroundings of the mobile object 2 with the camera. For example, the imaging unit 29 may record a surrounding situation for a predetermined time at the time of occurrence of a trouble such as a case where an overturn or a collision is detected by the sensor unit 28. Alternatively, the imaging unit 29 may normally execute imaging and store recording for a predetermined time (for example, several tens of seconds before and after occurrence of a trouble) in the storage unit 25 when the trouble occurs.

In the above description, a case where the second device 2a and the mobile object 2 share the same control unit 21 and are controlled by the control unit 21 has been described. However, the second device 2a and the mobile object 2 may have different control units.

The second device 2a is included in the mobile object 2. The case where "the second device 2a is included in the mobile object 2" includes a case where the second device 2a is incorporated as a part of the mobile object 2 to share some configurations and functions such as a control unit and a function for communication, a case where the second device 2a is attached to the inside of the housing of the mobile object 2, and a case where the second device 2a is attached to the outside of the housing of the mobile object 2. For example, the mobile object 2 and the second device 2a may be configured as separate bodies, or the mobile object 2 and the second device 2a may be configured as separate bodies. A position at which the second device 2a is attached to the mobile object 2 is not particularly limited. The case where "the second device 2a is included in the mobile object 2" includes a case where the second device 2a having a function of directly establishing communication connection with the first device 1 and the mobile object 2 share some or all of the functions and the hardware configuration. For example, the second device 2a and the mobile object 2 may share the same control unit and may be controlled by the control unit.

The second device 2a may be included in a portion where the mobile object 2 executes work. For example, when the mobile object 2 includes an arm as a portion for executing work, the second device 2a may be included in the arm. A plurality of second devices 2a may be mounted on one mobile object 2. Positional information of the second device 2a may be stored in the server apparatus 3 or the like in association with identification information with which the second device 2a can be identified or identification information with which the mobile object 2 including the second device 2a can be identified.

The mobile object 2 according to the first embodiment of the present invention will be described. The mobile object 2 is not particularly limited as long as the mobile object 2 is able to move. As the mobile object 2, a known mobile object can be used except that the mobile object includes the second device 2a. More specifically, the mobile object 2 is an object such as a drone or a robot that moves remotely or unmanned, a general vehicle on which a person can board, such as a vehicle such as an automobile, a taxi, a bus, an electric train, or a train, an aircraft such as a helicopter, an airship, a glider, or a jet aircraft, or a ship such as a ship, a cargo ship, a lifesaving boat, or a submarine.

A vehicle is not particularly limited as long as the vehicle can move on land, on the sea, and in the sky, but may have a rotator capable of moving the vehicle by rotating wheels, rollers, propellers, or the like. The land is a land on which a mobile object can move or on which a work vehicle that is a mobile object can work, and is, for example, a concept including a pier provided on the sea. The sea is a space where on the sea or a river where a work vehicle that can move a mobile object or is a mobile object and where work can be executed, and is a concept including not only a surface area but also a underwater area. The sky is a space where a mobile object can move or work, and is a concept including an outer space. The land, the sea, and the sky are not limited to the earth and may belong to a celestial body other than the earth, for example, a satellite such as the moon, a planet such as the mars, a comet, an asteroid, or the like and may be the inside and/or the surface of an artificial satellite or a space station. The mobile object that can move on the land may be, for example, any of a bicycle, a motorized bicycle, a motorcycle, a tricycle, a four-wheeled automobile, and an electric wheelchair.

The mobile object 2 may include, for example, a construction vehicle used for construction use, such as a dump car and a bulldozer, an industrial vehicle used for cargo handling such as a forklift, an agricultural machine used for agriculture, such as a tractor and a combine, a space development vehicle such as a probe vehicle, a medical machine such as a microrobot that works in a human body, or a work vehicle or a work device used for a special use. The work vehicle may be, for example, an agricultural machine. The agricultural machine is not particularly limited, and may be an agricultural machine used not only for a tractor used for general purposes but also for various uses such as tilling, leveling, preparation, fertilization, seeding/transplantation, pest control, and harvest.

The mobile object 2 may be an object such as a drone or a robot that moves remotely or unmanned. For example, it may be a drone that monitors transmission and distribution lines, a cleaning robot, a medical microrobot that works in a human body, or the like.

The mobile object 2 may be an animal including a human. When the mobile object 2 is an animal including a human, the system 10 can acquire positional information of the animal when the animal holds the second device 2a. The animal may be, for example, a child, an adult, an elderly person, a rescue dog, a rescue team, a pet, or livestock. The system 10 may allow a wild animal to carry the second device 2a so that a behavior range and a movement route of the wild animal can be investigated.

The mobile object 2 is not limited to a self-propelled mobile object that has a propulsive force. For example, the mobile object 2 may be an object that moves by being carried, possessed, worn, or the like by a person. Specifically, the mobile object 2 may be an object including baggage, a bag, a wallet, a camera, household goods, sports goods, a musical instrument, a wristwatch, an accessory, a cloth, a digital device such as a smartphone or a laptop personal computer, and a wearable terminal.

The mobile object 2 may be driven by an engine, may be driven by an electric motor, or may be driven by a hybrid of an engine and an electric motor. The mobile object 2 may be a known vehicle driven by a person or an automatic driving vehicle that has an automatic driving function. When the mobile object 2 is an automatic driving vehicle, the mobile object 2 includes a control unit (such as a CPU), a RAM, and a storage unit. In this case, the control unit controls driving of the mobile object 2. A display screen of the display unit 27 of the mobile object 2 may be a touch panel including a touch sensor. The touch panel may be a contact type or a contactless type. The touch panel can execute operations such as turning on and off power of the mobile object 2, starting an operation, and ending an operation. The mobile object 2 may be able to establish communication connection with the server apparatus 3 or the user terminal 4.

When the mobile object 2 is a work vehicle or a work device used for a special use such as a construction vehicle, an industrial vehicle, an agricultural machine, a space development vehicle, and a medical machine, a predetermined work can be executed. A work region of the mobile object 2 and a work to be executed can be specified by operating the mobile object 2 or the user terminal 4. For example, a map can be displayed on a touch panel of the mobile object 2 or the user terminal 4, and a region on the map can be designated as a work region on the touch panel. Further, a plurality of options for the work are displayed, and the work to be executed by the mobile object 2 can be designated by selecting one of the options. In this way, when a region where the work is to be executed and a work to be executed are designated, the mobile object 2 moves to an actual region corresponding to the designated region on the map and starts the designated work. Alternatively, a plurality of pieces of work region information may be stored in the storage unit of the mobile object 2 or the user terminal 4, and any one of the plurality of pieces of work region information may be selected on the touch panel, so that the mobile object 2 moves to an actual region corresponding to the selected work region information and starts the designated work.

The mobile object 2 may be able to move through an operation by a person or may be able to move by automatic driving. When the mobile object 2 is an automatic driving vehicle, the mobile object 2 may be able to automatically move according to the movement route information. The mobile object 2 may execute the target work at an arrival place after movement according to the movement route information, or may execute the target work while movement according to the movement route information. The work executed by the mobile object 2 may also be work that can be executed by an operation by a person or work that can be executed by automatic driving.

The definition of the mobile object 2 to be described above can be applied to a "mobile object" in the following first to ninth embodiments as long as there is no inconsistency.

The movement route of the mobile object 2 can be specified as movement route information by the control unit of the second device 2a, the server apparatus 3, the control unit of the mobile object 2, or the control unit of the user terminal 4. The movement route information of the mobile object 2 may be generated according to a predetermined program in the control unit of the second device 2a, the server apparatus 3, the control unit of the mobile object 2, or the control unit of the user terminal 4 or may be stored in advance in the storage unit of the server apparatus 3, the storage unit of the mobile object 2, or the storage unit of the user terminal 4. Further, the movement route information may be generated by the user operating the mobile object 2 or the user terminal 4.

The movement route information may include, for example, a departure point, a target point, and positional information of the mobile object 2 from the start of movement to the end of movement. The positional information may be represented by latitude, longitude, and altitude or may be represented by coordinates of a coordinate system (for example, XYZ coordinates of an orthogonal coordinate system). When the positional information is managed based on the orthogonal coordinate system, any point in a building where the mobile object 2 executes work can be set as the origin of the orthogonal coordinate system. The movement route information may include one or a plurality of via-points.

When the mobile object 2 or the server apparatus 3 generates the movement route information according to a predetermined program, the movement route information may be generated based on the departure point and the target point so that a movement distance is minimized, or the movement route information may be generated to avoid an obstacle according to map information. In this case, the map information is stored in advance in the storage unit of the mobile object 2 or the server apparatus 3. In the map information, information regarding a region where the mobile object 2 cannot move, such as a position of an obstacle or a wall, a region where the mobile object 2 can move, or a region where work by the mobile object 2 is required is stored as latitude, longitude, altitude, coordinates of a coordinate system, or the like.

The movement route and the positional information of the mobile object 2 may be managed with longitude, latitude, altitude, or coordinates of a coordinate system (for example, XYZ coordinates of an orthogonal coordinate system) of a coordinate system. When the movement route and the positional information are managed based on the orthogonal coordinate system, any point in the region (for example, a building of a facility, a warehouse, a hospital, or the like) where the mobile object 2 moves can be set as the origin of the orthogonal coordinate system. Specifically, for the work vehicle in the first embodiment, an indoor work robot 2A in the second embodiment, a medication cart 2B in the third embodiment, a serving device 2C in the fourth embodiment, an item collection apparatus 2D in the fifth embodiment, the imaging apparatus 2E or an unmanned aircraft 2F in the sixth embodiment, a vehicle 2G in the seventh embodiment, or an electric storage apparatus 2H in the eighth embodiment, the movement route and the positional information may be managed with coordinates in latitude, longitude, and altitude, or a coordinate system.

### [Server Apparatus]

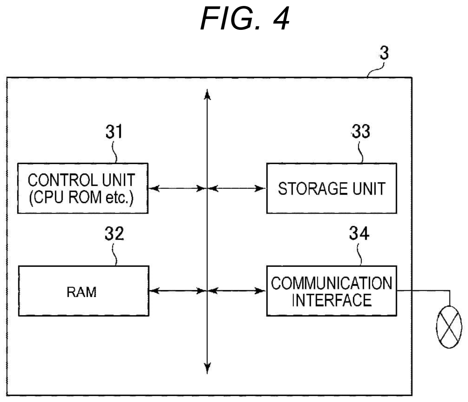

Next, the server apparatus will be described. Fig. 4 is a block diagram illustrating a hardware configuration of a server apparatus according to the first embodiment of the present invention. The server apparatus 3 includes at least a control unit 31, a RAM 32, a storage unit 33, and a communication interface 34 and is connected via an internal bus.

The control unit 31 includes a CPU and a ROM, executes a program stored in the storage unit 33, and controls the server apparatus 3. The control unit 31 includes an internal timer that clocks a time. The RAM 32 is a work area of the control unit 31. The storage unit 33 is a storage region where programs and data are stored. That is, the storage unit 33 functions as a recording medium storing a program. The control unit 31 reads a program and data from the RAM 32, and executes program execution processing based on information or the like received from the first device 1, the second device 2a, the mobile object 2, or the user terminal 4.

The program may be stored in a recording medium such as a CD-ROM. In this case, a program stored in the recording medium may be installed in another computer apparatus included in the system 10 to execute a predetermined function. Alternatively, the program may be distributed from a computer apparatus outside of the system. In this case, a program distributed from the computer apparatus outside of the system may be installed in another computer apparatus included in the system 10 to execute the predetermined function.

The server apparatus 3 can acquire, from the second device 2a or the mobile object 2, a distance to the first device 1 calculated through distance calculation processing to be described below and/or positional information regarding the position of the second device 2a specified through position specifying processing to be described below. It is also possible to specify the position of the second device 2a from a distance between each of the plurality of first devices 1 and the second device 2a calculated by the distance calculation processing. It can be considered that the positional information of the second device 2a is substantially the same as the positional information of the mobile object 2. The positional information of the second device 2a is transmitted from the second device 2a to the server apparatus 3 in association with, for example, identification information with which the second device 2a can be identified and a time at which the positional information is specified, and is stored in the server apparatus 3 in association with the time and the positional information. On the other hand, the server apparatus 3 can transmit the positional information of the second device 2a to the user terminal 4.

The server apparatus 3 may store identification information with which the mobile object can be identified, identification information with which a user can be identified, a type such as a type of vehicle of the mobile object, use, and the like in association with identification information with which the second device 2a can be identified. With the information, it is possible to collect data regarding when a mobile object is operating, how long the mobile object is operating, how far the mobile object is operating for each type and use of a type of the mobile object. The collected data is useful data for, for example, agriculture-related companies such as agricultural machine manufacturers to determine a rental or sale period of the work vehicle and to develop performance appropriate for the use.

The server apparatus 3 may communicate with the first device 1, the second device 2a, or the user terminal 4 via a smart meter installed in a building such as a building in which the server apparatus 3 is installed or a nearby building. The server apparatus 3 may communicate with the first device 1, the second device 2a, or the user terminal 4 via an optical fiber installed alongside the power transmission tower.

The smart meter receives, for example, information regarding an operation distance and an operation time to be described below from the second device 2a. In this case, the smart meter is preferably a smart meter corresponding to a user of the mobile object 2 including the second device 2a. The "smart meter corresponding to the user" is a concept including a smart meter provided by an electric power company, such as a smart meter that manages a power consumption amount of the user when the user makes a power use contract with the electric power company. The smart meter can transmit data of the power consumption amount measured by the smart meter and the received data of the operation distance and the operation time to the server apparatus 3. In the smart meter, the operation distance and the operation time may be converted into a power consumption amount and may be transmitted to the server apparatus 3.

### [User Terminal]

Next, the user terminal will be described. The user terminal 4 is a terminal operated by a user who manages or uses the mobile object 2. The user terminal 4 can establish communication connection with the server apparatus 3 via the communication network 5. The user terminal 4 may control one mobile object 2 or may control a plurality of mobile objects 2. The user terminal 4 may transmit control information for controlling an operation and traveling of the mobile object 2. The control information may include movement route information of the mobile object 2.

The user terminal 4 can confirm a position of the mobile object 2. Specifically, by receiving the positional information of the mobile object 2 in the user terminal 4 and associating the positional information with the map information, the position of the mobile object 2 can be displayed on the map on the display screen of the user terminal 4. The positional information of the mobile object 2 may be confirmed as latitude and longitude information or a coordinate position of an XYZ coordinate system. By confirming the position of the mobile object 2 and the movement route operated on the map, the user can easily recognize a location where work in the work region is completed and a location where work is further required.

The user terminal 4 includes, for example, a control unit, a RAM, a storage unit, a communication interface, an input unit, and a display unit that are connected via an internal bus. The control unit of the user terminal 4 includes a CPU and a ROM, executes a program stored in the storage unit, and controls the user terminal 4. The RAM is a work area of the control unit. The storage unit is a storage region where programs and data are stored. The control unit reads a program and data from the RAM, and executes program execution processing based on information or the like received from the server apparatus 3.

In the display unit of the user terminal 4, the display screen of the display unit may be a touch panel including a touch sensor. The touch panel may be a contact type or a contactless type. The touch panel may also function as an input unit.

### [Work Vehicle Control Processing]

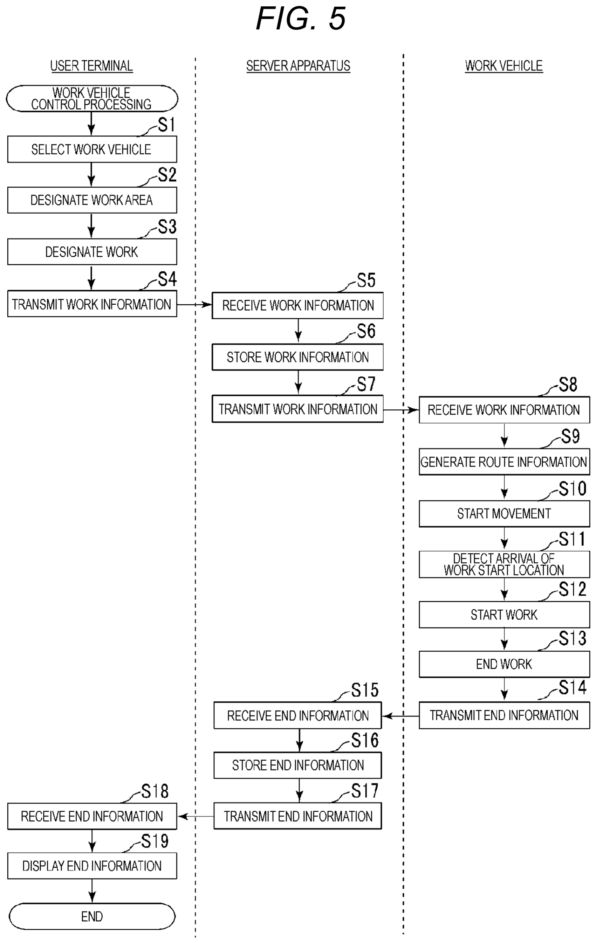

Next, processing for controlling the mobile object according to the first embodiment of the present invention will be described. According to the first embodiment of the present invention, work vehicle control processing will be described taking a case where the mobile object 2 is a work vehicle as an example. Fig. 5 is a flowchart illustrating work vehicle control processing according to the first embodiment of the present invention. First, the user operates the user terminal 4 to start a dedicated application for using the system 10. The dedicated application is started, a screen for starting an operation of the work vehicle is opened from a menu screen, and the user terminal 4 is operated to select a work vehicle to be operated (step S1). The user can select a work vehicle to be operated from a plurality of work vehicles. Subsequently, the user operates the user terminal 4 to designate a work region where the work vehicle is caused to work (step S2), and further designates work to be executed by the work vehicle (step S3). When the work region is designated in step S2, a work start location can also be designated. In the designation of the work in step S3, it is designated which type of work is executed when the work vehicle can execute a plurality of types of work such as leveling, preparation, and fertilization.

Subsequently, the selected work vehicle, the designated work region (including the work start location), and the work information regarding the work are transmitted from the user terminal 4 to the server apparatus 3 (step S4). In step S4, the work vehicle ID with which the work vehicle is specified is transmitted as information regarding the work vehicle. In step S4, information regarding coordinates or latitude/longitude of the designated region is transmitted as the information regarding the work region.

The server apparatus 3 receives the work information from the user terminal 4 (step S5). The received work information is stored in the storage unit 33 of the server apparatus 3. In the storage unit 33, a work management table is set, and a work vehicle ID, a designated work region, and work are recorded in association with a work ID assigned to each work. When the positional information regarding a position of a work vehicle is specified through position specifying processing to be described below, a time at which the position is specified and the positional information are further stored in the work management table in association with the work ID.

Subsequently, the selected work vehicle (work vehicle ID) and work information regarding the designated work region and the work are transmitted from the server apparatus 3 to the work vehicle (step S4). The work vehicle receives these pieces of work information (step S8). When the work information is received in step S8, distance calculation processing and position specifying processing to be described below are started. The distance calculation processing and the position specifying processing are continuously and periodically executed after the work vehicle starts to move until end of the work and stop of the operation of the work vehicle.

In the work vehicle receiving the work information, the movement route information is generated based on the position specified through the position specifying processing to be described below and the position of the designated work region (step S9). When the movement route information is generated, movement of the work vehicle is started (step S10). The work vehicle moves according to the movement route information. When it is detected that the work vehicle has reached the work region or the work start location (the position of the work vehicle is within the work region, or the position of the work vehicle matches the work start location) (step S11), the work designated in step S3 is started (step S12). The work by the work vehicle may be executed during the movement or may be executed at the same position without movement. When the work is executed during the movement, the work vehicle moves according to the movement route information while executing the work.

When the work vehicle ends the execution of the work in the entire designated work region, the work by the work vehicle ends (step S13). When the work ends, the work vehicle may automatically return to a location before the reception of the work information. When the work ends, end information indicating that the work ends is transmitted from the work vehicle to the server apparatus 3 (step S14). The end information includes a work vehicle ID and information regarding an end time at which the work ends. The server apparatus 3 receives the end information from the work vehicle (step S15). Subsequently, the end of the work and the end time are stored in the work management table (step S16).

Subsequently, end information indicating that the work has ended is transmitted from the server apparatus 3 to the user terminal 4 (step S17). The end information includes a work vehicle ID and information regarding an end time at which the work ends. The user terminal 4 receives the end information from the server apparatus 3 (step S18) and displays the fact that the work by the work vehicle has ended (step S19). Through the processing of steps S1 to S19, the work vehicle control processing ends.

### [Distance Calculation Processing]

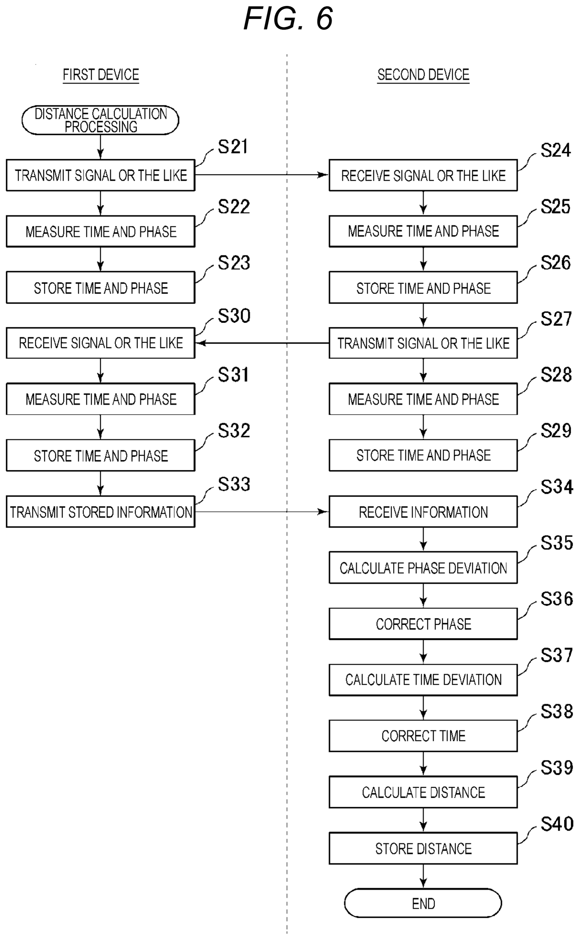

Next, distance calculation processing according to the first embodiment of the present invention will be described. In the following description, a case where the mobile object 2 is a work vehicle will be described as an example. The distance calculation processing is processing for calculating the distance between the first device 1 and the second device 2a based on a propagation time of information or a signal between the first device 1 and the second device 2a. The distance calculation processing may be processing of calculating the distance between each of the plurality of first devices 1 and the second device 2a based on the propagation time of the information or the signal between each of the plurality of first devices 1 and the second device 2a. Since the second device 2a is included in the work vehicle, it can also be said that this processing calculates a distance between each of the plurality of first devices and the work vehicle. Fig. 6 is a flowchart illustrating distance calculation processing according to the first embodiment of the present invention. In the following flowchart, processing for calculating the distance between one first device 1 and the second device 2a will be described.

The distance calculation processing can be executed, for example, every predetermined time or whenever a predetermined condition is satisfied. For example, when the work vehicle is operated, the distance calculation processing in steps S21 to S40 can be set to be started at predetermined time intervals (for example, every 5 minutes) after the start of the operation. A setting can be made such that, after the execution of the distance calculation processing, the position specifying processing and/or determination processing to be described below is executed within a predetermined time (for example, within a few seconds). Alternatively, the setting can be made such that, after the start of the distance calculation processing, the movement of the work vehicle may be stopped until the position specifying processing and/or the determination processing is completed. In the case of the setting, since the work vehicle moves slightly or does not move from the position specified in the distance calculation processing, it is possible to curb a deviation between the position specified in the distance calculation processing and a position of a traveling work vehicle in real time.

First, information or a signal is transmitted from the first device 1 to the second device 2a (step S21). Information or a signal transmitted from the first device 1 to the second device 2a is not particularly limited. The first device 1 clocks a time at which the information or the signal is transmitted in step S21 and measures a phase at the transmission (step S22). Then, the clocked time and the measured phase are stored in a memory in the control unit 11 (step S23).

Subsequently, the second device 2a receives the information or the signal from the first device 1 (step S24). The second device 2a clocks a time at which the information or the signal is received in step S24, and measures a phase at the reception (step S25). Then, the clocked time and the measured phase are stored in the memory in the control unit 21 or the storage unit 25 (step S26).

Subsequently, the second device 2a transmits the information or the signal to the first device 1 (step S27). The information or the signal transmitted from the second device 2a to the first device 1 is not particularly limited. The second device 2a clocks the time at which the information or the signal is transmitted in step S27, and measures the phase at the transmission (step S28). Then, the clocked time and the measured phase are stored in the memory in the control unit 21 or the storage unit 25 (step S29).

The first device 1 receives the information or the signal transmitted in step S27 (step S30). The first device 1 clocks a time at which the information or the signal is received in step S30 and measures a phase at the reception (step S31). Then, the clocked time and the measured phase are stored in the memory in the control unit 11 (step S32). When step S32 ends, the process proceeds to step S33.

In the first device 1, the RF chip 12 transmits information regarding the time and the phase at the transmission of the signal in step S21 stored in step S23 and information regarding the time and the phase at the reception of the signal in step S30 stored in step S32 to the second device 2a (step S33).

Then, the second device 2a receives the information regarding the time at which the first device 1 transmitted the information or the signal and the phase at the transmission in step S21 and the information regarding the time at which the first device 1 receives the information or the signal and the phase at the reception in step S30 (step S34).

Subsequently, the control unit 21 of the second device 2a calculates a phase deviation between the phase of the signal generated by the oscillator 13 of the first device 1 and the phase of the signal generated by the oscillator 23 of the second device 2a (step S35). The phase deviation can be calculated based on a phase difference between a phase of a carrier wave included in information or a signal transmitted from the first device 1 to the second device 2a and a phase of a signal oscillated by the oscillator 23 of the second device 2a when the second device 2a receives the information or the signal, and a phase difference between a phase of a carrier wave included in information or a signal transmitted from the second device 2a to the first device 1 and a phase of a signal oscillated by the oscillator 13 of the first device 1 when the first device 1 receives the information or the signal.

The phase of the carrier wave included in the information or the signal transmitted from the first device 1 to the second device 2a is the phase of the information or the signal transmitted in step S21. The information regarding the phase is transmitted from the first device 1 to the second device 2a in step S33. The phase of the signal oscillated by the oscillator 23 of the second device 2a when the second device 2a receives the information or the signal is the phase of the information or the signal received in step S24. The information regarding the phase is measured by the second device 2a in step S25 and is stored in step S26. The phase of the carrier wave included in the information or the signal transmitted from the second device 2a to the first device 1 is, for example, the phase of the information or the signal transmitted in step S27. The information regarding the phase is stored by thesecond device 2a in step S29. The phase of the signal oscillated by the oscillator 13 of the first device 1 when the first device 1 receives the information or the signal is, for example, the phase of the information or the signal received in step S30. The information regarding the phase is measured in step S31 and is transmitted from the first device 1 to the second device 2a in step S33.

Here, the phase of the carrier wave included in the information or the signal transmitted from the first device 1 to the second device 2a is a concept including not only the phase of the carrier wave included in the information or the signal transmitted from the first device 1 to the second device 2a but also the phase of the carrier wave included in the signal obtained by mixing down the information or the signal. Similarly, the phase of the carrier wave included in the information or the signal transmitted from the second device 2a to the first device 1 is a concept including not only the phase of the carrier wave included in the information or the signal transmitted from the second device 2a to the first device 1 but also the phase of the carrier wave included in the signal obtained by mixing down the information or the signal.

When the phase difference between the phase of the carrier wave included in the information or the signal transmitted from the first device 1 to the second device 2a and the phase of the signal oscillated by the oscillator 23 of the second device 2a when thesecond device 2a receives the information or the signal is defined as ΔΦ_{S}, and the phase difference between the phase of the carrier wave included in the information or the signal transmitted from the second device 2a to the first device 1 and the phase of the signal oscillated by the oscillator 13 of the first device 1 when the first device 1 receives the information or the signal is defined as ΔΦ_{M}, a phase difference ΔΦ_{P} caused due to a signal propagating between the first device 1 and the second device 2a can be calculated from an arithmetic mean of the phase difference ΔΦ_{S} and the phase difference ΔΦ_{M}. That is, the phase difference ΔΦ_{P} can be calculated by Formula (1): ΔΦ_{P} = 1/2 × (ΔΦ_{S} + ΔΦ_{M}).

When the phase deviation between the first device 1 and the second device 2a is defined as ΔΦ_{C}, a relationship expressed by Formula (2): ΔΦ_{M} = ΔΦ_{P} + (- ΔΦ_{C}) is established. Therefore, the phase deviation ΔΦ_{C} can be calculated by subtracting the phase difference ΔΦ_{M} from the phase difference ΔΦ_{P}. That is, the phase deviation ΔΦ_{C} can be calculated by Formula (3): ΔΦ_{C} = 1/2 × (ΔΦ_{S} - ΔΦ_{M}). In step S35, the phase deviation between the first device 1 and the second device 2a is calculated using Formula (3).

Here, the phase deviation ΔΦ_{C} is calculated by Formula (3), but the phase deviation ΔΦ_{C} to be calculated may be obtained by further subtracting 2π or 4π, that is, 2nπ. n may take 0 or a positive integer. Therefore, it is also possible to specify whether n is 0, 1, or 2 (that is, whether a value obtained by further subtracting 2nπ from the phase deviation ΔΦ_{C} obtained by Formula (3) is an original phase deviation or whether a value obtained without the subtraction is the original phase deviation) based on a propagation time T_{P} to be described below or a time difference between the first device 1 and the second device 2a.

A signal transmitted from the first device 1 to the second device 2a and a signal transmitted from the second device 2a to the first device 1 may start from a state in which an output at the start of transmission is not 0 but any value. In this case, it is necessary to correct the phase deviation ΔΦ_{C} by measuring the phase and the transmission time at the start of transmission. By normally making the phase at the start of transmission constant and executing the transmission at a predetermined time, it is possible to omit processing for correcting ΔΦ_{C} after measuring the phase and the transmission time at the start of transmission.

The second device 2a corrects the phase of the signal generated by the oscillator 23 of the second device 2a to achieve synchronization with the signal generated by the oscillator 13 of the first device 1 based on the calculated phase deviation ΔΦ_{C} (step S36). The correction of the phase in step S36 is controlled and executed by the control unit 21. The phase deviation of the oscillator 23 of the second device 2a occurs due to the influence of the environment around the second device 2a. By executing the synchronization processing periodically in this manner, the clock 22a of the second device 2a can be continuously clocked with high accuracy.

Subsequently, in the first device 1, the time difference between the first device 1 and the second device 2a is calculated based on a time at which the first device 1 transmits information or a signal to the second device 2a, a time at which the second device 2a transmits information or a signal to the first device 1, a time at which the first device 1 transmits information or a signal and the second device 2a receives the information or a signal and clocks a time, and a time at which the second device 2a transmits information or a signal and the first device 1 receives the information or the signal and clocks a time (step S37).

The time at which the first device 1 transmits the information or the signal to the second device 2a is a time at which the information is transmitted in step S21. The information regarding the time is transmitted from the first device 1 to the second device 2a in step S33. The time at which the second device 2a transmits the information or the signal to the first device 1 is a time at which the information or the signal is transmitted in step S27. The information regarding the time is stored in the second device 2a in step S29. Subsequently, the time at which the first device 1 transmits the information or the signal and the second device 2a receives and clocks a time is a time at which the information is received in step S24. The information regarding the time is recorded by the second device 2a in step S25 and is stored in step S26. The time at which the second device 2a transmits the information or the signal and the first device 1 receives and clocks a time is a time at which the information or the signal is received in step S30. The information regarding the time is clocked in step S31 and transmitted from the first device 1 to the second device 2a in step S33.

When the time at which the first device 1 transmits information or a signal to the second device 2a is defined as T_{M}, the time at which the second device 2a transmits information or a signal to the first device 1 is defined as T_{S}, the time at which the first device 1 transmits information or a signal and the second device 2a receives the information or the signal and clocks a time is defined as T_{MS}, and the time at which the second device 2a transmits information or a signal and the first device 1 receives the information or the signal and clocks a time is defined as T_{SM}, the time difference between the first device 1 and the second device 2a can be calculated by Formula (4): T_{L} = 1/2 × ((T_{SM} - Ts) - (T_{MS} - T_{M})). In step S37, the time difference between the first device 1 and the second device 2a is calculated by Formula (4). The second device 2a corrects the time in the second device 2a to achieve synchronization with the time of the first device 1 based on the calculated time difference (step S38).

Subsequently, a distance between the first device 1 and the second device 2a is calculated (step S39). In step S39, the distance between the first device 1 and the second device 2a can be calculated by calculating a propagation time in which information or a signal propagates between the first device 1 and the second device 2a from a substantial difference between a time at which the first device 1 transmits the information or the signal and the time at which the second device 2a receives the information or the signal and multiplying the propagation time by a propagation speed (for example, the speed of light) of the information or the signal. The difference between the time at which the first device 1 transmits the information or the signal and the time at which the second device 2a receives the information or the signal can be calculated based on, for example, the time at which the first device 1 transmits the information or the signal to the second device 2a in step S21 (the time at which the first device 1 transmits the information or the signal to the second device 2a in step S33), the time at which the second device 2a receives the information or the signal from the first device 1 in step S24, the time stored in the memory or the storage unit 25 in step S26, and the time deviation calculated in step S37.

In step S39, the distance between the first device 1 and the second device 2a can be calculated by calculating a propagation time in which information or a signal propagates between the first device 1 and the second device 2a from a substantial difference between a time at which the second device 2a transmits information or a signal and a time at which the first device 1 receives the information or the signal and multiplying the propagation time by a propagation speed (for example, the speed of light) of the information or the signal. The difference between the time at which the second device 2a transmits the information or the signal and the time at which the first device 1 receives the information or the signal can be calculated based on, for example, the time at which the second device 2a transmits the information or signal to the first device 1 in step S27 and is stored in the memory or the storage unit 25 in step S29, the time at which the first device 1 receives the information or signal in step S30 (transmitted from the first device 1 to the second device 2a in step S33), and the time deviation calculated in step S37.

The distance between the first device 1 and the second device 2a calculated in step S39 is stored in the memory in the control unit 21 or the storage unit 25 of the second device 2a in association with, for example, time information regarding the calculated time or the like and identification information with which the first device 1 can be identified (or positional information of the first device 1) (step S40). When step S40 is executed, the distance calculation processing ends.

By executing the processing of steps S21 to S38, it is possible to correct the time deviation and the phase deviation between the first device 1 and the second device 2a. By periodically synchronizing the time and/or the phase of the internal clock of the first device 1 with the time and/or the phase of the atomic clock supplying a standard time, and synchronizing the time and/or the phase of the internal clock of the second device 2a with the time and/or the phase of the internal clock of the first device 1, the time and/or the phase of the internal clock of the second device 2a can be matched with the standard time. For the processing for synchronizing the time and/or the phase of the internal clock of the first device 1 with the time and/or the phase of the atomic clock supplying the standard time, the description related to the processing of steps S21 to S38 can be adopted within a necessary range.

By executing the processing from steps S21 to S40, can not only a time deviation and a phase deviation between the first device 1 and the second device 2a be corrected, but the distance between the first device 1 and the second device 2a can also be calculated. While the time deviation between the first device 1 and the second device 2a is corrected in step S38, it is not always necessary to correct the time deviation, and the distance between the first device 1 and the second device 2a can be calculated without correcting the time deviation based on the time deviation calculated in step S37. That is, the distance can be calculated based on the time deviation between the time of one of the first device and the time of the second device.

While the phase deviation between the first device 1 and the second device 2a is corrected in step S36, it is not always necessary to correct the phase deviation, and the distance between the first device 1 and the second device 2a can be calculated without correcting the phase deviation. That is, the distance can be calculated based on the phase deviation between the time of one of the first device and the time of the second device.

That is, the distance between the first device 1 and the second device 2a may be calculated when it is assumed that there is no time deviation and/or phase deviation or it is assumed that the time deviation and/or the phase deviation is corrected based on the time deviation and/or the phase deviation between the internal clock included in the first device 1 and the internal clock included in the second device 2a.

While the time deviation and the phase deviation between the first device 1 and the second device 2a are corrected and the distance between the first device 1 and the second device 2a is calculated by executing the processing from steps S21 to S40, it is also possible to separately execute processing for correcting the time deviation between the first device 1 and the second device 2a, processing for correcting the phase deviation between the first device 1 and the second device 2a, and processing for calculating the distance between the first device 1 and the second device 2a.

In the processing for calculating the distance between the first device 1 and the second device 2a, the distance between one second device 2a and each of the plurality of first devices 1 can be calculated. When the position of the second device 2a is specified, as will be described below, the distance between the first device 1 and the second device 2a is specified by the number of first devices 1 required for specifying the position. Here, even when the distance to each of the plurality of first devices 1 is calculated for one second device 2a, time deviation correction processing and phase deviation correction processing may be executed only by one first device 1, and the time deviation correction processing and the phase deviation correction processing may not be executed during communication with the other first devices 1.

Here, the second device 2a calculates the distance between the first device 1 and the second device 2a. Instead of the second device 2a, the first device 1 may calculate the distance between the first device 1 and the second device 2a through the same processing as step S39. When the distance is calculated by the first device 1, the distance between the first device 1 and the second device 2a is stored in the memory in the control unit 11 in association with time information regarding the calculated time or the like and the identification information with which the second device 2a can be identified.

Instead of the second device 2a, the server apparatus 3 may calculate the distance between the first device 1 and the second device 2a through the same processing as step S39. When the distance is calculated in the server apparatus 3, information necessary for the calculation is received directly or indirectly from the first device 1 and/or the second device 2a. When the distance is calculated in the server apparatus 3, the distance between the first device 1 and the second device 2a is stored in the storage unit 33 of the server apparatus 3 in association with time information regarding the calculated time or the like, identification information with which the first device 1 can be identified (or positional information of the first device 1), and identification information with which the second device 2a can be identified.

While the distance between the first device 1 and the second device 2a is calculated here, in a case where the system includes a plurality of second devices 2a, it is also possible to calculate the distance between one second device 2a and another second device 2a. In this case, the distance between one second device 2a and another second device 2a can be calculated by calculating a propagation time in which information or a signal propagates between one of the second device 2a and the other second device 2a by a substantial difference between a time at which one of the second device 2a transmits the information or the signal and a time at which the other second device 2a receives the information or the signal, and multiplying the propagation time by a propagation speed (for example, the speed of light) of the information or the signal.

Moreover, in the above, while the embodiment of calculating the distance between one first device and the second device 2a, in the system 10, for each of a plurality of first devices 1, the distance between the second device 2a and the other first device 1 that is different from the one first device 1 can also be calculated as in the same manner with the embodiment of calculating the distance between one first device 1 and the second device 2a.

### [Position Specifying Processing]

Next, the position specifying processing according to the first embodiment of the present invention will be described. **In** the following description, a case where the mobile object 2 is a work vehicle will be described as an example. The position specifying processing is processing for specifying the position of the second device based on the distance between each of the plurality of first devices 1 and the second device 2a calculated in the distance calculation processing. Since the second device 2a is included in the work vehicle, it can also be said that this processing is a processing specifying the position of the work vehicle.

In order to specify the position of the second device 2a, it is assumed that a distance to each of the plurality of first devices 1 is calculated for one second device 2a in the distance calculation processing. For example, when one second device 2a and the plurality of first devices 1 are at the same height, that is, when there are these devices on the same XY plane, the position of the second device 2a (for example, latitude and longitude or XY coordinates of the second device 2a) can be specified based on the distance between one second device 2a and each of the three first devices 1 and the position of each of the three first devices 1. Accordingly, when one second device 2a and the plurality of first devices 1 are at the same height, the number of pieces of data regarding the distance between the first device 1 and the second device 2a necessary for specifying the position is 3.

For example, when the height of one second device 2a is different from the height of at least one of the plurality of first devices 1 and the first devices 1 are not on the same plane, the position (for example, latitude, longitude, and altitude, or XYZ coordinates, of the second device 2a) of the second device 2a can be specified based on the distance between one second device 2a and each of the four first devices 1 and the position of each of the four first devices 1. Accordingly, when the height of one second device 2a is different from the height of at least one of the plurality of first devices 1, and the first devices 1 are not on the same plane, the number of pieces of data regarding the distance between the first device 1 and the second device 2a necessary for specifying the position is 4. In this case, it is preferable that the four first devices 1 are not on the same plane. For example, an installation height of at least one first device 1 is preferably different from installation heights of the other three first devices 1. In this way, even when the second device 2a is located at any position, it is possible to specify the position in three dimensions.

The system 10 according to the first embodiment of the present invention specifies a position of a work vehicle that works outdoors. Therefore, since a possibility that the first device 1 and the second device 2a included in the work vehicle are not necessarily installed at the same height is conceivable, it is preferable to specify the position of the second device 2a by at least four first devices.

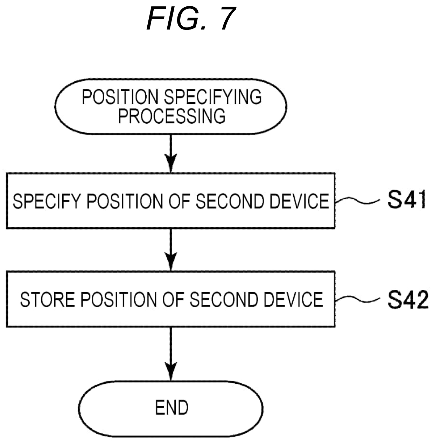

Fig. 7 is a flowchart illustrating the position specifying processing according to the first embodiment of the present invention. The position specifying processing illustrated in Fig. 7 can be executed by, for example, any of the first device 1, the second device 2a, the server apparatus 3, the work vehicle, and the user terminal 4. When the first device 1, the server apparatus 3, the work vehicle, or the user terminal 4 executes the position specifying processing, information regarding the distance (the distance calculated in step S39) between each of the plurality of first devices 1 and the second device 2a is transmitted to and used by the first device 1, the server apparatus 3, the work vehicle, or the user terminal 4 in association with the time information regarding the calculated time, the identification information of the first device 1 (or the positional information of the first device 1), and the identification information of the second device 2a.

In the position specifying processing, the position of the second device 2a is specified based on the distance between each of the plurality of first devices 1 and the second device 2a and the position of the first device 1 (step S41). The position of the first device may be stored in advance in any of the second device 2a, the server apparatus 3, the work vehicle, and the user terminal 4 that executes the position specifying processing. Calculation processing for specifying the position of the second device 2a is not particularly limited.

The specified position of the second device 2a is stored in the memory in the control unit 11 of the first device 1, the memory in the control unit 21 of the mobile terminal 2, the storage unit 25 of the work vehicle, or the storage unit of the user terminal 4 in association with the time information regarding the calculated time (the time information regarding the time at which the distance is calculated or the time information regarding the time at which the position is specified), the identification information of the first device 1 (or the positional information of the first device 1), and the identification information of the second device 2a (step S42). More preferably, in the work management table in storage unit 33 of the server apparatus 3, it is preferable that the specified position of the second device 2a and the time information regarding the calculated time is stored in association with the work vehicle ID. With steps S41 and S42, the position specifying processing ends.

The distance between each of the plurality of first devices 1 and the second device 2a, which serves as the basis for specifying the position of the second device 2a in step S41, is preferably calculated at the same time or a close time (for example, the distance is calculated when the time at which each of the plurality of first devices 1 and the second device 2a measure the propagation time of the information or the signal is the same time or a close time). Here, the close time is not particularly limited, but is preferably a time within a range of a predetermined time from one time. By using the distance between each of the plurality of first devices 1 and the second device 2a calculated at the same time or a close time, a more accurate position at that time can be specified.

Here, the distance between each of the plurality of first devices 1 and the second device 2a is calculated, and the position of the second device 2a is specified based on the calculated distance. However, when there is a plurality of second devices 2a, the distance between the one second device 2a and each of the plurality of second devices 2a different from the one second device 2a is calculated, and the position of the one second device 2a can be specified based on the calculated distance.

### [Determination Processing]

Next, determination processing according to the first embodiment of the present invention will be described. The determination processing is processing for determining whether the position of the second device 2a specified in the position specifying processing matches movement route information regarding a movement route of a work vehicle.

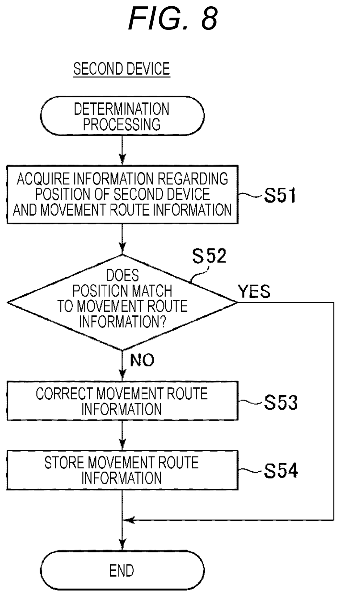

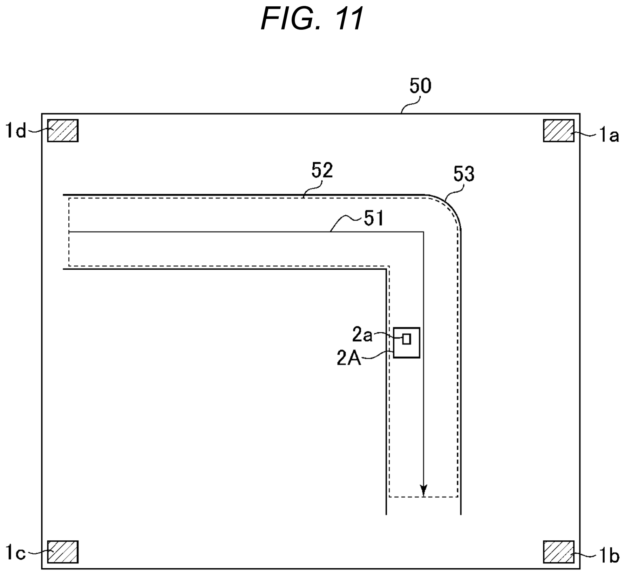

Fig. 8 is a flowchart illustrating determination processing according to the first embodiment of the present invention. Fig. 11 is a view illustrating a movement route according to the first embodiment of the present invention. In Fig. 11, a movement route 51 used for the work vehicle to move is set in a corridor 53 in a building 50. The building 50 includes first devices 1a to 1d specifying the position of the second device 2a. The determination processing illustrated in Fig. 8 can be executed by any of the first device 1, the second device 2a, the server apparatus 3, and the work vehicle. Hereinafter, a case where the determination processing is executed by the second device 2a will be described.

In the determination processing, the second device 2a acquires information regarding the position of the second device 2a (the position stored in step S42) and the movement route information (step S51). The acquired movement route information is referred to by the work vehicle including the second device 2a before or during execution of the distance calculation processing or the position specifying processing.

Subsequently, the second device 2a determines whether the acquired position of the second device 2a matches the movement route information (step S52). When the movement route 51 is defined by a straight line or a curve, for example, when the position of the second device 2a is on the movement route 51 or a shortest distance between the position of the second device 2a and the movement route 51 is equal to or less than a predetermined distance or less than the predetermined distance, it may be determined that the position of the second device 2a matches the movement route information. The predetermined distance can be appropriately designed. For example, a shortest distance from a predetermined position in the movement route 51 may be within 30 cm. The predetermined distance can be appropriately set according to a range in which the work vehicle works, the size of a building, or the size and use of the work vehicle. When the second device 2a is not on the movement route 51 despite the shortest distance of the second device 2a from the movement route 51 that is equal to or less than the predetermined distance or less than the predetermined distance, the movement of the second device 2a can be controlled such that the second device 2a is located on the movement route 51.

A region 52 where the work vehicle included in the movement route information can move may be set with a width. For example, in the case of the work vehicle, the movable region 52 with a width that is twice the predetermined distance may be set by expanding a width by a predetermined distance (for example, 1 m) from the movement route 51 to the left and the right using the movement route 51 with a straight or curved line as a reference. In this case, in the processing of step S52, when the specified position of the second device 2a is in the movable region 52, it can be determined that the position of the second device 2a matches the movement route information.

When it is determined that the position of the second device 2a matches the movement route information (YES in step S52), the determination processing ends. Conversely, when it is determined that the position of the second device 2a does not match the movement route information (NO in step S52), the second device 2a modifies the movement route information (step S53). The modification of the movement route information can be executed similarly to the processing for specifying the movement route of the work vehicle. Specifically, the movement route can be specified based on the departure point and the target point using the specified position of the second device 2a as the departure point. For example, the movement route may be specified so that the movement distance is minimized, the movement route may be specified so that an obstacle is avoided according to map information or topographic information of the work region, the movement route may be specified so that a movable region is passed (for example, a road installed in a work region) set in the map information, or the movement route may be specified according to content of work. The movement route may be specified such that the movement route returns to the preset movement route at the shortest distance.

When the movement route information is modified in step S53, the modified movement route information is stored in the memory in the control unit 21 of the second device 2a or the storage unit 25 of the work vehicle in association with identification information with which the second device 2a can be identified or identification information with which the work vehicle can be identified (step S54). The modified movement route information may be stored in the memory in the control unit 11 of the first device 1 or the storage unit 33 of the server apparatus 3 in association with identification information with which the second device 2a can be identified or identification information with which the work vehicle can be identified. Through steps S51 to S54, the determination processing ends.

The stored movement route information may be stored by overwriting the immediately previous movement route information, or all the operating movement route information may be stored.

Here, the second device 2a executes the determination processing. However, instead of the second device 2a, the first device 1, the server apparatus 3, or the work vehicle may execute the determination processing through processing similar to steps S51 to S54.

When the second device 2a is mounted on a portion that executes work such as an arm of the work vehicle, it can be determined in step S52 whether the position acquired in step S51 matches a movement route of the portion that executes the work. When the position does not match the movement route (NO in step S52), the user terminal 4 may be notified of a warning via the server apparatus 3. A manager who has received the notification can prevent a trouble in advance by executing maintenance or the like of the work vehicle.

### [Billing Amount Calculation Processing]

Next, billing amount calculation processing according to the first embodiment of the present invention will be described. The billing amount calculation processing is processing for calculating a billing amount for a user of a work vehicle based on an operation time or an operation distance of the work vehicle. A billing amount may include, for example, an amount of money to be billed as a usage fee of the system 10 or a usage fee of a work vehicle.

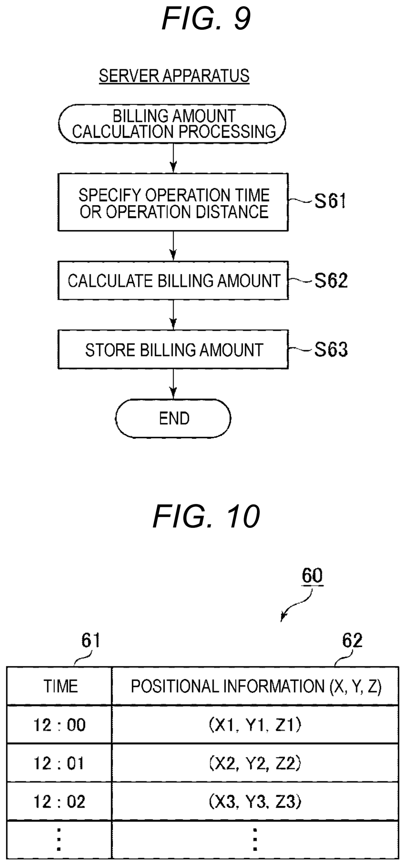

Fig. 9 is a flowchart illustrating billing amount calculation processing according to the first embodiment of the present invention. Hereinafter, a case where the billing amount calculation processing is executed by the server apparatus 3 will be described. Fig. 10 is a diagram illustrating a positional information table according to the first embodiment of the present invention.

In the billing amount calculation processing, the server apparatus 3 calculates the operation time in which the user uses the work vehicle or the operation distance in which the user uses the work vehicle in a predetermined period (step S61). The type and number of used work vehicles and the number of second devices 2a may be calculated. The predetermined period is not particularly limited, but can be, for example, the same period as a period such as one month in which a fee for a power consumption amount is billed to the user. The predetermined period may be registered in advance so that a billing amount generated in a previous month of a date on which the input in step S61 is executed is calculated.

Here, as the operation time of the work vehicle, a time from start of movement of the position of the work vehicle to end of the movement can be used. For example, while a propagation time of information or a signal between the first device 1 and the second device 2a or a distance between the first device 1 and the second device 2a calculated from the propagation time changes, it can be estimated that the position of the work vehicle is moving to operate. On the other hand, when there is no change in the propagation time of the information or the signal between the first device 1 and the second device 2a or the distance between the first device 1 and the second device 2a calculated from the propagation time, it can be estimated that the work vehicle is not operating since the work vehicle is at the same position and is not moving. Accordingly, an operation time of the mobile object can be calculated by aggregating the time at which there is a change in the propagation time and the time at which there is a change in the distance between the first device 1 and the second device 2a based on the propagation time of the information or the signal between the first device 1 and the second device 2a. Information regarding the times is transmitted from the second device 2a or the work vehicle to the server apparatus 3 when the use of the work vehicle ends.

The operation distance of the work vehicle may be calculated based on movement route information in which the work vehicle is moved while the work vehicle is operating. When there are a plurality of target points in a single operation, the operation distance may be calculated from the movement route information for each movement and added.

The operation distance of the work vehicle may be calculated based on the stored position of the work vehicle. Specifically, the operation distance can be calculated by adding distances obtained by connecting the positions by straight lines in an order of the times at which the positions are stored. For example, the storage unit 33 of the server apparatus 3 stores the positional information table 60 illustrated in Fig. 10. The positional information table 60 stores positional information 62 of the work vehicle in association with a time 61. In Fig. 10, a distance between a position at 12:00 and a position at 12:01 can be estimated as an operation distance from 12:00 to 12:01. Similarly, a distance between the position at 12:01 and a position at 12:02 can be estimated as an operation distance from 12:01 to 12:02. For example, in a predetermined period such as one month, the operation distance of the work vehicle can be calculated by adding the distance between one time and a subsequent time.

Subsequently, the server apparatus 3 calculates a billing amount according to the calculated operation time or operation distance (step S62). A cost table is stored in the server apparatus 3 in association with the operation time or the operation distance, and the billing amount can be calculated with reference to the cost table. The cost table may be stored in association with the number of second devices 2a, the number of work vehicles, the type of work vehicle, a plan of the user, and the like, in addition to the operation time and the operation distance. That is, usage fees can be added according to the number of work vehicles or the number of second devices 2a to be installed. Even when the operation distances or the operation times of the work vehicle are the same, the billing amount can be changed according to a type of work vehicle and a usage plan. The billing amount may be calculated by determining the billing amount per unit time in advance and multiplying the billing amount per unit time by the operation time. Alternatively, the billing amount may be calculated by determining the billing amount per unit distance in advance and multiplying the billing amount per unit distance by the operation distance.

When the billing amount is calculated in step S62, the calculated billing amount is stored in the storage unit 33 of the server apparatus 3 in association with the identification information with which the user can be identified (step S63). Through steps S61 to S63, the billing amount calculation processing ends. The stored billing amount is transmitted to the user terminal 4 in response to a transmission request from the user terminal 4.

In step S62 of the above-described billing amount calculation processing, the billing amount for the user of the work vehicle is calculated based on the operation time or the operation distance of the work vehicle, but cost related to a power consumption amount specified by a smart meter may be added to the billing amount. Accordingly, it is possible to combine the billing amount for the user.

Here, the server apparatus 3 executes the billing amount calculation processing. However, instead of the server apparatus 3, the user terminal 4 may execute the billing amount calculation processing through processing similar to steps S61 to S63. When the user terminal 4 executes the above processing, information necessary for calculation is received from the server apparatus 3. When the user terminal 4 calculates the billing amount, the billing amount is stored in the storage unit of the user terminal 4 in association with time information regarding the calculated predetermined period or the like and identification information with which the user can be identified.

In the first embodiment of the present invention, the system 10 may include only one first device 1. When the system 10 includes the billing amount calculation processing, the second device 2a can calculate the operation time or the operation distance of the mobile object 2 more accurately by being synchronized by one first device 1.

According to the invention of the first embodiment, since the distance is calculated based on the time deviation between the clock of one first device and the clock of the second device, it is possible to specify the position of the mobile object 2 without containing an error due to the time deviation. Accordingly, it is possible to accurately obtain the operation time and the operation distance of the mobile object 2.

According to the invention of the first embodiment, since the time in the second device is corrected based on the calculated time deviation, the position of the mobile object 2 can be accurately specified based on the synchronized time. According to the invention of the first embodiment, since the phase in the second device is corrected based on the calculated phase deviation, the position of the mobile object 2 can be accurately specified based on the time at which the phases are synchronized. Accordingly, it is possible to more accurately obtain the operation time and the operation distance of the mobile object 2.

According to the invention of the first embodiment, since the billing amount for the user of the mobile object is calculated according to the accurate operation time or operation distance of the mobile object, it is possible to provide a fair billing system. According to the invention of the first embodiment, when another billing amount for the user of the mobile object is added, the user can centrally manage payment of the usage fee.

### [Second Embodiment]

In a second embodiment, as an example, a case where the mobile object is applied to an indoor work robot will be described. In the second embodiment, a case where an indoor work robot is used instead of the work vehicle in the first embodiment and various types of processing are executed will be described.

### [Configuration of System]

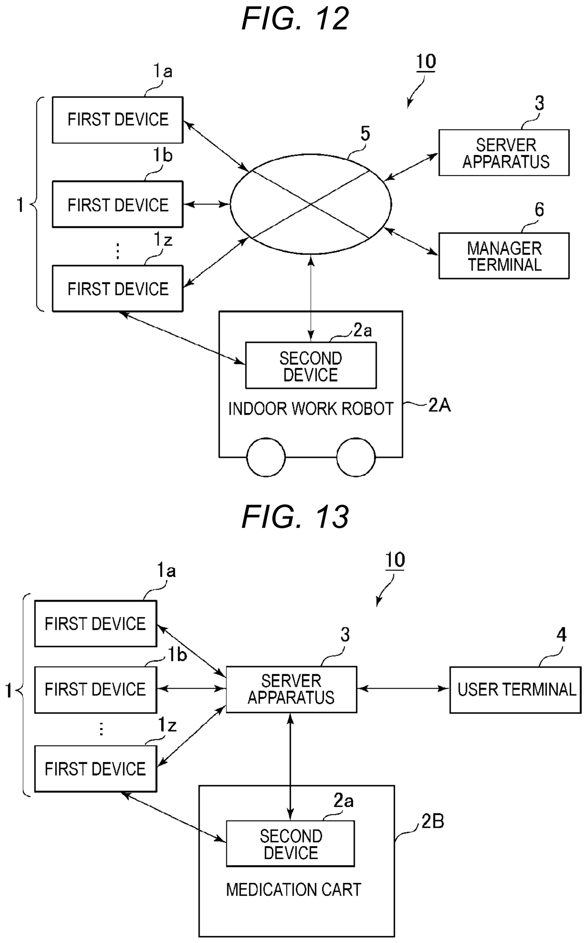

Fig. 12 is a block diagram illustrating a configuration of a system according to a second embodiment of the present invention. As illustrated in the drawing, a system 10 according to the second embodiment of the present invention includes a plurality of first devices 1 (first devices 1a to 1z) and an indoor work robot 2A including a second device 2a. The system 10 according to the second embodiment of the present invention preferably includes three or more first devices 1. As illustrated, the system 10 according to the second embodiment of the present invention may include a server apparatus 3, a manager terminal 6, and a communication network 5. The first device 1 and the second device 2a can be directly communicably connected. The first device 1 can be communicably connected to the indoor work robot 2A, the server apparatus 3, and the manager terminal 6 via the communication network 5. The second device 2a can be communicably connected to the server apparatus 3 and the manager terminal 6 via the communication network 5.

### [First Device]

The first device 1 is a reference device that synchronizes a clock of the second device 2a. As a function and a hardware configuration of the first device 1 according to the second embodiment, the function and the hardware configuration (Fig. 2) of the first device 1 according to the first embodiment can be applied within a necessary range. Therefore, repeated description will be omitted.

In the system 10 according to the second embodiment of the present invention, a location where the first device 1 is installed is not particularly limited, but the first device 1 may be installed indoors or outdoors where the indoor work robot 2A works. A plurality of first devices 1 may be installed indoors. When the indoor work robot 2A works indoors where there are a plurality of levels such as a building, the first device 1 may be installed for each floor, or the first device 1 may be installed for each of a plurality of levels such as second and third floors. The first device 1 is preferably installed at a fixed position at which the installation position can be specified. For example, the first device 1 can be installed on an indoor ceiling, a column, or the like.

### [Indoor Work Robot and Second Device]

In the second embodiment of the present invention, the second device 2a is included in the indoor work robot 2A, and is connected to the indoor work robot 2A to be able to communicate with each other in a wired or wireless manner. The case where "the second device 2a is included in the indoor work robot 2A" has the same meaning as a case where "the second device 2a is included in the mobile object 2" according to the first embodiment.

The second device 2a may be included in a portion (hereinafter also referred to as a work unit) where the indoor work robot 2A executes work. For example, when the indoor work robot 2A includes an arm as a work unit that executes work, the second device 2a can be mounted on the arm. The plurality of second devices 2a may be mounted on the work unit of one indoor work robot 2A. Positional information of the second device 2a may be stored in the server apparatus 3 or the like in association with identification information with which the second device 2a can be identified or identification information with which the indoor work robot 2A including the second device 2a can be identified.

The indoor work robot 2A can be communicably connected to the first device 1, the server apparatus 3, and the manager terminal 6 via the communication network 5. The indoor work robot 2A is a robot used indoors for work for a predetermined use, and a known indoor work robot can be used. A building in which the indoor work robot 2A can execute work is not particularly limited and may be a residential building such as a detached house or an apartment, or may be a commercial or industrial building such as an office building or a factory. The predetermined use is not particularly limited. Examples of the predetermined use include security such as inspection and patrol in a building, cleaning of floors, walls, windows, and the like, work at high places, transportation of people and objects, and serving of food and the like. That is, the indoor work robot 2A is a concept indicating all mobile objects capable of executing work for predetermined use. The indoor work robot 2A can be appropriately designed according to the intended use and may include, for example, a mobile object that moves on a floor surface, a mobile object that moves indoors along a rail provided on a ceiling or the like, and a flying body such as a drone that moves in the air. The indoor work robot 2A may be capable of executing autonomous traveling or autonomous flight or may be operated by a user to travel or fly.

The indoor work robot 2A moves according to the movement route information. The indoor work robot 2A may execute a target work at an arrival place after moving according to the movement route information or may execute the target work while moving according to the movement route information. As the movement route information, latitude route information according to the first embodiment can be applied to the indoor work robot 2A instead of the mobile object 2 insofar as no inconsistency arises. Therefore, repeated description will be omitted.

The movement route information may be generated in accordance with a predetermined program in the control unit 21 included in the indoor work robot 2A or may be stored in advance in the storage unit 25 of the indoor work robot 2A. The movement route information may be generated by the server apparatus 3 according to a predetermined program and may be transmitted from the server apparatus 3 to the indoor work robot 2A. The movement route information may be generated by the user operating the indoor work robot 2A or the manager terminal 6 and setting the movement route. Here, the movement route information can be generated by the indoor work robot 2A or the server apparatus 3, but may be generated by the first device 1, the second device 2a, or the manager terminal 6.

When the indoor work robot 2A or the server apparatus 3 generates the movement route information according to a predetermined program, the movement route information may be generated based on a departure point and a target point to minimize a movement distance, or the movement route information may be generated to avoid an obstacle according to the indoor map information. In this case, the indoor map information is stored in advance in the indoor work robot 2A and the server apparatus 3. In the indoor map information, information regarding a region such as a position of an obstacle or a wall where the indoor work robot 2A cannot move, a region where the indoor work robot 2A can move, or an area where work by the indoor work robot 2A is required is stored with latitude, longitude, altitude, coordinates of a coordinate system, or the like.

The indoor work robot 2A may execute work without carrying a person on the robot or may carry a person on the robot to execute work.

Next, a hardware configuration of the second device 2a and the indoor work robot 2A will be described. As a function and a hardware configuration of the second device 2a according to the second embodiment, the function and the hardware configuration (Fig. 3) of the second device 2a according to the first embodiment can be applied within a necessary range. As a function and a hardware configuration of the indoor work robot 2A according to the second embodiment, the function and the hardware configuration (Fig. 3) of the mobile object 2 according to the first embodiment can be applied within a necessary range by replacing the mobile object 2 with the indoor work robot 2A. Therefore, repeated description will be omitted. However, in the second embodiment, in addition to the matters described in the first embodiment, the following embodiments can be added or replaced.

In the second embodiment of the present invention, the drive unit 26 activates a battery to operate the indoor work robot 2A. A roller may be provided on the bottom surface of the indoor work robot 2A, and the indoor work robot 2A may be operated by rotating the roller by the drive unit 26. A propeller may be provided in the indoor work robot 2A, and the indoor work robot 2A may be operated by rotating the propeller by the drive unit 26.

In the second embodiment of the present invention, when the control unit 21 detects that the indoor work robot 2A has overturned or collided, the control unit 21 can also transmit a notification indicating that the indoor work robot 2A has overturned or collided to the manager terminal 6 via the server apparatus 3.

### [Server Apparatus]

Next, a server apparatus according to the second embodiment of the present invention will be described. The server apparatus 3 can acquire information such as positional information and recording information from the second device 2a or the indoor work robot 2A. The acquired information can be transmitted to the manager terminal 6. A billing amount to be billed to the user who uses the indoor work robot 2A can be calculated and transmitted to the manager terminal 6. For example, in the calculation of the billing amount, a distance of movement in the predetermined period may be specified based on a history of the positional information of the second device 2a or the indoor work robot 2A, and the billing amount may be specified based on the distance.

The acquired positional information is stored as positional information of the indoor work robot 2A in the server apparatus 3 or the manager terminal 6. For example, identification information with which the second device 2a can be identified and a time at which the positional information is specified are transmitted in association from the second device 2a to the server apparatus 3. The server apparatus 3 stores a history of the time information, the positional information, and the work information in association with the identification information with which the second device 2a can be identified. Accordingly, the time information, the positional information, and the work information can be stored in association with the second device 2a.

The server apparatus 3 may store identification information with which the indoor work robot 2A can be identified, identification information with which the user can be identified, a use of the indoor work robot 2A, and the like in association with the identification information with which the second device 2a can be identified. For such information, data indicating when (season, day of the week, or a time zone), how long, how far, and whether the indoor work robot 2A has operated can be collected for each use of the indoor work robot 2A. The collected data becomes useful data for determining a rental period and a launch period of the indoor work robot 2A and executing performance development appropriate for use.

The server apparatus 3 may communicate with the first device 1, the second device 2a, or the indoor work robot 2A via a smart meter installed in a structure such as a building.

As a hardware configuration of the server apparatus 3 according to the second embodiment, the hardware configuration (Fig. 4) of the server apparatus 3 according to the first embodiment can be applied within a necessary range. Therefore, repeated description will be omitted. In the second embodiment, the control unit 31 reads a program and data from the RAM 32 and executes program execution processing based on information or the like received from the first device 1, the second device 2a, the indoor work robot 2A, or the manager terminal 6.

### [Manager Terminal]

Next, a manager terminal according to the second embodiment of the present invention will be described. The manager terminal 6 is a terminal used by a manager who manages the indoor work robot 2A. The manager terminal 6 may manage one indoor work robot 2A or may manage a plurality of indoor work robots 2A. For example, the manager terminal 6 can manage each indoor area and each number of indoor work robots 2A. The manager terminal 6 may transmit control information for controlling an operation and traveling of the indoor work robot 2A. The control information may include movement route information.

Further, a position of the indoor work robot 2A can be confirmed in the manager terminal 6. Specifically, the position of the indoor work robot 2A can be displayed on the map on a display screen of the manager terminal 6 by receiving the positional information of the indoor work robot 2A by the manager terminal 6 and associating the positional information and the map information. The positional information of the indoor work robot 2A may be confirmed as latitude and longitude information or a coordinate position of the XYZ coordinate system. The positions of the plurality of indoor work robots 2A may be simultaneously confirmed. Further, the manager terminal 6 may be able to confirm recording information transmitted from the second device 2a or the indoor work robot 2A.

The manager terminal 6 has a similar configuration to the server apparatus 3 and includes, for example, a control unit, a RAM, a storage unit, a communication interface, an input unit, and a display unit which are connected via an internal bus.

### [Distance Calculation Processing]

Next, distance calculation processing according to the second embodiment of the present invention will be described. The distance calculation processing is processing for calculating a distance between each of the plurality of first devices 1 and the second device 2a based on a propagation time of information or a signal between each of the plurality of first devices 1 and the second device 2a. Since the second device 2a is included in the indoor work robot 2A, it can be said that the processing is processing for calculating the distance between each of the plurality of first devices and the indoor work robot. In the distance calculation processing according to the second embodiment, the same processing as the distance calculation processing according to the first embodiment (Fig. 6) can be applied to the indoor work robot 2A instead of the work vehicle as the mobile object 2. Therefore, repeated description will be omitted.

### [Position Specifying Processing]

Next, position specifying processing according to the second embodiment of the present invention will be described. The position specifying processing is processing for specifying the position of the second device based on the distance between each of the plurality of first devices 1 and the second device 2a calculated in the distance calculation processing. Since the second device 2a is included in the indoor work robot 2A, it can be said that the processing is processing for specifying the position of the indoor work robot 2A. In the position specifying processing according to the second embodiment, the same processing as the position specifying processing according to the first embodiment (Fig. 7) can be applied to the indoor work robot 2A instead of the work vehicle as the mobile object 2. Therefore, repeated description will be omitted. However, in the second embodiment, in addition to the matters described in the first embodiment, the following embodiments can be added or replaced.

The system 10 according to the second embodiment of the present invention preferably includes at least three first devices 1. When the first device 1 and the second device 2a included in the indoor work robot 2A are installed indoors at the same height (for example, the same altitude or the same Z coordinate), the position of the second device 2a can be specified by at least three first devices 1. When the first device 1 and the second device 2a included in the indoor work robot 2A are not installed at the same height, the position of the second device 2a can be specified by at least four first devices.

In the second embodiment of the present invention, the position specifying processing can be executed by, for example, one of the first device 1, the second device 2a, the indoor work robot 2A, and the server apparatus 3.

In the second embodiment of the present invention, in step S42, the specified position of the second device 2a is stored in the memory in the control unit 11 of the first device 1, the memory in the control unit 21 of the second device 2a, the storage unit 25 of the indoor work robot 2A, or the storage unit 33 of the server apparatus 3 in association with time information regarding the calculated time (time information regarding a time at which the distance is calculated or time information regarding the time at which the position is specified), the identification information of the first device 1 (or the positional information of the first device 1), and the identification information of the second device 2a.

### [Determination Processing]

Next, determination processing according to the second embodiment of the present invention will be described. The determination processing is processing for determining whether the position of the second device 2a specified in the position specifying processing matches the movement route information regarding the movement route of the indoor work robot 2A. In the determination processing according to the second embodiment, the same processing as the determination processing according to the first embodiment (Fig. 8) can be applied to the indoor work robot 2A instead of the work vehicle serving as the mobile object 2. Therefore, repeated description will be omitted. However, in the second embodiment, in addition to the matters described in the first embodiment, the following embodiments can be added or replaced.

In the second embodiment of the present invention, the region 52 where the indoor work robot 2A can move may be set with a width. For example, in the case of the indoor work robot 2A that moves on the floor surface, the movement route 51 may be expanded by a predetermined distance from the left and the right using the straight or curved movement route 51 as a reference to set the movable region 52 having a width twice the predetermined distance. For example, in the case of a movement route of the indoor work robot 2A that moves in the air, the movement route may be used as a reference, and the cylindrical movable region 52 in which a cross section in the gravity direction is twice the predetermined distance may be set by radially expanding the movement route by a predetermined distance (for example, 1 m).

In the second embodiment of the present invention, when the second device 2a is mounted on the arm that is a portion in which work of the indoor work robot 2A is executed, it can be determined in step S52 whether the position acquired in step S51 matches the movement route of the arm. When the position does not match the movement route of the arm (NO in step S52), the manager terminal 6 may be notified of a warning via the server apparatus 3. The manager receiving the notification can prevent a trouble in advance by executing maintenance or the like of the indoor work robot 2A.

In the second embodiment of the present invention, when the second device 2a is mounted on a hook portion of a crane that is a work portion of the indoor work robot 2A, a swing of the load can be detected from the position acquired in step S51 in step S52. When the swing of the load is detected (NO in step S52), the manager terminal 6 may be notified of a warning via the server apparatus 3, or instruction information for stopping the swing such as a temporary stop of the movement of the crane may be output. The shake of the load can be detected by comparing a movement direction and a movement speed of the second device 2a specified based on the positional information of the second device 2a with a movement direction and a movement direction specified based on the movement route information.

### [Billing Amount Calculation Processing]

Next, billing amount calculation processing according to the second embodiment of the present invention will be described. The billing amount calculation processing is processing for calculating a billing amount for a user of the indoor work robot based on the operation time or the operation distance of the indoor work robot. The billing amount includes, for example, an amount of money to be billed as a usage fee of the present system or a usage fee of the indoor work robot 2A.

The billing amount calculation processing according to the second embodiment can be applied using the same processing as the billing amount calculation processing (Fig. 9) according to the first embodiment is applied to the indoor work robot 2A instead of the work vehicle serving as the mobile object 2. Therefore, in the positional information table according to the second embodiment, the same processing as the positional information table (Fig. 10) according to the first embodiment can be applied to the indoor work robot 2A instead of the work vehicle serving as the mobile object 2. Repeated description will be omitted. However, in the second embodiment, in addition to the matters described in the first embodiment, the following embodiments can be added or replaced.

In the second embodiment of the present invention, the operation time of the indoor work robot 2A can be a time from when the indoor work robot 2A is powered on to when the indoor work robot 2A is powered off, or a time from when the indoor work robot 2A starts operating to when the indoor work robot 2A ends the operation.

In the second embodiment of the present invention, the operation distance of the indoor work robot 2A may be calculated based on the movement route information stored in step S54 in which the indoor work robot 2A moves while the indoor work robot 2A is operating. At this time, the movement route information used when the indoor work robot 2A arrives at the target point may be used. When there are a plurality of target points in a single operation, the operation distance may be calculated from the movement route information for each movement and added. The operation distance may be calculated based on the number of rotations of the rollers of the indoor work robot 2A.

In the second embodiment of the present invention, the billing amount stored in step S63 is transmitted to the manager terminal 6 in response to a transmission request of the manager terminal 6.

In the second embodiment of the present invention, the server apparatus 3 may execute the billing amount calculation processing. Instead of the server apparatus 3, the manager terminal 6 may execute the billing amount calculation processing through processing similar to steps S61 to S63. When the above processing is executed in the manager terminal 6, information necessary for the calculation is received from the server apparatus 3. When the manager terminal 6 calculates the billing amount, the billing amount is stored in the storage unit of the manager terminal 6 in association with time information regarding the calculated predetermined period or the like and identification information with which the user can be identified.

### [Third Embodiment]

In a third embodiment, as an example, a case where a mobile object is applied to a medication cart will be described. In the third embodiment, a case where a medication cart is used instead of the work vehicle in the first embodiment and various types of processing are executed will be described.

The system 10 according to the third embodiment of the present invention can be used in a facility such as a hospital, a convalescent home, or a nursing home that provides medicine to a patient. A patient is a person who is provided with medicine. Not only a person who uses medicine in a medical institution but also a person who is provided with medicine by a manager or a person in charge of a facility or an organization other than the medical institution, such as a nursing care facility are included as well as a medical worker. For example, a patient includes a patient who is an inpatient in a hospital or a convalescent home or a resident of a nursing home or a daily or short-term user. The medicine includes not only an internal preparation ingested from the mouth such as a tablet, a capsule, a powder, or a syrup, but also an external preparation used for a skin or a mucous membrane of eyes, a mouth, a nose, or the like such as an ointment, an eye drop, or a patch, and an injection directly injected into a skin, a muscle, or blood vessel such as injection.

Fig. 13 is a block diagram illustrating a configuration of a system according to the third embodiment of the present invention. As illustrated, the system 10 according to the third embodiment of the present invention includes a plurality of first devices 1 (first devices 1a to 1z) and a medication cart 2B including the second device 2a. The system 10 according to the third embodiment of the present invention preferably includes three or more first devices 1. The system 10 according to the third embodiment of the present invention may include a plurality of medication carts 2B. As illustrated in the drawing, the system 10 according to the third embodiment of the present invention may include a server apparatus 3 and a user terminal 4. The system 10 according to the third embodiment of the present invention may include a reading device (not illustrated).

The first device 1 and the second device 2a can be directly communicably connected. The server apparatus 3 can be communicably connected to each of the first device 1, the second device 2a, the medication cart 2B, and the user terminal 4. Each of the medication cart 2B and the user terminal 4 transmits and receives information via the server apparatus 3. The server apparatus 3 may be installed in a facility where the system 10 according to the third embodiment of the present invention is used or may be installed outside the facility. Alternatively, the medication cart 2B and the user terminal 4 may directly communicate with each other without providing the server apparatus 3. The medication cart 2B, the server apparatus 3, and the user terminal 4 may execute communication connection via a communication network.

### [First Device]

The first device 1 is a reference device that synchronizes a clock of the second device 2a. As a function and a hardware configuration of the first device 1 according to the third embodiment, the function and the hardware configuration (Fig. 2) of the first device 1 according to the first embodiment can be applied within a necessary range. Therefore, repeated description will be omitted.

In the system 10 according to the third embodiment of the present invention, a location where the first device 1 is installed is not particularly limited, but the first device 1 is preferably installed in a facility where the medication cart 2B is used. Further, a plurality of first devices 1 may be installed in the facility. When the medication cart 2B transports medicine in a facility that has a plurality of floors, the first device 1 may be installed in each floor, or the first device 1 may be installed in each of a plurality of floors such as two or three floors. The first device 1 is preferably installed at a fixed position at which the installation position can be specified. For example, the first device 1 can be installed on a ceiling, a pillar, or the like in a facility.

### [Second Device and Medication Cart]

In the third embodiment of the present invention, the second device 2a is provided in the medication cart 2B, and is connected to the medication cart 2B to be able to communicate with each other in a wire or wireless manner. The case where "the second device 2a is provided in the medication cart 2B" has the same meaning as "the second device 2a is provided in the mobile object 2" in the first embodiment.

The medication cart 2B can be communicably connected to the first device 1 and the user terminal 4 via the server apparatus 3. The medication cart 2B can automatically travel to transport medicine to be provided to a patient. The medication cart 2B may be a cart that can be boarded by a person. The medication cart 2B may be operated by a person or may automatically move according to the movement route information. That is, the medication cart 2B has an automatic driving function and can sequentially move to a position corresponding to each of a plurality of patients. The position corresponding to the patient is a concept including not only a position itself of the patient but also a position associated in advance for each patient such as being assigned for each patient. As the position itself of the patient, a position specified by a position specification function of a portable terminal (for example, a wearable terminal worn on a patient) possessed by the patient can be adopted. Examples of the position associated in advance for each patient include a patient bed, a dining room, and a seat in a shared space. The positional information regarding the position associated in advance for each patient is stored in the server apparatus 3 in association with identification information (hereinafter also referred to as a patient ID) with which the patient can be identified. The medication cart 2B moves according to the movement route information, and can execute predetermined processing at an arrival place after the movement. Examples of the predetermined processing include reading of a patient ID and provision of a medicine. The movement route information may include, for example, a departure point, a target point, and positional information of the medication cart 2B from the start of movement to the end of movement. The movement route information may include one or a plurality of via-points. Processing For generating the movement route information will be described below.

Next, a hardware configuration of the second device 2a and the medication cart 2B will be described. As a function and a hardware configuration of the second device 2a according to the third embodiment, the function and the hardware configuration (Fig. 3) of the second device 2a according to the first embodiment can be applied within a necessary range. As a function and a hardware configuration of the medication cart 2B according to the third embodiment, the function and the hardware configuration (Fig. 3) of the mobile object 2 according to the first embodiment can be applied within a necessary range by replacing the mobile object 2 with the medication cart 2B. Therefore, repeated description will be omitted. However, in the third embodiment, in addition to the matters described in the first embodiment, the following embodiments can be added or replaced.

In the third embodiment of the present invention, the medication cart 2B may include a reading device. In the third embodiment of the present invention, the drive unit 26 activates the battery to operate the medication cart 2B. A roller may be provided on the bottom surface of the medication cart 2B, and the drive unit 26 may rotate the roller to operate the medication cart 2B.

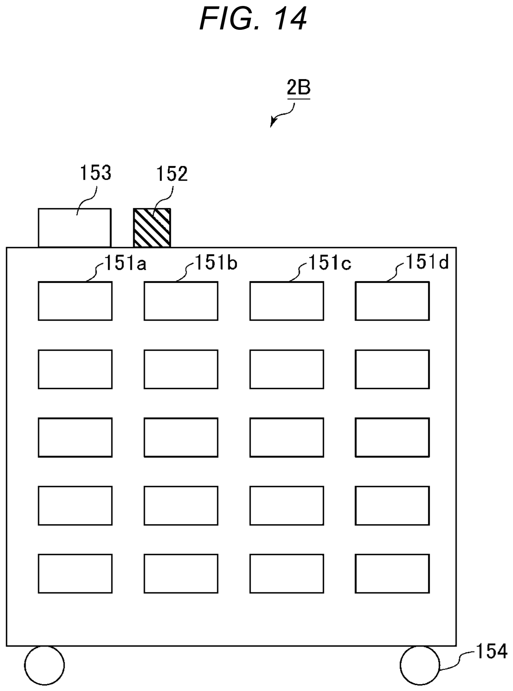

Fig. 14 is a schematic diagram illustrating a medication cart according to the third embodiment of the present invention. The medication cart 2B includes a plurality of trays 151 (151a to 151d) that house medicine to be transported, and a reading device 152. As described above, the medication cart 2B may include a display screen 153, a roller 154, and various sensors (not illustrated). The medication cart 2B may include a detection device such as a switch that detects which tray 151 has been opened or closed. Unlocking and locking of the tray 151 may be controlled by the control unit 21 or the like. The reading device 152 can read a barcode associated with identification information with which medicine can be identified, a barcode or an RF tag associated with a patient ID possessed by the patient, and/or biometric authentication information associated with the patient. The biometric authentication information is not particularly limited. Examples of the biometric authentication information include a fingerprint, a face, a vein, a voice, and an iris.

### [Server Apparatus]

Next, a server apparatus according to the third embodiment of the present invention will be described. The server apparatus 3 can acquire information such as positional information and recording information from the second device 2a or the medication cart 2B. The server apparatus 3 can transmit the acquired information to the user terminal 4. The server apparatus 3 can generate movement route information.

As a hardware configuration of the server apparatus 3 according to the third embodiment, the hardware configuration (Fig. 4) of the server apparatus 3 according to the first embodiment can be applied within a necessary range. Therefore, repeated description will be omitted. In the third embodiment, the control unit 31 reads a program and data from the RAM 32, and executes program execution processing based on information or the like received from the first device 1, the second device 2a, the medication cart 2B, or the user terminal 4.

### [User Terminal]

Next, a user terminal according to a third embodiment of the present invention will be described. In the third embodiment of the present invention, the user terminal 4 is a terminal operated by a user such as a medical worker, a facility staff, or an employee. The user terminal 4 may be a stationary terminal installed in a facility or may be a portable terminal that can be carried by a user when the user moves. The user terminal 4 has a similar configuration to that of the server apparatus 3 and includes, for example, a control unit, a RAM, a storage unit, a communication interface, an input unit, and a display unit that are connected via an internal bus. The user terminal 4 is preferably a computer apparatus including an input unit, a display unit, and a control unit, such as a tablet terminal, a smartphone, or a desktop or notebook type personal computer. A display screen of the display unit may include a touch sensor, and the input unit and the display unit may be integrated in conformity with a touch panel scheme.

Further, in the user terminal 4, a position of the medication cart 2B can be confirmed. Specifically, by receiving the positional information of the medication cart 2B in the user terminal 4 and associating the positional information with the map information of the facility, it is possible to display the position of the medication cart 2B on the map on the display screen of the user terminal 4. The positional information of the medication cart 2B may be confirmed as latitude and longitude information or a coordinate position of an XYZ coordinate system. The positions of the plurality of medication carts 2B may be simultaneously confirmed. Further, in the user terminal 4, recording information transmitted from the second device 2a or the medication cart 2B may be able to be confirmed.

In the system 10 according to the third embodiment of the present invention, a user houses medicine in the tray 151 of the medication cart 2B. At that time, the user terminal 4 or the medication cart 2B inputs to which tray 151 the medicine for which patient is housed. Alternatively, which tray 151 belongs to which patient is stored in advance in the user terminal 4, the server apparatus 3, or the medication cart 2B, and medicine may be housed in the tray 151 according to the information.

The system 10 according to the third embodiment may not include the user terminal 4. When the system 10 is not included in the user terminal 4, an input unit is included in the medication cart 2B and it is possible to input, for example, which tray 151 houses medicine for a patient.

### [Medication Processing]

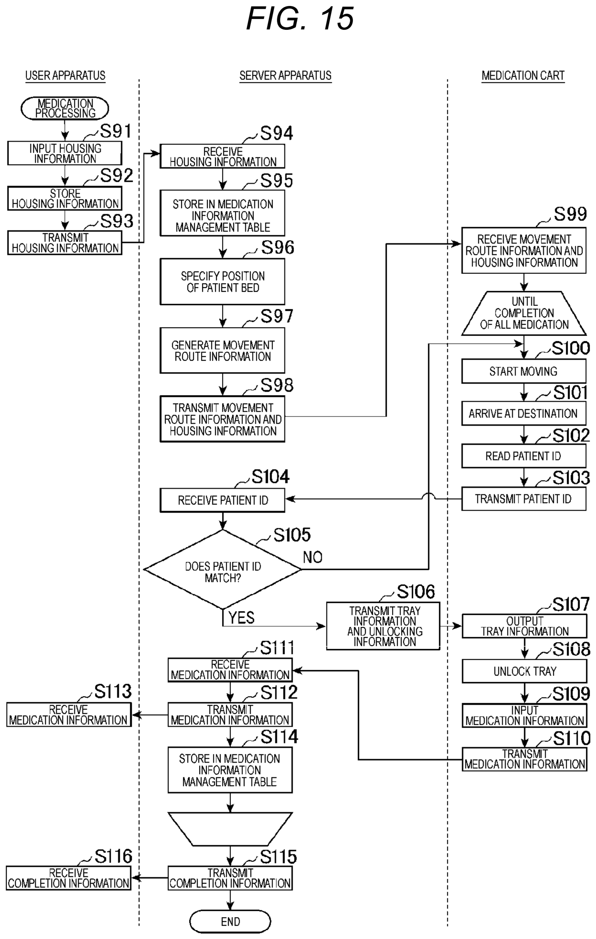

Next, medication processing according to the third embodiment of the present invention will be described. The medication processing is processing for providing medicine to a patient according to housing information transmitted from the user terminal 4. Fig. 15 is a flowchart illustrating medication processing according to the third embodiment of the present invention. In the following flowchart, a case where medicine is provided to a patient in a bed will be described.

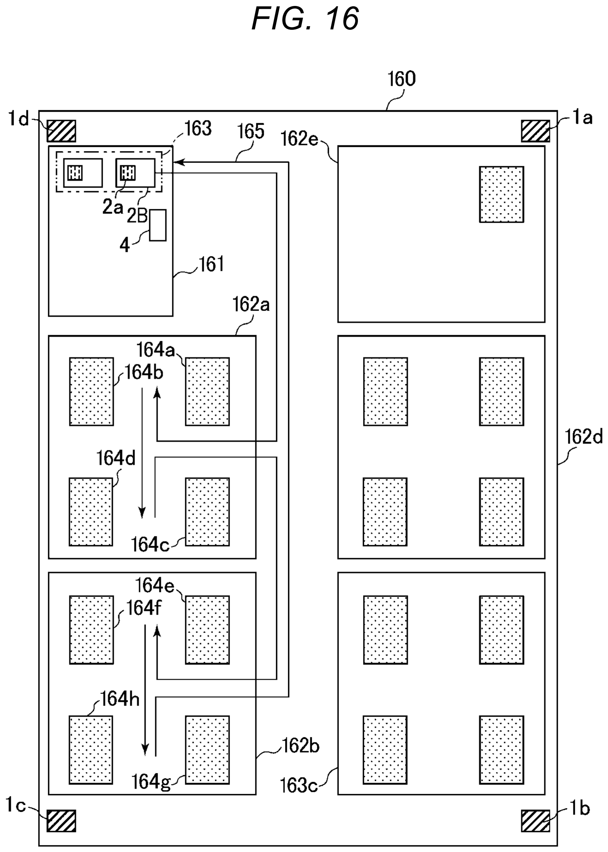

Fig. 16 is a schematic diagram illustrating a medication method according to the third embodiment of the present invention. In Fig. 16, a hospital 160 has a medicine preparation place 161 and a plurality of hospital rooms 162 (162a to 162e). Examples of the medicine preparation place 161 include a nurse station and a dispensary. A waiting place 163 of the medication cart 2B is installed in the medicine preparation place 161, and the user terminal 4 is installed. Patient beds 164 (164a to 164h) are installed in the hospital rooms 162 (162a to 162e). Positional information of the patient beds 164 is stored in the positional information table of the server apparatus 3 in association with the latitude, longitude, and altitude, or an XYZ coordinate system or a patient ID. Similarly, positional information of the medicine preparation place 161, the hospital rooms 162, and the waiting place 163 is stored in the positional information table of the server apparatus 3 in the latitude, longitude, and altitude, or the XYZ coordinate system. In the hospital 160, first devices 1a to 1d specifying the position of the second device 2a are provided.

First, a person in charge of the medical institution logs in the system 10 by starting an application program (hereinafter referred to as a dedicated application) downloaded to the user terminal 4 and accessing the server apparatus 3. When a user is logged in the system 10, it may be necessary to input a user ID and a password with which the user can be identified.

Subsequently, housing information is input to the user terminal 4 (step S91). Specifically, the user houses medicine to be provided to a patient in each tray 151 in the medication cart 2B. At this time, the user terminal 4 can be operated to input tray identification information (also referred to as a tray number (tray No.)) with which the tray 151 can be identified and a patient ID in association. That is, the housing information includes a tray No. with which the tray 151 can be identified and a patient ID corresponding to the tray 151. When the user terminal 4 receives an input of the housing information for all medicine to be dispensed, the housing information is stored in a storage unit of the user terminal 4 (step S92). Specifically, the tray No. and the patient ID are stored in association. The housing information is transmitted from the user terminal 4 to the server apparatus 3 (step S93). The tray 151 in which the medicine is housed and of which the housing information is received is locked.

The housing information can also be input as follows. When a switch is provided in each tray 151 of the medication cart 2B and the switch and the tray No. are associated with each other and the tray 151 of 1 is closed, the tray No. of the tray can be detected. Therefore, When an input of a patient ID is received by the user terminal 4 or the medication cart 2B and the user puts the medicine into the predetermined tray 151 and closes the tray, it is possible to detect the tray No. of the tray housing the medicine. Accordingly, the tray No. and the patient ID can be stored in association. The input of the patient ID may be executed by selecting a patient displayed on the display screen or reading a barcode or the like displayed on medicine or a medicine packet and associated with the patient ID.

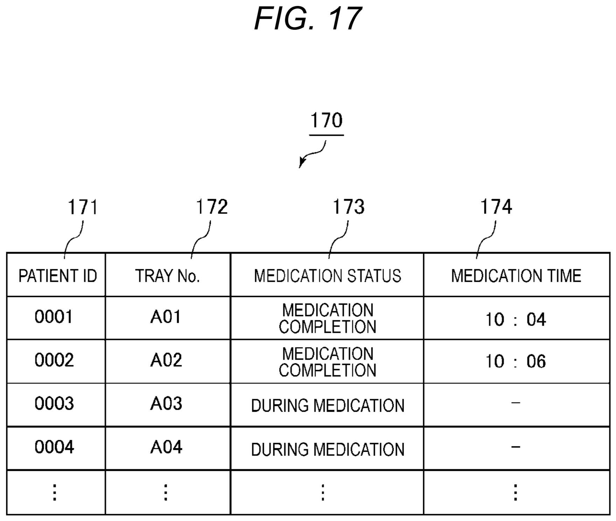

When the housing information is received by the server apparatus 3 (step S94), the received housing information is stored in the medication information management table (step S95). The medication information management table is a table in which a patient ID, a tray No., and a medication status are stored in association. Fig. 17 is a diagram illustrating an example of a medication information management table according to the third embodiment of the present invention. Information regarding a medication information management table 170 is stored in the server apparatus 3. In the medication information management table 170 illustrated in Fig. 17, a patient ID 171, a tray No. 172, a medication status 173, and a medication time 174 are stored in association. In the medication information management table 170, information regarding a user inputting the information and other information may be stored.

For example, the medication information management table 170 is a table in which the fact that medicine with a patient ID "0001" is placed in tray No. "A01" and medication is completed at 10:04 for the patient ID "0001" is stored. On the other hand, the medicine with the patient ID "0003" is put into tray No. "A03", and a status of "during medication" in which no medicine is delivered is stored for the patient ID "0003".

A status indicates a medication status of transportation of the medicine such as "during medication" in a situation where medication is executed, a status of "medication completion" in a situation where medication is completed, or the like. In step S95, the status is "during medication".

When the received housing information is stored in the medication information management table in the server apparatus 3, the position of a patient bed to which medication is executed is specified (step S96). The server apparatus 3 specifies one or more patient IDs that are medication targets stored in the medication information management table. Then, the position of the patient bed corresponding to the patient ID is specified with reference to the above-described positional information table. When the position of the bed is specified, a movement route of the medication cart 2B is generated based on the positional information of the bed (step S97). When the input of the housing information for all of the trays 151 housing the medicine is completed, it can be said that the movement route of the medication cart is generated or specified based on the positional information of the bed corresponding to the input patient ID. The movement route information and the housing information are transmitted from the server apparatus 3 to the medication cart 2B (step S98).

The movement route generation processing in step S97 will be described. The server apparatus 3 generates or specifies a movement route from the specified positional information of one or more patient beds. The generation of the movement route can be executed based on a known algorithm related to route specification. For example, the movement route can be generated based on a departure point and a target point such that the movement distance becomes shortest. That is, the movement route can be generated based on the housing information received in step S94. Specifically, the movement route may be generated based on the positional information of the medication cart 2B, the map information of a hospital, and the positional information of the bed. When medication to two or more patients is executed, the medication cart 2B sequentially moves to the position of the bed of each patient. Specification of an order of the patients to which medication is executed in the medication cart 2B and the generation of the movement route of the medication cart 2B are executed by the control unit 31 of the server apparatus 3.

For example, when the beds 164a to 164h are specified in step S96, the start point is the waiting place 163, and the target point is the waiting place 163 via the beds 164a to 164h. The beds 164a to 164h may each be ascertained as a start point and a target point. At this time, while 40320 ways of movement to the waiting place 163 via the beds 164a to 164h are conceivable, the movement route can be generated so that the movement route becomes the shortest. Alternatively, when the order of medication is stored for each patient, the movement route can be generated according to the stored order. In Fig. 16, a movement route 165 in which the patient beds 164a to 164d in the hospital room 162a, the patient beds 164e to 164h in the hospital room 162b, and the waiting place 163 are moved in this order so that the medication cart 2B moves at the shortest time is generated.

Here, in the movement route information, the latitude route information according to the second embodiment can be applied insofar as no inconsistency arises in the medication cart 2B instead of the indoor work robot 2A. In the processing for generating the movement route information, the same processing as the processing described in the second embodiment can be applied to the indoor work robot 2A instead of the medication cart 2B. Therefore, repeated description will be omitted. However, in the third embodiment, in addition to the matters described in the second embodiment, the following embodiments can be added or replaced. In the third embodiment of the present invention, the movement route information may be generated by the user operating the medication cart 2B or the user terminal 4 and setting the movement route. In the third embodiment of the present invention, when the movement route information is generated according to a predetermined program, the movement route information may be generated so that obstacles such as beds and apparatuses are avoided according to map information in a hospital.

The generation of the movement route information of the medication cart 2B in step S97 may be executed by the control unit 21 of the medication cart 2B. The movement route information may be generated according to a predetermined program by the control unit 21 included in the medication cart 2B or may be stored in advance in the storage unit 25 of the medication cart 2B. When the control unit 21 of the medication cart 2B generates the movement route information and the positions of the beds are specified in step S96, the server apparatus 3 transmits the positional information of the beds and the housing information to the medication cart 2B, and the control unit 21 generates or specifies a movement route. The movement route information may be generated by the first device 1, the second device 2a, or the user terminal 4.

The description returns to the flowchart. When the movement route information and the housing information are transmitted from the server apparatus 3 to the medication cart 2B, the movement route information and the housing information are received by the medication cart 2B (step S99). When the movement route information and the housing information are received, the medication cart 2B starts moving to the position of the bed 164 according to the movement route information of the movement route 165 (step S100). The processing of step S100 is also referred to as processing for controlling the medication cart 2B so that the medication cart 2B moves according to the generated movement route information.

When the medication cart 2B arrives at the position of the bed 164a as a destination (step S101), the patient ID is read by the reading device 152 (step S102). The processing of step S102 can be executed by causing the reading device 152 to read a barcode or an RF tag associated with a patient ID possessed by a patient or a user who has moved together with the medication cart 2B.

The patient ID read in step S102 is transmitted from the medication cart 2B to the server apparatus 3 (step S103) and is received by the server apparatus 3 (step S104). The processing of steps S102 to S104 may be executed as follows. First, biometric authentication information associated with the patient is read by the reading device 152. The read biometric authentication information is transmitted to the server apparatus 3, and the server apparatus 3 can specify the patient ID from the received biometric authentication information. The server apparatus 3 stores the biometric authentication information in association with the patient ID in advance.

Next, the server apparatus 3 may specify the patient corresponding to the received patient ID. The processing for reading the patient ID and the processing for specifying the patient corresponding to the read patient ID in step S102 can also be said to be processing for specifying a patient who is going to use contents of any of the plurality of trays.

When the patient ID is received, the server apparatus 3 determines whether the received patient ID matches the patient ID corresponding to the position of the bed specified from the medication cart (step S105). In step S105, the server apparatus 3 acquires the positional information of the medication cart 2B in step S102, and specifies the patient ID corresponding to the positional information of the bed with reference to the positional information table and/or the map information of the hospital. Then, it is determined whether the received patient ID matches the specified patient ID.

In step S105, the server apparatus 3 may determine whether the position of the bed corresponding to the received patient ID matches the position of the patient specified from the medication cart. Specifically, the server apparatus 3 specifies the positional information of the bed corresponding to the received patient ID from the positional information table and/or the map information of the hospital. Then, in step S102, the positional information of the medication cart 2B is acquired, and it can be determined whether the positional information matches the positional information of the bed.

As the positional information of the medication cart 2B in step S102, positional information specified through position specifying processing to be described below may be used, or positional information specified by a selfgenerated map using a sensor of the medication cart 2B may be used.

When the received patient ID matches the patient ID corresponding to the position of the bed specified from the medication cart (YES in step S105), the tray information regarding the tray corresponding to the patient ID and unlocking information of the tray are transmitted from the server apparatus 3 to the medication cart 2B (step S106). When the tray information and the unlocking information are received in the medication cart 2B, the tray information is output and the tray corresponding to the specified patient is notified of (step S107). Further, the tray is unlocked (step S108). The processing of step S108 is processing for executing control such that the tray corresponding to the specified patient is available.

Here, the tray information is information for notifying the user that one tray of the medication cart 2B is a tray corresponding to the patient of which the patient ID has been read. The output of the tray information may be any of display of text, an image, and/or a moving image on the display screen, and emitting a sound and/or light. Examples of a notification of the tray include display of a position of the corresponding tray on the display screen 153, an output of the position of the tray by a sound, and lighting of a light source provided at the position of the tray. When the tray information in the medication cart 2B is output, the patient can surely know the tray containing his or her medicine.

When the patient takes out the medicine from the unlocked tray and closes the tray, the medication information indicating that the medicine delivery is completed is input to the medication cart 2B (step S109). When the patient takes out the medicine from the unlocked tray and closes the tray, the medication information is transmitted from the medication cart 2B to the server apparatus 3 (step S110). The medication information includes a tray No., a patient ID, and time information of medication completion. The time information may be a time at which the tray is closed or a time at which the tray information is output.

When the medication information is received by the server apparatus 3 (step S111), the medication information is transmitted to the user terminal 4 (step S112). The user terminal 4 receives the medication information (step S113). When the medication information is received by the server apparatus 3, a status is updated in the medication information management table (step S114). In step S114, the status corresponding to the tray No. and the patient ID included in the medication information is "medication completion". The medication information management table 170 stores medication times in association with each other.

Conversely, when the received patient ID does not match the patient ID corresponding to the position of the bed specified from the medication cart 2B (NO in step S105), steps S107 and S108 are not executed. The medication cart 2B starts moving toward the bed 164 that is the next destination, and the processing subsequent to step S100 is executed. Alternatively, in the case of NO in step S105, attention information indicating that the patient returns to his or her own bed may be output to the patient of which the patient ID has been read, or confirmation information indicating that it is confirmed whether the patient with the patient ID corresponding to the position of the bed specified from the medication cart is located nearby may be output.

The processing of steps S100 to S114 is executed for one patient ID or tray No. Therefore, the processing of steps S100 to S114 is repeatedly executed for all the patient IDs or tray No. included in the housing information until the medication is completed. It can also be said that the processing of steps S100 to S114 is repeatedly executed until the statuses of all the patient IDs in the medication information management table 170 are changed to "medication completion" in step S114.

When the medication is completed for all the patient IDs or tray No., the completion information is transmitted from the server apparatus 3 to the user terminal 4 (step S115), and the completion information is received by the user terminal 4 (step S116). The medication cart 2B moves to the waiting place 163. Through the above processing of steps S91 to S116, the medication processing ends.

In the above description, after the arrival at the destination in step S101, the reading of the patient ID in step S102 is executed. However, when the reading processing is not executed for a predetermined time (for example, 5 minutes or the like), movement to the next destination may be executed. Specifically, when the reading of the patient ID is not executed in step S102, movement to the bed which is the next destination may be executed and the processing after step S100 may be executed.

When the patient IDs do not match in step S105, medicine cannot be provided to the patient corresponding to the patient ID. Therefore, after the medication to the last bed 164 is completed in the movement route generated in step S97, the position of the patient for which medication has not been completed may be specified, and the movement route may be generated again. Then, the processing of steps S100 to S24 may be executed. Alternatively, a patient ID to which the medication has not been executed may be specified, and information regarding the patient ID may be transmitted to the user terminal 4 for notification. The user who has received the notification may move the medication cart 2B or take out the medicine from the medication cart 2B and provide the medicine to the patient corresponding to the patient ID.

The hospital 160 may include two or more medication carts 2B and simultaneously operate the two or more medication carts 2B. The movement route information may specify a movement route which does not overlap with the movement route of the other medication carts 2B so that the other medication carts 2B do not collide with each other. In the case of the same movement route, the one medication cart 2B may temporarily stop and movement timings may be set to be different.

The medication cart 2B from which the movement route information and the housing information are received in step S99 is the medication cart 2B housing the medicine in the tray when the user inputs the housing information in step S91. That is, in step S91, it is preferable to input identification information with which the medication cart 2B housing the medicine can be identified. The housing information includes identification information of the medication cart 2B.

The processing for unlocking the tray in S108 may be executed through an operation input to the medication cart 2B by the patient or reading the patient ID by the medication cart 2B. The processing of steps S112 and S113 may be omitted.

In the above description, steps S91 to S93 are executed in the user terminal 4, but may be executed in the medication cart 2B. Steps S94 to S98, S104 to S106, S111, S112, S114, and S115 are executed in the server apparatus 3, but may be executed in the user terminal 4. In this case, the processing of steps S93 and S94, S112 and S113, and S115 and S116 can be omitted. The processing of the server apparatus 3 may be executed in the medication cart 2B. In this case, the processing of steps S98 and S99, S103 and S104, S106 and S107, and steps S110 and S111 can be omitted. In the medication cart 2B, the processing of steps S91 to S26 except for the processing related to transmission and reception of information may be executed.

When processing is executed by the user terminal 4 or the medication cart 2B instead of the server apparatus 3 or by the medication cart 2B instead of the user terminal 4, various types of information (for example, a medication information management table, a positional information table, map information, and the like) necessary for executing the processing are stored in advance in the user terminal 4 or the medication cart 2B.

In the above description, the configuration in which the medication by the medication cart 2B is executed after reception of the movement route information and the housing information in step S99 has been described. However, the medicine may be housed in advance in the tray 151 of the medication cart 2B and steps S91 to S99 may be executed, and the processing after step S100 may be executed at a predetermined time (for example, 30 minutes before the meal is provided if the medicine is taken before a meal, 30 minutes after the meal is provided if the medicine is taken after a meal, or the like) stored in advance or by an operation input to the user terminal 4 or the medication cart 2B by the user. That is, the medication cart 2B may be controlled to be moved in accordance with a dosage time of the medicine.

Specifically, when the housing information is input in step S91, the tray No., the patient ID, and the dosage time or the medication time of the housed medicine are input. In the medication cart 2B or the server apparatus 3, the position of the bed is specified from the patient ID corresponding to the housing information in which the dose time or the medication time of the medicine is within a predetermined range (for example, within 20 minutes), and the processing after step S97 can be executed. At this time, for the patient corresponding to the housing information in which the dosage time or the medication time of the medicine is out of the predetermined range, the medication is not executed.

That is, in the above description, the configuration in which the medication is executed for all the medicine on the trays included in the housing information input in step S91 has been described. However, the medication may be executed for only the medicine on the tray satisfying a predetermined condition. The predetermined condition includes, for example, a condition that the dosage time or the medication time of the medicine is within a predetermined range and a condition that the positional information of the patient is within a predetermined range such as the same hospital room. Specifically, in the generation of the movement route information in step S97, the movement route may be specified based on the positional information of the patient of which a dosage time or a medication time is within a predetermined range. The status 173 in the medication information management table 170 corresponding to the tray No. before the execution of step S100 is "before medication" before the execution of the medication.

In the system 10 according to the third embodiment of the present invention, distance calculation processing for calculating a distance between the first device 1 and the medication cart 2B, as will be described below, position specifying processing for specifying a position of the medication cart 2B, and determination processing for determining whether the position of the medication cart 2B matches the movement route information are executed during the movement of the medication cart 2B (steps S100 and S101). Although any execution frequency of the processing can be set, the processing may be executed once every several seconds, for example, in order to accurately manage the movement of the medication cart.

### [Distance Calculation Processing]

Next, distance calculation processing according to the third embodiment of the present invention will be described. The distance calculation processing is processing for calculating a distance between each of the plurality of first devices 1 and the second device 2a based on a propagation time of information or a signal between each of the plurality of first devices 1 and the second device 2a. Since the second device 2a is included in the medication cart 2B, it can be said that the processing is processing for calculating the distance between each of the plurality of first devices and the medication cart 2B. In the distance calculation processing according to the third embodiment, the same processing as the distance calculation processing according to the first embodiment (Fig. 6) can be applied to the medication cart 2B instead of the work vehicle as the mobile object 2. Therefore, repeated description will be omitted.

### [Position Specifying Processing]

Next, position specifying processing according to the third embodiment of the present invention will be described. The position specifying processing is processing for specifying the position of the second device based on the distance between each of the plurality of first devices 1 and the second device 2a calculated in the distance calculation processing. Since the second device 2a is included in the medication cart 2B, it can also be said that the processing is processing for specifying the position of the medication cart 2B. In the position specifying processing according to the third embodiment, the same processing as the position specifying processing according to the first embodiment (Fig. 7) can be applied to the medication cart 2B instead of the work vehicle as the mobile object 2. Therefore, repeated description will be omitted.

The system 10 according to the third embodiment of the present invention preferably includes at least three first devices 1. When the first device 1 and the second device 2a included in the medication cart 2B are installed in the same floor in the hospital at the same height (for example, the same altitude or the same Z coordinate), the position of the second device 2a can be specified by at least three first devices 1. When the first device 1 and the second device 2a included in the medication cart 2B are not installed at the same height, the position of the second device 2a can be specified by at least four first devices.

### [Determination Processing]

Next, determination processing according to the third embodiment of the present invention will be described. The determination processing is processing for determining whether the position of the second device 2a specified in the position specifying processing matches the movement route information regarding the movement route of the medication cart 2B. In the determination processing according to the third embodiment, the same processing as the determination processing according to the first embodiment (Fig. 8) can be applied to the medication cart 2B instead of the work vehicle serving as the mobile object 2. Therefore, repeated description will be omitted. However, in the third embodiment, in addition to the matters described in the first embodiment, the following embodiments can be added or replaced.

In the third embodiment of the present invention, the predetermined distance used for the determination in step S52 can be appropriately set according to the area of the hospital and the size of the medication cart 2B.

In the third embodiment of the present invention, the modification of the movement route information in step S53 can be executed similarly to the processing for specifying the movement route of the medication cart 2B. Specifically, the movement route can be specified based on the departure point and the target point using the specified position of the second device 2a as the departure point. For example, the movement route may be specified such that the movement distance is the shortest, may be specified such that obstacles are avoided according to the map information of the hospital, or may be specified such that the movement route passes through a movable region set in the map information of the hospital.

According to the invention of the third embodiment, since the medication cart has the automatic driving function and sequentially moves to the beds of a plurality of patients, it is possible to provide medicine to the plurality of patients in a non-face-to-face manner. It is possible to contribute to labor saving of a facility. According to the invention of the third embodiment, since the medication cart is controlled such that the medication cart is moved according to the generated movement route information, it is possible to transport the medicine to the patients that are medication targets.

According to the invention of the third embodiment, since the tray corresponding to the specified patient is notified of and/or the tray corresponding to the specified patient is controlled to be available, the patient can take out his or her medicine without making a mistake. According to the invention of the third embodiment, when the patient specified from the position of the medication cart does not match the specified patient, the notification of the tray and the availability of the tray are not executed. Therefore, it is possible to prevent the medicine of one patient from being erroneously delivered to a different patient and reliably provide the medicine to the patient.

### [Fourth Embodiment]

In a fourth embodiment, as an example, a case where the mobile object is applied to a serving device will be described. In the fourth embodiment, a case where a serving device is used instead of the work vehicle in the first embodiment and various types of processing are executed will be described.

The system 10 according to the fourth embodiment of the present invention can be used in a restaurant. The restaurant may be a store that provides food and drink. Examples of the restaurant include a bookstore, a karaoke store, a furniture store, and an electric appliance store where food and drink is provided, and a food court where there are a plurality of stores. For example, the restaurant also includes a facility such as a hospital or a nursing home. The food and drink includes not only dishes but also beverages such as alcohol.

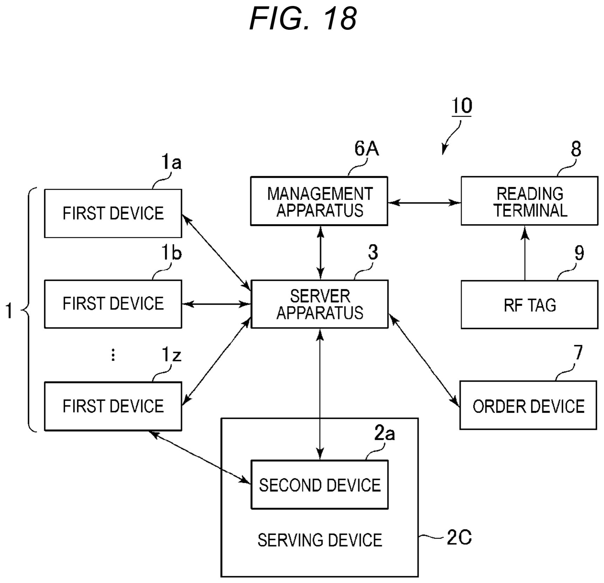

Fig. 18 is a block diagram illustrating a configuration of a system according to the fourth embodiment of the present invention. As illustrated in the drawing, a system 10 according to the fourth embodiment of the present invention includes a plurality of first devices 1 (first devices 1a to 1z) and a serving device 2C including a second device 2a. The system 10 according to the fourth embodiment of the present invention preferably includes three or more first devices 1. The system 10 according to the fourth embodiment of the present invention may include a plurality of serving devices 2C. As illustrated in the drawing, the system 10 according to the fourth embodiment of the present invention may include a server apparatus 3, a management apparatus 6A, an order device 7, a reading terminal 8, and an RF tag 9 that can be read by the reading terminal 8.

The first device 1 and the second device 2a can be directly communicably connected. The server apparatus 3 can be communicably connected to each of the first device 1, the second device 2a, the serving device 2C, the management apparatus 6A, and the order device 7. Each of the serving device 2C, the management apparatus 6A, and the order device 7 transmits and receives information via the server apparatus 3. The server apparatus 3 may be installed in a store where the system 10 according to the fourth embodiment of the present invention is used or may be installed outside of the store. Alternatively, without providing the server apparatus 3, so that the serving device 2C, the management apparatus 6A, and the order device 7 may directly communicate with each other. The serving device 2C, the server apparatus 3, the management apparatus 6A, and the order device 7 may be communicably connected via a communication network. The management apparatus 6A and the reading terminal 8 can be directly communicably connected.

### [First Device]

The first device 1 is a reference device that synchronizes a clock of the second device 2a. As a function and a hardware configuration of the first device 1 according to the fourth embodiment, the function and the hardware configuration (Fig. 2) of the first device 1 according to the first embodiment can be applied within a necessary range. Therefore, repeated description will be omitted.

In the system 10 according to the fourth embodiment of the present invention, a location where the first device 1 is installed is not particularly limited, but the first device 1 is preferably installed in a restaurant where the serving device 2C is used. The plurality of first devices 1 may be installed in the restaurant. When the serving device 2C serves food at a restaurant that has a plurality of floors, the first device 1 may be installed on each floor, or the first device 1 may be installed on each of a plurality of floors such as two floors and three floors. The first device 1 is preferably installed at a fixed position at which the installation position can be specified. For example, the first device 1 can be installed on a ceiling, a column, or the like in the restaurant.

### [Second Device and Serving Device]

In the fourth embodiment of the present invention, the second device 2a is included in the serving device 2C, and is connected to the serving device 2C to be able to communicate with each other in a wired or wireless manner. The case where "the second device 2a is included in serving device 2C" has the same meaning as "the second device 2a is included in the mobile object 2" according to the first embodiment.

The serving device 2C is communicably connected to the first device 1, the management apparatus 6A, and the order device 7 via the server apparatus 3. The serving device 2C can automatically travel to serve food and drink. The serving device 2C is a device used for serving food and drink in a restaurant and includes a placing table on which the food and drink tray can be placed. The serving device 2C can use a known serving device.

The serving device 2C moves along the movement route according to the movement route information. The serving device 2C moves according to the movement route information, and can execute predetermined processing at an arrival place after the movement. Examples of the predetermined processing include detection of placement of food and drink, an output of arrival information, detection of serving of food and drink, reception of order information, and calculation of a billing amount.

The movement route of the serving device 2C is specified by the control unit 21 of the serving device 2C or the server apparatus 3. The movement route can be specified so that a movement distance becomes the shortest based on a departure point (for example, a kitchen) and a target point (for example, a table provided with an order device 7 corresponding to order information regarding an order made by a customer). The movement route information may be generated according to a predetermined program by the control unit 21 included in the serving device 2C or may be stored in advance in the storage unit 25 of the serving device 2C. The movement route information may be generated by the server apparatus 3 according to a predetermined program and transmitted from the server apparatus 3 to the serving device 2C. Alternatively, the movement route information may be generated by a user setting the movement route by operating the serving device 2C or the management apparatus 6A. Here, the movement route information can be generated by the serving device 2C or the server apparatus 3, but may be generated by the first device 1, the second device 2a, or the management apparatus 6A.

In the movement route information, the latitude route information according to the first embodiment can be applied insofar as no inconsistency arises as the serving device 2C instead of the mobile object 2. Therefore, repeated description will be omitted. In the processing for generating the movement route information according to the predetermined program, the same processing as the processing described in the second embodiment can be applied to the indoor work robot 2A instead of the serving device 2C. Therefore, repeated description will be omitted.

Next, hardware configurations of the second device 2a and the serving device 2C will be described. As a function and a hardware configuration of the second device 2a according to the fourth embodiment, the function and the hardware configuration (Fig. 3) of the second device 2a according to the first embodiment can be applied within a necessary range. As a function and a hardware configuration of the serving device 2C according to the fourth embodiment, the function and the hardware configuration (Fig. 3) of the mobile object 2 according to the first embodiment can be applied within a range necessary by replacing the mobile object 2 with the serving device 2C. Therefore, repeated description will be omitted. However, in the fourth embodiment, in addition to the matters described in the first embodiment, the following embodiments can be added or replaced.

In the fourth embodiment of the present invention, serving device 2C may include a reader (reading terminal 8) that can read RF tag 9. In the fourth embodiment of the present invention, the drive unit 26 activates a battery to operate the serving device 2C. A roller may be provided on the bottom surface of the serving device 2C, and the serving device 2C may be operated by rotating the roller by the drive unit 26.

In the fourth embodiment of the present invention, the sensor unit 28 includes a weight sensor. The weight sensor is installed on the placing table. When the serving device 2C detects a weight of dishes corresponding to the order information by the weight sensor, the serving device 2C can move from the kitchen to a table corresponding to the order device 7 transmitting the order information. After the movement to the table, when the weight detected by the weight sensor on the placing table becomes equal to or less than a predetermined weight, the serving device 2C determines that the serving on the table is completed, and can move to a next table or return to the waiting place or the kitchen. In the system 10 according to the fourth embodiment of the present invention, it is possible to control such that the movement of the serving device is started in accordance with the fact that the food and drink is placed on the serving device by the weight sensor and/or the fact that the food and drink is served from the serving device by the weight sensor.

In the fourth embodiment of the present invention, when the control unit 21 detects occurrence of overturn or collision, a notification of the occurrence of the overturn or the collision at the serving device 2C can be transmitted from the serving device 2C to the management apparatus 6A via the server apparatus 3.

### [Server Apparatus]

Next, the server apparatus according to the fourth embodiment of the present invention will be described. The server apparatus 3 can acquire information such as positional information and recording information from the second device 2a or the serving device 2C. The acquired information can be transmitted to the management apparatus 6A.

As a hardware configuration of the server apparatus 3 according to the fourth embodiment, the hardware configuration (Fig. 4) of the server apparatus 3 according to the first embodiment can be applied within a necessary range. Therefore, repeated description will be omitted. In the fourth embodiment of the present invention, the control unit 31 reads a program and data from RAM 32, and executes the program execution processing based on information received from the first device 1, the second device 2a, the serving device 2C, the management apparatus 6A, or the order device 7.

### [Management Apparatus]

Next, the management apparatus according to the fourth embodiment of the present invention will be described. The management apparatus 6A is a terminal operated by a store clerk of a restaurant. The management apparatus 6A may be a stationary apparatus installed in a kitchen of a restaurant or may be a portable apparatus that can be carried when the user moves. In one restaurant, a plurality of management apparatuses 6A may be provided. The management apparatus 6A has a similar configuration to the server apparatus 3 and includes, for example, a control unit, a RAM, a storage unit, a communication interface, an input unit, and a display unit that are connected via an internal bus. The management apparatus 6A is preferably a computer apparatus including an input unit, a display unit, and a control unit, such as a tablet terminal, a smartphone, or a desktop or notebook type personal computer. A display screen of the display unit may include a touch sensor, and the input unit and the display unit may be integrated in conformity with a touch panel scheme.

When the order information is input to the order device 7, the management apparatus 6A can receive the order information via the server apparatus 3 and display the order information. When the food and drink corresponding to the order information is completed in the kitchen, the serving device 2C can be called. For example, when a part of the order information is completed and the completed food and drink are selected on the touch panel, serving request information indicating that the food and drink corresponding to the order information is to be served is transmitted to the serving device 2C via the server apparatus 3. The serving request information is information for calling the serving device 2C to the kitchen and making a request for serving the food and drink. When the serving request information is received, the serving device 2C moves to the kitchen. When the store clerk places a food and drink tray on which food is served or drink is served on the placing table of the serving device 2C in the kitchen, the movement of the serving device 2C is started. The serving device 2C moves to the position of the table on which the order device 7 is installed. The order device 7 is an order device transmitting the order information corresponding to a dish included in the serving request information.

Further, the position of the serving device 2C can be confirmed in the management apparatus 6A. Specifically, by receiving the positional information of the serving device 2C in the management apparatus 6A and associating the positional information with the map information, it is possible to display the position of the serving device 2C on the map on the display screen of the management apparatus 6A. The positional information of the serving device 2C may be confirmed as latitude and longitude information or a coordinate position of an XYZ coordinate system. The positions of the plurality of serving devices 2C may be simultaneously confirmed. Further, the management apparatus 6A may be able to confirm recording information transmitted from the second device 2a or the serving device 2C.

### [Order Device]

Next, the order device according to the fourth embodiment of the present invention will be described. The order device 7 is a terminal operated by a customer of a restaurant. The order device 7 is not particularly limited as long as the order device 7 can be connected to other apparatus in a wired or wireless manner. The management apparatus 6A is a stationary apparatus and is installed for each table or each seat of a restaurant. The order device 7 is preferably a computer apparatus including an input unit, a display unit, and a control unit, such as a tablet terminal, a smartphone, or a desktop or notebook type personal computer. The display screen of the display unit may include a touch sensor, and the input unit and the display unit may be integrated with a touch panel scheme.

When the customer operates the order device 7, the food and drink and a price that can be ordered at the restaurant are displayed, and the desired food and drink and a quantity can be selected. When the customer selects the type and quantity of food and drink desired by the customer, a table **ID** with which the type and quantity of food and drink and the table on which the order device 7 is placed can be identified is transmitted to the server apparatus 3 as order information. Then, the order information is transmitted to the management apparatus 6A via the server apparatus 3. The table ID included in the order information may be a seat ID with which a seat on which the order device 7 is placed can be identified or may be an order device ID with which the order device can be identified.

### [Reading Terminal]

Next, a reading terminal according to the fourth embodiment of the present invention will be described. In the system 10 according to the fourth embodiment of the present invention, a food and drink tray on which food and drink are placed may include the RF tag 9. The reading terminal 8 can read the RF tag 9 provided on the food and drink tray. Based on information obtained by reading the RF tag 9, it is also possible to calculate an amount of food and drink served and a billing amount to the customer (food and drink fee). The RF tag 9 stores identification information with which food and drink can be identified or price information regarding a price of food and drink. Further, the RF tag 9 may store information regarding the type of food and drink.

The reading terminal 8 is not particularly limited as long as the reading terminal 8 can be connected to other apparatus (for example, the management apparatus 6A) in a wired or wireless manner. The reading terminal 8 may be a portable terminal carried by a store clerk when the store clerk moves. The reading terminal 8 may be installed on each table, and the installation place is not particularly limited. Alternatively, a reading unit that has a function similar to that of the reading terminal 8 may be included in a portion of the serving device 2C, such as a serving table, where the RF tag 9 can be read.

### [Serving Processing]

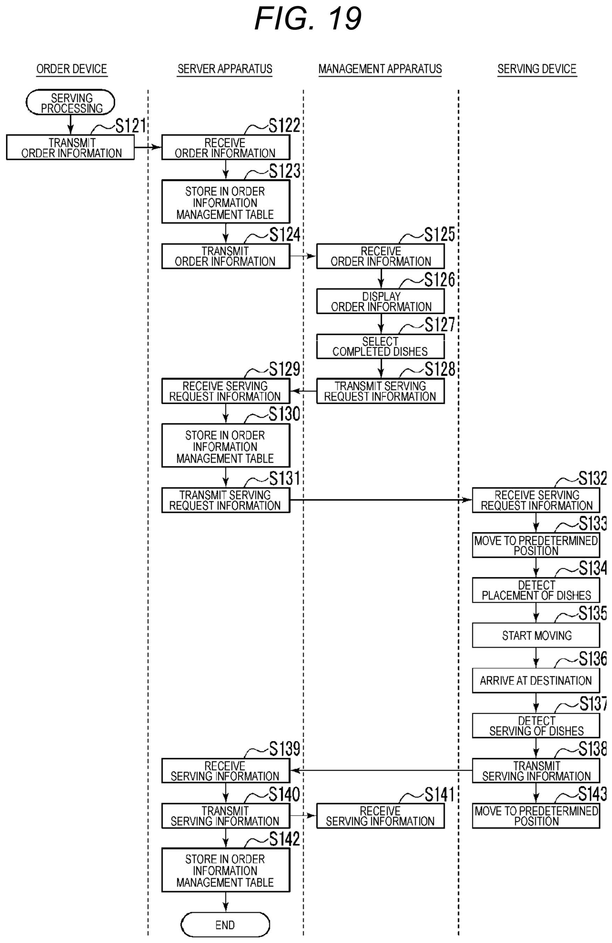

Next, serving processing according to the fourth embodiment of the present invention will be described. The serving processing is processing for providing ordered food and drink to a customer according to the order information transmitted from the order device 7. Fig. 19 is a flowchart illustrating serving processing according to the fourth embodiment of the present invention.

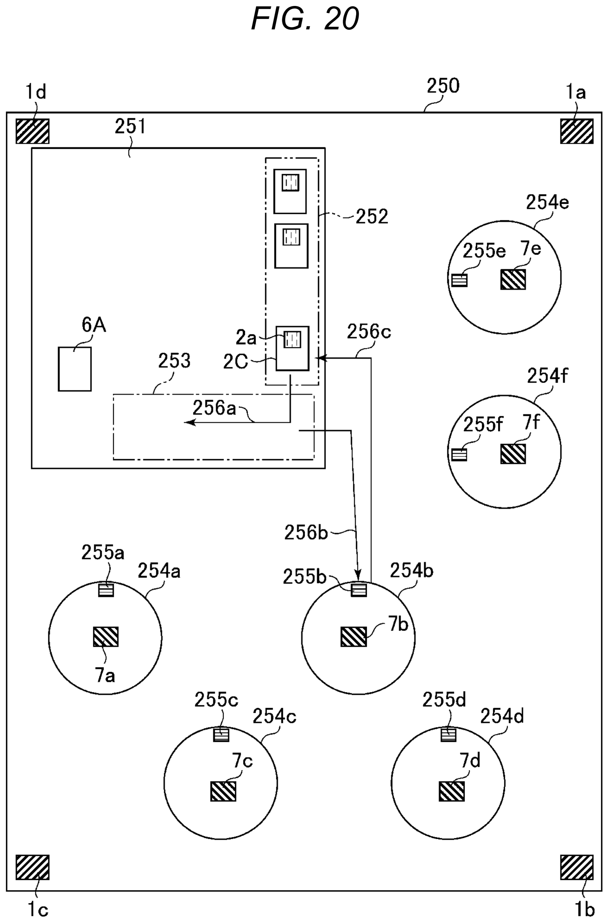

Fig. 20 is a schematic diagram illustrating a serving method according to the fourth embodiment of the present invention. In Fig. 20, a kitchen 251 and a plurality of tables 254 (254a to 254f) are provided in a restaurant 250. In the kitchen 251, a waiting place 252 of the serving device 2C and a region 253 which is a location where completed food and drink are placed are provided, and the management apparatus 6A is installed. The order devices 7 (7a to 7f) are provided on the table 254. Positional information of the table 254 is stored in the server apparatus 3 with latitude, longitude, and altitude at which a mark 255 is located, or an XYZ coordinate system associated with the table ID. Similarly, similarly to the positional information of the kitchen 251, the waiting place 252, and the region 253, the latitude, longitude, and altitude, or the XYZ coordinate system are stored in the server apparatus 3. In the restaurant 250, first devices 1a to 1d specifying the position of the second device 2a are provided.

In the following flowchart, a case where a customer seated on the table 254b orders a dish as food and drink will be described. First, the customer operates the order device 7b to select types and quantity of dish to be ordered. Order information regarding the order is transmitted from the order device 7b to the server apparatus 3 (step S121). The order information includes the types and quantity of dish and a table ID of the table 254b on which the order device 7b is installed. The order information is received by the server apparatus 3 (step S122). The server apparatus 3 stores the received order information in the order information management table (step S123).

In the order information management table, types, quantities, a table ID, an order time, and a status of the ordered dish are stored in association with each other. A weight of each type of dish may be stored in association. The order time may be a time at which a selection of the types and quantities of the dishes to be ordered is received by the order device 7b, a time at which the order information is transmitted from the order device 7b, or a time at which the order information is received by the server apparatus 3. The status indicates a serving status of the ordered food and drink, such as "during cooking" in a situation where the dish is prepared, "during serving" in a situation where the serving device 2C is serving the dish, and "serving completion" in a situation where the serving has been completed. In step S123, the status becomes "during cooking".

When the order information is received by the server apparatus 3, the order information is transmitted from the server apparatus 3 to the management apparatus 6A (step S124). The management apparatus 6A receives the order information (step S125) and displays the order information (step S126). In step S126, all of the received order information may be displayed, or at least some of the order information may be displayed. For example, when one dish A, two dishes B, and one dish C are ordered from a table ID "001", only the type of each dish may be displayed, or the types and quantities of dishes may be displayed without displaying the table ID.

A store clerk checks the displayed order information and cooks the ordered dishes. When the ordered dishes have been completed, the completed dishes are selected from the order information regarding the touch panel of the management apparatus 6A. When a selection of the completed dishes is received by the management apparatus 6A (step S127), serving request information including information regarding the types and quantities of the completed dishes and the table ID is transmitted to the server apparatus 3 (step S128).

When the serving request information is received in the server apparatus 3 (step S129), the status of the order information management table is updated for the types and the quantities of the dishes of which the selection is received in step S127 (step S130). In step S130, the status is changed from "during cooking" to "during serving". The server apparatus 3 transmits the serving request information to the serving device 2C (step S131), and the serving device 2C receives the serving request information (step S132). The serving request information includes information regarding the types and quantities of the dishes selected in step S127 and the table ID corresponding to the dishes. Accordingly, the serving request information includes some or all of the order information. That is, the order information input through the operation of the customer on the order device 7 is transmitted to the serving device 2C.

When the serving request information is received by the serving device 2C, the serving device 2C starts moving according to the movement route information of the route 256a for moving to the region 253 (step S133). The processing of step S133 or S135 to be described below is also referred to as processing for controlling the serving device 2C to move to a predetermined position in response to an operation of the store clerk on the management apparatus 6A. Examples of the predetermined position include a specific position of the kitchen and the table of the customer.

When the serving device 2C moves to the region 253, the store clerk places the completed dishes on the placing table of the serving device 2C. A weight sensor provided on the placing table of the serving device 2C detects that the dishes included in the serving request information are placed (step S134). When the weight sensor detects that the dishes have been placed, the serving device 2C starts moving to the position of a mark 255b corresponding to the table **ID** of the serving request information (step S135). The serving device 2C located in the region 253 moves toward the position of the mark 255b on the table 254b according to the movement route information of the route 256b. The processing of step S135 is also referred to as processing for controlling the serving device 2C to move to a position corresponding to the order device 7 that has transmitted the order information after the food and drink are placed in the serving device 2C.

The positional information of the table is registered in advance in the serving device 2C for each table ID. The positional information of the serving device 2C is specified by the position specifying processing to be described below, and the movement route information is specified from the positional information of the table and the positional information of the serving device 2C, so that movement to the position of the table is possible. Alternatively, the movement route information from the predetermined position to the position of the table may be registered in advance in the serving device 2C for each table ID.

Here, the processing for detecting the placement of the dishes in step S134 can be executed as follows. For example, a weight may be registered in advance for each orderable dish, and it may be detected whether a dish having the same weight as the dish included in the serving request information is placed. When the weight is different, the movement of the serving device 2C in step S135 is not started. Alternatively, the placement of the dish may be detected by detecting a certain weight or more (for example, 200 g or more). The weight of each dish may be registered in advance with a range such as 500 g to 700 g. When a plurality of types of dishes or a plurality of quantities of dishes are included in the serving request information, a weight obtained by adding the weights of the dishes may be used during detection.

When the serving device 2C arrives at the position of target table 254b, arrival information for notifying that the dish has arrived is output (step S136). As the arrival information, the table ID and the type and quantity of the dish delivered may be displayed on the display screen of the serving device 2C, or it may be output by voice which dish has been delivered. A serving port of the serving device 2C may be opened to take out the dish.

When the customer takes out the served dish from the serving device 2C, the weight sensor of the serving device 2C detects that the dish has been served on the table by the customer (step S137). The customer may select the display screen of the serving device 2C, and the serving device 2C may receive the fact that the serving has been completed. The serving information indicating that the dish has been served to the customer is transmitted from serving device 2C to the server apparatus 3 (step S138), and the serving information is received by the server apparatus 3 (step S139). The serving information includes the type, quantity, and table ID of the dish.

When the serving information is received by the server apparatus 3, the serving information is transmitted from the server apparatus 3 to the management apparatus 6A (step S140), and the serving information is received by the management apparatus 6A (step S141). When the serving information is received by the server apparatus 3, the status of the order information management table is updated for the type and quantity of the served dish (step S142). In step S141, the status is changed from "during serving" to "serving completion".

When the serving information is transmitted in step S137, the serving device 2C moves to the waiting place 252 according to the movement route information of the route 256c (step S143). In step S143, the serving device2C is assumed to move to the waiting place 252, but may be assumed to move to the kitchen 251 or the region 253. When dishes corresponding to two or more pieces of order information are placed on the serving device 2C and the table IDs corresponding to the dishes are different, the processing of steps S136 to S143 may be repeatedly executed setting the table 254 corresponding to the next table ID as a target point. Through the above processing of steps S121 to S143, the serving processing ends.

The status in step S130 may be changed after the movement of serving device 2C in step S135 starts. The processing of steps S140 and S141 may be omitted. The restaurant 250 may include two or more serving devices and simultaneously operate two or more serving devices 2C. With the movement route information, a movement route that does not overlap with a movement route of another serving device 2C so that collision with another serving device 2C does not occur may be specified, the movement route of the serving device 2C executing the serving may be prioritized, the movement route of the serving device 2C during serving may not be changed, and the movement route of the serving device 2C that has completed serving may be changed. In the case of the same movement route, one serving devices 2C may be temporarily stopped to make movement timings different.

In the above description, the order information is transmitted from the order device 7 in step S121, but the order information may be transmitted from the serving device 2C. In this case, a customer selects a type, a quantity, and a table ID of a dish to be ordered from the touch panel of the display unit of the serving device 2C. Then, the order information is transmitted from the serving device 2C to the server apparatus 3, and the processing of steps S122 to S142 is executed. The order information is transmitted by the serving device 2C, for example, when the serving device 2C arrives at the table of the customer in step S136.

The serving device 2C to which the serving request information is received in step S132 may be the serving device 2C that does not execute serving, such as a serving device that waits at the waiting place 252 or a serving device that has completed serving. That is, the serving request information may not be transmitted to the serving device 2C of which the status is "during serving" in which the processing of steps S132 to S138 is executed. That is, after the serving request information is transmitted from the server apparatus 3 to the serving device 2C in step S131, identification information for identifying the serving device 2C may be stored in the order information management table in association with the types and quantities of dishes and the table ID. With the change in the status in step S142, the identification information of the serving device 2C is deleted from the order information management table. Alternatively, when the serving request information is transmitted to the serving device 2C executing the processing of steps S132 to S138, the serving request information may be stored in the serving device 2C, and the processing of steps S133 to S138 may be newly executed after end of the serving of the dishes that are being processed.

When the types and quantities of dishes included in the serving request information received in step S129 exceed quantities that can be placed on one serving device 2C, the serving request information may be transmitted to two or more serving devices 2C in step S131. The server apparatus 3 can determine whether the dishes included in the serving request information can be placed on the serving device 2C at one time by registering sizes of the trays of the dishes in advance and determining that the dishes cannot be placed at one time at which a total area occupies a certain range or more of the placing table (for example, 80% or more). When it is determined that the dishes cannot be placed at one time, the server apparatus 3 can divide the serving request information into a plurality of pieces of information so that the dishes to be served are within a certain range (for example, within 70%) of the placing table.

Alternatively, in step S133, when the dish is placed on the serving device 2C that has moved to the predetermined position, the dish included in the serving request may be displayed on the display unit of the management apparatus 6A or the serving device 2C, and the dish to be placed on the serving device 2C may be selected through an operation input of the store clerk. Then, the processing of steps S133 to S137 may be repeated until all the dishes included in the serving request are served.

In the system 10 according to the fourth embodiment of the present invention, during the movement of the serving device 2C (steps S133, S135, and S143), the distance calculation processing for calculating the distance between the first device 1 and the serving device 2C to be described below, the position specifying processing for specifying the position of the serving device 2C, and the route determination processing for determining whether the position of serving device 2C matches the movement route information are executed. While any frequency at which the processing is executed can be set, the processing may be executed once every several seconds, for example, in order to accurately manage the movement of the serving devices. The route determination processing is similar to the determination processing (Fig. 8) according to the first embodiment. The route determination processing is an example of the first determination processing.

### [Distance Calculation Processing]

Next, distance calculation processing according to the fourth embodiment of the present invention will be described. The distance calculation processing is processing for calculating a distance between each of the plurality of first devices 1 and the second device 2a based on a propagation time of information or a signal between each of the plurality of first devices 1 and the second device 2a. Since the second device 2a is included in the serving device 2C, it can be said that the processing is processing for calculating the distance between each of the plurality of first devices and the serving device 2C. In the distance calculation processing according to the fourth embodiment, the same processing as the distance calculation processing according to the first embodiment (Fig. 6) can be applied to the serving device 2C instead of the work vehicle as the mobile object 2. Therefore, repeated description will be omitted.

### [Position Specifying Processing]

Next, position specifying processing according to the fourth embodiment of the present invention will be described. The position specifying processing is processing for specifying the position of the second device based on the distance between each of the plurality of first devices 1 and the second device 2a calculated in the distance calculation processing. Since the second device 2a is included in the serving device 2C, it can be said that the processing is processing for specifying the position of the serving device 2C. In the position specifying processing according to the fourth embodiment, the same processing as the position specifying processing according to the first embodiment (Fig. 7) can be applied to the serving device 2C instead of the work vehicle as the mobile object 2. Therefore, repeated description will be omitted. However, in the fourth embodiment, in addition to the matters described in the first embodiment, the following embodiments can be added or replaced.

The system 10 according to the fourth embodiment of the present invention preferably includes at least three first devices 1. When the first device 1 and the second device 2a included in the indoor serving device 2C are installed in the restaurant in the same floor at the same height (for example, the same altitude or the same Z coordinate), the position of the second device 2a can be specified by at least three first devices 1. When the first device 1 and the second device 2a included in the serving device 2C are not installed at the same height, the position of the second device 2a can be specified by at least four first devices.

In the fourth embodiment of the present invention, in step S42, the specified position of the second device 2a is stored in the memory in the control unit 21 of the second device 2a or the storage unit 25 of the serving device 2C in association with time information regarding the calculated time (time information regarding a time at which the distance is calculated or time information regarding the time at which the position is specified), the identification information of the first device 1 (or the positional information of the first device 1), and the identification information of the second device 2a.

In the position specifying processing according to the fourth embodiment of the present invention, the second device 2a may specify the position of the second device 2a. Instead of the second device 2a, the first device 1 or the server apparatus 3 may specify the position of the second device 2a through the same processing as step S41.

### [Route Determination Processing]

Next, route determination processing according to the fourth embodiment of the present invention will be described. The route determination processing is processing for determining whether the position of the second device 2a specified in the position specifying processing matches the movement route information regarding the movement route of the serving device 2C. In the route determination processing according to the fourth embodiment, the same processing as the determination processing according to the first embodiment (Fig. 8) can be applied by replacing the work vehicle with the mobile object 2 serving as the serving device 2C. Therefore, repeated description will be omitted. However, in the fourth embodiment, in addition to the matters described in the first embodiment, the following embodiments can be added or replaced.

In the fourth embodiment of the present invention, the predetermined distance used for the determination in step S52 can be appropriately set according to the size of the restaurant and the size of the serving device 2C.

In the fourth embodiment of the present invention, the modification of the movement route information in step S53 can be executed similarly to the processing for specifying the movement route of serving device 2C. Specifically, the movement route can be specified based on the departure point and the target point using the specified position of the second device 2a as the departure point. For example, the movement route may be specified so that the movement distance is minimized, the movement route may be specified so that obstacles are avoided according to the map information of the restaurant, or the movement route may be specified so that the movement route passes through a movable region set in the map information of the restaurant.

### [Second Determination Processing]

Next, second determination processing according to the fourth embodiment of the present invention will be described. The second determination processing is processing for reading the RF tag 9 by the reading terminal 8 to determine whether the order information matches the food and drink information regarding the served food and drink. The first determination processing can also be said to be processing for determining whether the food and drink ordered by the order device 7 has been properly placed by the serving device 2C. For example, through the second determination processing, it is possible to detect that a third party other than an ordering person who is a customer who has ordered the food and drink has received the food and drink ordered by the ordering person intentionally or negligently.

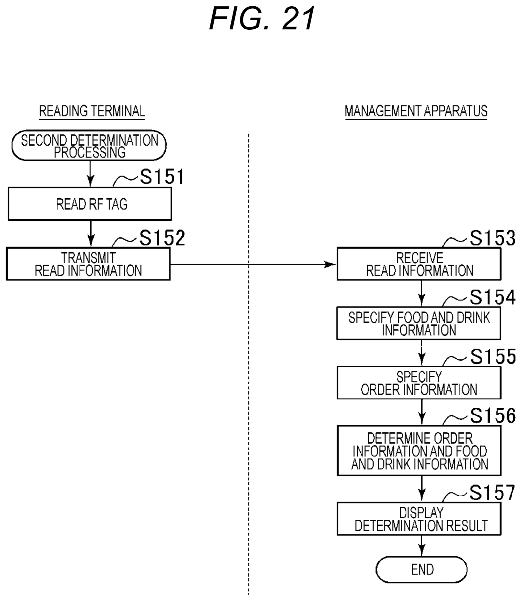

Fig. 21 is a flowchart illustrating the second determination processing according to the fourth embodiment of the present invention. In the system 10 according to the fourth embodiment of the present invention, a food and drink tray after meal is placed on a table. Therefore, first, the RF tag 9 of the food and drink tray is read by the reading terminal 8 operated by the store clerk (step S151). The table ID may be input to the reading terminal 8. The read information obtained by reading the RF tag 9 is transmitted from the reading terminal 8 to the management apparatus 6A (step S152) and received by the management apparatus 6A (step S153).

The management apparatus 6A specifies the food and drink information based on the read information (step S154). The read information includes identification information for identifying the food and drink, price information regarding the price of the food and drink, quantity information regarding the quantity of the food and drink, and/or information regarding the type of the food and drink. Further, the food and drink information is information regarding the type and quantity of food and drink and the amount claimed. In step S154, the type and quantity of the food and drink provided to the customer can be specified based on the read information. Further, the billing amount to be billed to the customer can be calculated by adding the price of the specified food and drink.

Subsequently, the management apparatus 6A specifies order information corresponding to the table ID input by the reading terminal 8 (step S155). Then, it is determined whether the order information matches the food and drink information (step S156). In step S1356, it is determined whether the information regarding the food and drink specified by reading the RF tag 9 matches the information regarding the food and drink stored in association with the table ID of the order information management table. Specifically, the type, quantity, and amount of the food and drink included in the order information and the food and drink information are collated with each other. Subsequently, the management apparatus 6A displays the determination result (step S157). If any of the type, the quantity, and the billing amount of the food and drink does not match, the determination result is that there is no match. In addition, the management apparatus 6A can determine that the food and drink is not properly served in the case of the determination result indicating that they do not match each other. The second determination processing ends by the processings of steps S151 to S157.

Note that, in a case where the determination results of step S156 match, the amount of the invoice is transmitted to the settlement register in association with the table ID. On the other hand, when they do not match, the billing amount calculated by reading the RF tag 9 may be transmitted to the settlement register to proceed with the accounting. Alternatively, the server apparatus 3 may transmit and output inconsistency information notifying that the reading terminal 8, the serving device 2C, or the management apparatus 6A does not match. For example, food and drink that does not match the table ID is displayed in the output inconsistency information. As a result, it is possible to confirm whether the store clerk has read the RF tags 9 of all the food and drink trays with the reading terminal 8, whether all the orders have been served on the table corresponding to the ordered table ID, whether the third party has not obtained the unordered food and drink by mistake or intentionally, and the like. Further, the store clerk can notice that the food and drink is served on the table corresponding to the table ID different from the order information.

Note that the read information may be transmitted to the server apparatus 3 in association with the table ID input by the reading terminal 8, and the server apparatus 3 may execute the processing of steps S154 to S156.

Note that the second determination processing may have the following configuration instead of the processing of steps S156 and S157. When the processing of steps S151 to S155 is executed, the food and drink information specified in step S154 and the order information specified in step S155 may be displayed on the management apparatus 6A. In this case, it is preferable to display the food and drink information specified in step S154 and the order information specified in step S155 on the same display screen. Specifically, it is preferable to display the type, quantity, and amount of food and drink included in the order information and the food and drink information in a list. As a result, the store clerk operating the management apparatus 6A can determine whether the ordered food and drink matches the provided food and drink.

In system 10 according to the fourth embodiment of the present invention, serving device 2C may serve not only the food and drink but also the bottom of the food and drink tray. In the case of preparing the lower tray of the food and drink tray, first, the lower tray request information for requesting the lower tray of the food and drink tray is transmitted from the order device 7 to the server apparatus 3 by the operation input of the customer. The lower tray request information includes a table ID. When the server apparatus 3 receives the lower tray request information, the server apparatus 3 transmits the lower tray request information to the serving device 2C. When the lower serving request information is received by the serving device 2C, the processing of steps S135 and S136 is executed with the table corresponding to the lower serving request information as a target point. When the placement of the food and drink tray is detected by the weight sensor, the serving device 2C moves to a predetermined position such as a kitchen or a dishwashing place. This processing can also be said to be processing for controlling the serving device 2C to move to a predetermined position according to the operation of the customer on the order device 7.

Here, when the reading unit is installed in the serving device 2C, the RF tag 9 of the food and drink placed on the placing table of the serving device 2C may be read at the time of preparing the lower tray of the food and drink tray to specify the food and drink provided to the customer, and the billing amount to the customer may be calculated. The lower tray of the food and drink tray may be executed after the meal or may be executed during the meal. When the processing is executed during a meal, the RF tag 9 may be read and read information may be transmitted to the management apparatus 6A.

In addition, in a case where the reader is installed in the serving device 2C, the processing for detecting the placement of the dish in step S134 and the detection of the serving of the dish in step S137 may be executed by reading the RF tag 9 instead of the weight sensor. For example, in the placement of the dish in step S134, when the RF tag 9 is read for a predetermined food and drink, it can be detected that the dish has been placed. In the serving of the dish in step S137, when the RF tag 9 that has been read cannot be read, it can be detected that the dish has been served.

According to the invention of the fourth embodiment, since the position of the second device is specified based on the distance between each of the plurality of first devices 1 and second device 2a, the serving device can be moved to the position of the ordered customer using the specified position of the serving device.

According to the invention of the fourth embodiment, the serving device is controlled to move to the position corresponding to the order device operated by the customer of the restaurant after the food and drink is placed in the serving device, so that the food and drink ordered by the customer can be provided to the customer in a non-face-to-face manner. This can also contribute to labor saving in restaurants.

According to the invention of the fourth embodiment, since at least a part of the order information is displayed on the management apparatus operated by the store clerk of the restaurant, the store clerk can confirm the order information input by the customer. Further, according to the invention of the fourth embodiment, the serving device is controlled to move to a predetermined position according to an operation of the store clerk on the management apparatus, so that the food and drink can be placed on the serving device without the store clerk moving. In addition, it is possible to provide the customer with the food and drink without the store clerk moving.

According to the invention of the fourth embodiment, control is executed such that the movement of the serving device is started in response to the fact that the food and drink is placed on the serving device by the weight sensor and/or the fact that the food and drink is served from the serving device by the weight sensor. Therefore, it is possible to prevent the food and drink from moving to the place of the customer without placing the food and drink, and to prevent the customer from forgetting to take the food and drink, and to reliably provide the food and drink to the customer. In addition, according to the invention of the fourth embodiment, in order to determine whether the order information input through the operation of the customer on the order device matches the food and drink information, it is possible to confirm whether the ordered food and drink matches the provided food and drink. In addition, the store clerk can claim a meal fee for the food and drink actually provided by the customer. Further, according to the invention of the fourth embodiment, since the order information and the food and drink information are displayed, it is possible to confirm whether the food and drink ordered by the customer are actually provided.

### [Fifth Embodiment]

In a fifth embodiment, as an example, a case where the mobile object is applied to an item collection apparatus will be described. In the fifth embodiment, a case where an item collection apparatus is used instead of the work vehicle in the first embodiment and various types of processing are executed will be described.

In the fifth embodiment of the present invention, examples of the item include a component, a commodity, and a package. A system according to the fifth embodiment of the present invention is used in a space of a factory, a warehouse, or the like in which components necessary for manufacturing a product, a commodity to be shipped to a customer or the like, the package to be delivered to a delivery destination, or the like is stored. Hereinafter, a space where a component, a commodity, or a package is stored is referred to as a warehouse. The product is not particularly limited as long as the product can be manufactured by combining one or more components that are elements included in the product. The components may be materials of the product. The components for manufacturing the product are not particularly limited. The product may be a component of a certain product. For example, a seat for an automobile is not only a product but also a component of an automobile.

The commodity may be a target of commercial transaction, and particularly refers to a movable property. For example, both the product and the component can be a commodity. Examples of the product or the commodity include furniture, stationery, daily necessities, miscellaneous goods, electronic apparatuses, mechanical apparatuses, vehicles such as automobiles, sporting goods, toys, and food. In the fifth embodiment of the present invention, the commodity is stored in a warehouse and shipped from the warehouse. The package is delivered from a predetermined delivery place to a predetermined destination in a home delivery service or the like, and is temporarily stored in a warehouse.

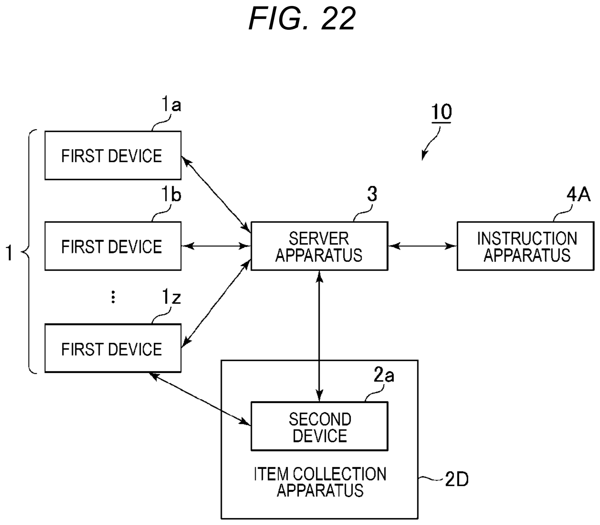

Fig. 22 is a block diagram illustrating a configuration of a system according to the fifth embodiment of the present invention. As illustrated, the system 10 according to the fifth embodiment of the present invention includes a plurality of first devices 1 (first devices 1a to 1z) and an item collection apparatus 2D including a second device 2a. The system 10 according to the fifth embodiment of the present invention preferably includes three or more first devices 1. Further, the system 10 according to the fifth embodiment of the present invention may include a plurality of item collection apparatuses 2D. As illustrated in the drawing, the system 10 according to the fifth embodiment of the present invention may include a server apparatus 3 and an instruction apparatus 4A. The system 10 according to the fifth embodiment of the present invention may include a reading device (not illustrated).

The first device 1 and the second device 2a can be directly communicably connected. The server apparatus 3 can be communicably connected to each of the first device 1, the second device 2a, the item collection apparatus 2D, and the instruction apparatus 4A. Each of the item collection apparatus 2D and the instruction apparatus 4A transmits and receives information via the server apparatus 3. The server apparatus 3 may be installed in a warehouse where the system 10 according to the fifth embodiment of the present invention is used, or may be installed outside of the warehouse. Alternatively, the item collection apparatus 2D and the instruction apparatus 4A may directly be connected to communicate with each other without providing the server apparatus 3. The item collection apparatus 2D, the server apparatus 3, and the instruction apparatus 4A may be communicably connected via a communication network.

### [First Device]

The first device 1 is a reference device that synchronizes a clock of the second device 2a. As a function and a hardware configuration of the first device 1 according to the fifth embodiment, the function and the hardware configuration (Fig. 2) of the first device 1 according to the first embodiment can be applied within a necessary range. Therefore, repeated description will be omitted.

In the system 10 according to the fifth embodiment of the present invention, a location where the first device 1 is installed is not particularly limited, but the first device 1 is preferably installed in a warehouse where the item collection apparatus 2D is used. A plurality of first devices 1 may be installed in the warehouse. When the item collection apparatus 2D collects items in a warehouse where there are a plurality of floors, the first device 1 may be installed for each floor, or the first device 1 may be installed for each of a plurality of floors such as two floors and three floors. The first device 1 is preferably installed at a fixed position at which the installation position can be specified. For example, the first device 1 can be installed on a ceiling, a column, or the like in the warehouse.

### [Second Device and Item Collection Apparatus]

In the fifth embodiment of the present invention, the second device 2a is included in the item collection apparatus 2D, and is connected to the item collection apparatus 2D to be able to communicate with each other in a wired or wireless manner. The case where "the second device 2a is included in the item collection apparatus 2D" has the same meaning as "the second device 2a is included in the mobile object 2" according to the first embodiment.

The item collection apparatus 2D is communicably connected to the first device 1 and the instruction apparatus 4A via the server apparatus 3. The item collection apparatus 2D can automatically travel to collect and transport items. The item collection apparatus 2D can use a known item collection apparatus. The item collection apparatus 2D may be an apparatus that can be boarded by a person.

Next, hardware configurations of the second device 2a and the item collection apparatus 2D will be described.

As a function and a hardware configuration of the second device 2a according to the fifth embodiment, the function and the hardware configuration (Fig. 3) of the second device 2a according to the first embodiment can be applied within a necessary range. As a function and a hardware configuration of the item collection apparatus 2D according to the fifth embodiment, the function and the hardware configuration (Fig. 3) of the mobile object 2 according to the first embodiment can be applied within a necessary range by replacing the mobile object 2 with the item collection apparatus 2D. Therefore, repeated description will be omitted. However, in the fifth embodiment, in addition to the matters described in the first embodiment, the following embodiments can be added or replaced.

In the fifth embodiment of the present invention, the item collection apparatus 2D may include a reading device. In the fifth embodiment of the present invention, the drive unit 26 activates a battery to operate the item collection apparatus 2D. A roller may be provided on the bottom surface of the item collection apparatus 2D, and the item collection apparatus 2D may be operated by rotating the roller by the drive unit 26.

In the fifth embodiment of the present invention, when the control unit 21 detects that the item collection apparatus 2D has overturned or collided, the control unit 21 can also transmit a notification that the item collection apparatus 2D has overturned or collided to the instruction apparatus 4A via the server apparatus 3.

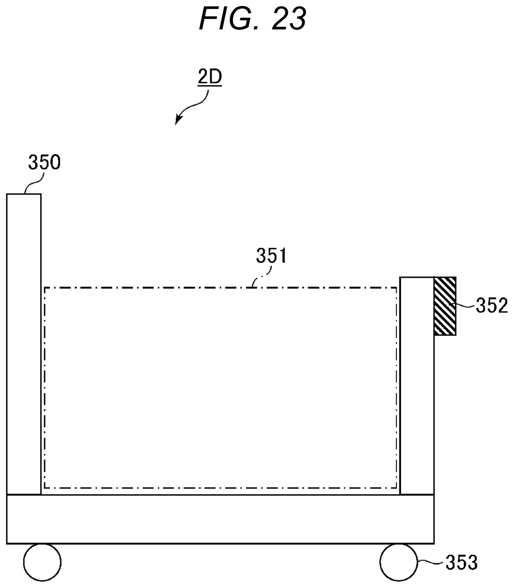

Fig. 23 is a schematic diagram illustrating an item collection apparatus according to the fifth embodiment of the present invention. The item collection apparatus 2D includes a device body 350, an item storage 351 that stores the collected items, and a reading device 352. As described above, the item collection apparatus 2D may include a roller 353 and various sensors (not illustrated). The reading device 352 can read an RF tag attached to an item.

The item collection apparatus 2D moves along a movement route according to the movement route information. The item collection apparatus 2D moves according to the movement route information and can execute predetermined processing at an arrival point after the movement. Examples of the predetermined processing include collection of items and extraction of items. The processing for specifying the movement route information will be described below.

### [Server Apparatus]

Next, the server apparatus according to the fifth embodiment of the present invention will be described. The server apparatus 3 can acquire information such as positional information and recording information from the second device 2a or the item collection apparatus 2D. The acquired information can be transmitted to the instruction apparatus 4A.

As a hardware configuration of the server apparatus 3 of the fifth embodiment, the hardware configuration (Fig. 4) of the server apparatus 3 according to the first embodiment can be applied within a necessary range. Therefore, repeated description will be omitted. In the fifth embodiment of the present invention, the control unit 31 reads a program and data from the RAM 32, and executes program execution processing based on information or the like received from the first device 1, the second device 2a, the item collection apparatus 2D, or the instruction apparatus 4A.

In the fifth embodiment of the present invention, the server apparatus 3 may communicate with the first device 1, the second device 2a, the item collection apparatus 2D, or the instruction apparatus 4A via a smart meter installed in a warehouse.

### [Instruction Apparatus]

Next, the instruction apparatus according to the fifth embodiment of the present invention will be described. The instruction apparatus 4A is an apparatus that gives an instruction to produce a product or collect items. A person operating the instruction apparatus 4A is not particularly limited. For example, a person who manufactures a product (also referred to as a producer), a person who wants to purchase a commodity (also referred to as a purchase applicant), a person who has received an order for a commodity from a purchase applicant, a person who delivers a package, or the like can operate the instruction apparatus 4A. When the purchase applicant inputs the commodity to be purchased to the instruction apparatus 4A, product information (a product number, a model number, or the like) of the commodity is transmitted from the instruction apparatus 4A to the server apparatus 3. Alternatively, the producer can input product information of the ordered product to the instruction apparatus 4A or can input components necessary for manufacturing the ordered product to the instruction apparatus 4A.

The instruction apparatus 4A may be a stationary apparatus installed in a warehouse or may be a portable apparatus carried when a producer or a purchase applicant moves. The instruction apparatus 4A has a similar configuration to the server apparatus 3 and includes, for example, a control unit, a RAM, a storage unit, a communication interface, an input unit, and a display unit that are connected via an internal bus. The instruction apparatus 4A is preferably a computer apparatus including an input unit, a display unit, and a control unit, such as a tablet terminal, a smartphone, or a desktop or notebook type personal computer.

In the instruction apparatus 4A, a position of the item collection apparatus 2D can be confirmed. Specifically, by receiving the positional information of the item collection apparatus 2D by the instruction apparatus 4A and associating the positional information with the map information of the warehouse, the position of the item collection apparatus 2D can be displayed on the map on the display screen of the instruction apparatus 4A. Further, the positional information of the item collection apparatus 2D may be confirmed as latitude and longitude information or a coordinate position of an XYZ coordinate system. The positions of the plurality of item collection apparatuses 2D may be simultaneously confirmed. Further, the instruction apparatus 4A may be able to confirm the recording information transmitted from the second device 2a or the item collection apparatus 2D.

### [Collection Processing]

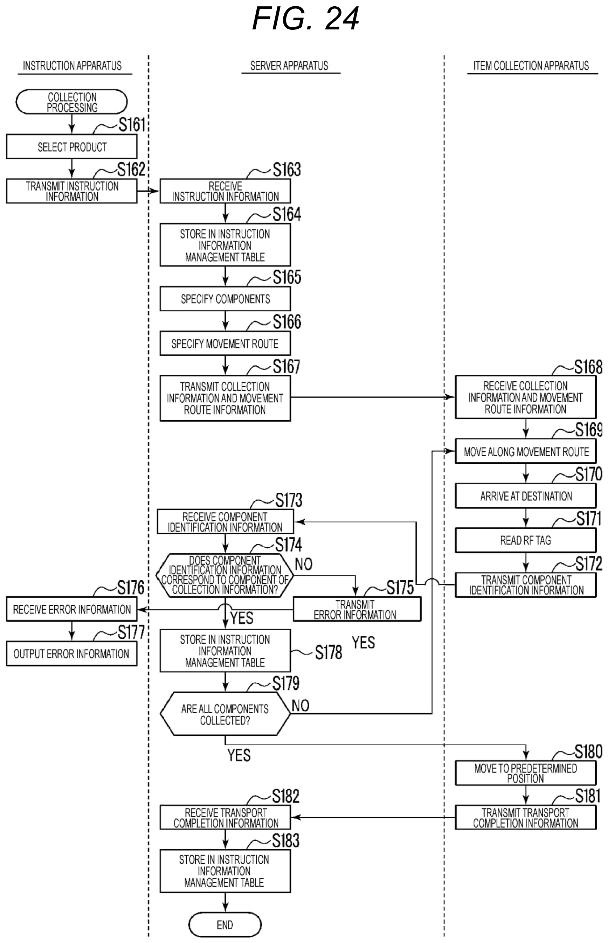

Next, collection processing according to the fifth embodiment of the present invention will be described. The collection processing is processing for collecting items in response to instruction information transmitted from the instruction apparatus 4A and transporting the item to a predetermined position. Fig. 24 is a flowchart illustrating collection processing according to the fifth embodiment of the present invention.

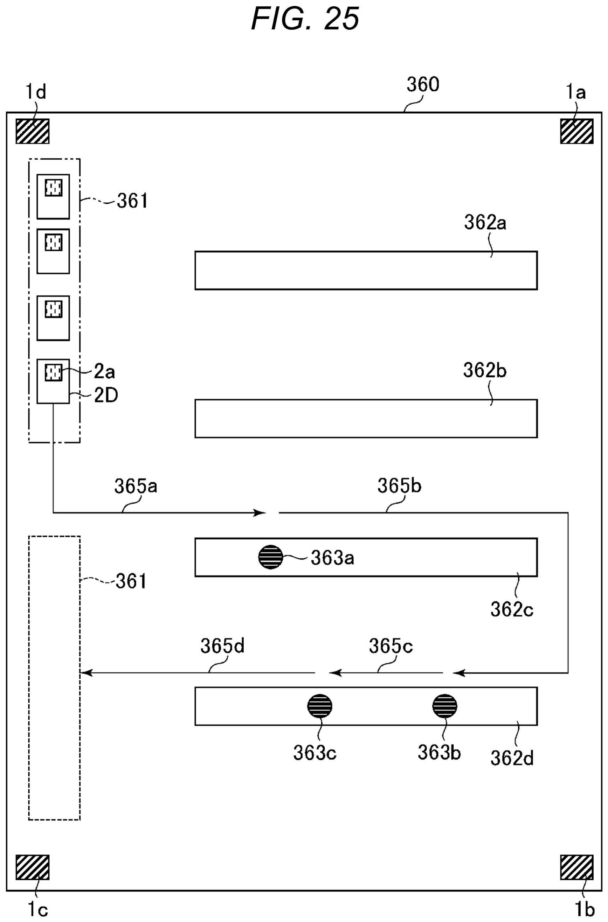

Fig. 25 is a schematic diagram illustrating a collection method according to the fifth embodiment of the present invention. In Fig. 25, a waiting place 361 of the item collection apparatus 2D, component storage shelves 362 (362a to 362d), and a predetermined position 364 that is a destination to which the collected components are transported are provided in the warehouse 360. The component 363a is stored in the storage shelf 362c of the item, and the components 363b and 363c are stored in the storage shelf 362d.

The positional information of the components is stored in a product master table by associating the storage shelves where the items are located and the storage positions, the latitude, longitude, and altitude, or the XYZ coordinate system with the products. The product master table is stored in the server apparatus 3, and details thereof will be described below. As the positional information of the waiting place 361 and the predetermined position 364, the latitude, longitude, and altitude, or the XYZ coordinate system is stored in the server apparatus 3. In the warehouse 360, the first devices 1a to 1d specifying the position of the second device 2a are provided.

In the following flowchart, a case where components of a product including a plurality of components (components 363a to 363c) are collected and transported will be described. First, the user operates the instruction apparatus 4A to select the type and quantity of products (step S161). The user may operate the instruction apparatus 4A to input a target point to which the components included in the product are transported. Instruction information regarding the product to be collected is transmitted from the instruction apparatus 4A to the server apparatus 3 (step S162). The instruction information includes the type and quantity of product and may include information regarding the target point. The server apparatus 3 receives the instruction information (step S163). In the server apparatus 3, the received instruction information is stored in the instruction information management table (step S164).

In the instruction information management table, a type and quantity of products, an instruction time at which the instruction information is received, and a status of the product are stored in association. In the instruction information management table, stores types, quantities, and statuses of components specified in step S165 to be described below are stored in association. The instruction time may be a time at which a selection of the type and quantity of product is received by the instruction apparatus 4A, a time at which the instruction information is transmitted from the instruction apparatus 4A, or a time at which the instruction information is received by the server apparatus 3. The status of the product indicates component collection and transportation statuses such as "during collection" of a status in which the item collection apparatus 2D specifies and collects components, "collection completion" of a status in which collection of all the components included in the product is completed, and "transport completion" of a status in which all the components are transported to the target point. On the other hand, a status of a component indicates a collection and transport status of the component, such as "during collection" in a situation where the item collection apparatus 2D specifies and collects the component, "collection completion" in a situation where the collection of the component is completed, and "transport completion" in a situation where the component is transported to the target point. In step S164, the status of the product becomes "during collection".

When the instruction information is received, the server apparatus 3 specifies the components to be collected (step S165). When the components are specified, a movement route of the item collection apparatus 2D is specified based on the positional information of the components (step S166). The collection information and the movement route information regarding the components to be collected are transmitted from the server apparatus 3 to the item collection apparatus 2D (step S167). The collection information includes the types and quantities of components. The collection information is stored in the instruction information management table. The stored status of the components is "during collection". When the components 363 are collected by arms provided in the storage shelves 362, the collection information may be transmitted to the control unit that controls the arms.

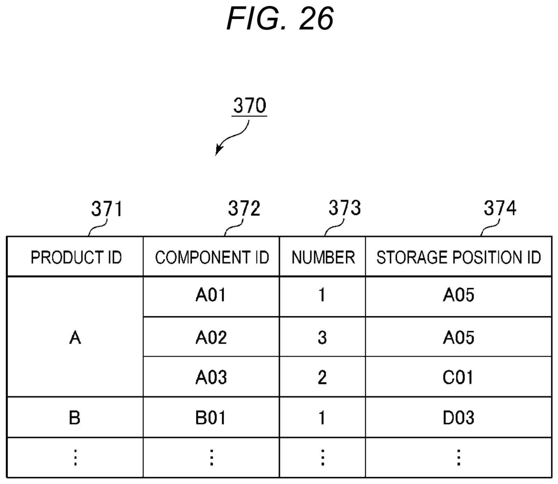

The component specification processing in step S165 will be described. The server apparatus 3 specifies the types and quantities of components to be collected and the positional information of the components from the types and quantities of products included in the instruction information with reference to the product master table. Fig. 26 is a diagram illustrating an example of the product master table according to the fifth embodiment of the present invention. The product master table 370 stores a plurality of components corresponding to one product in the server apparatus 3. In the product master table 370, a product ID 371 with which a product is identified, a component ID 372 with which a component included in the product is identified, the number 373 of components necessary for manufacturing one product, and a storage position ID 374 with which storage positions of the components are identified are stored in association. In the product master table 370, other information may be stored.

For example, in the product master table 370, one component with component ID "A01", three components with component ID "A02", and two components with component ID "A03" that are required to manufacture a product with product ID "A" are stored. Components with component IDs "A01" and "A02" are stored at a storage position with storage position ID "A05", and a component with component ID "A03" is stored at a storage position with storage position ID "C01". In the storage position ID 374 of the component, positional information (latitude, longitude, altitude, or XYZ coordinate system) where the component is located is stored in association. The storage position in the storage shelf 362 or the storage shelf 362 may be stored in association with the storage position ID 374 of the component.

In the above description, in step S161, information regarding a target point which is a transport destination of the components is input, but the target point may be stored in the product master table 370 in association with the product ID. In this case, in step S161, the input of the target point can be omitted.

The movement route specification processing in step S166 will be described. The server apparatus 3 specifies a movement route from the types, quantities, and positional information of the components specified with reference to the product master table. The movement route can be specified based on a known algorithm related to route specification. For example, the movement route can be specified so that a movement distance becomes the shortest based on the departure point and the target point. That is, the movement route can be specified based on the instruction information received in step S163. Specifically, the movement route may be specified based on the positional information of the item collection apparatus 2D, the map information, the positional information of the components, and the positional information of the predetermined position. When the collection information includes a plurality of components, the item collection apparatus 2D sequentially moves to storage positions of the components. An order in which the components are collected by the item collection apparatus 2D and the movement route of the item collection apparatus 2D are specified by the control unit 31 of the server apparatus 3. The position of the storage place of each component is stored in the server apparatus 3 in advance for each type of component (for example, for each product number and each model number), and the movement route may be specified based on the position.

For example, when the components 363a to 363c are specified in step S165, the departure point is the waiting place 361 and the target point is the predetermined position 364 via the components 363a to 363c. At this time, an order of movement to the predetermined position 364 via the components 363a to 363c may be six ways, but the movement route can be specified so that the movement route becomes shortest. Alternatively, when the order of collection of the components is stored for each product, the movement route can be specified according to the stored order. In Fig. 25, movement routes 365a, 365b, 365c, and 365d that move in the order of the components 363a, 363b, and 363c and the predetermined position 364 are specified so that the item collection apparatus 2D moves at the shortest time.

Here, the movement route information may be generated by the server apparatus 3 according to a predetermined program or may be stored in advance in the storage unit 33 of the server apparatus 3. Alternatively, the movement route information may be generated by the user operating the item collection apparatus 2D or the instruction apparatus 4A and setting the movement route. The movement route information may include, for example, a departure point, a target point, and positional information of the item collection apparatus 2D from the start of movement to the end of movement. The movement route information may include one or a plurality of via-points.

When the movement route information is generated according to a predetermined program, the movement route information may be generated based on the departure point and the target point so that the movement distance is minimized, or the movement route information may be generated according to the map information in the warehouse so that obstacles such as machines and apparatuses are avoided. In this case, the map information is stored in advance in the server apparatus 3. The map information stores information regarding a region such as a position of an obstacle or a wall where the item collection apparatus 2D cannot move, and a region where the item collection apparatus 2D can move.

The movement route of the item collection apparatus 2D in step S166 may be specified by the control unit 21 of the item collection apparatus 2D. The movement route information may be generated according to a predetermined program in the control unit 21 included in the item collection apparatus 2D or may be stored in advance in the storage unit 25 of the item collection apparatus 2D. In this case, when the components are specified in step S165 in the server apparatus 3, the collection information is transmitted to the item collection apparatus 2D, and the movement route is specified by the item collection apparatus 2D. The movement route information may be generated by the first device 1, the second device 2a, or the instruction apparatus 4A.

The description returns to the flowchart. When the collection information and the movement route information are transmitted from the server apparatus 3 to the item collection apparatus 2D, the item collection apparatus 2D receives the collection information and the movement route information (step S168). When the collection information and the movement route information are received, the item collection apparatus 2D moves to the position of the component 363a according to the movement route information of the movement route 365a (step S169). The processing of step S169 is also referred to as processing for controlling the item collection apparatus 2D to move to a position at which the components included in the collection information are stored.

When the item collection apparatus 2D arrives at the position of the component 363a that is a destination (step S170), the component 363a is collected and the RF tag attached to the component 363a is read by the reading device (step S171). The RF tag stores component identification information (also referred to as a component ID) with which a component is identified. The component identification information includes information with which a type of component is identified and information with which each component is identified. The component identification information is also referred to as identification information of an item.

Here, the item collection apparatus 2D can read the RF tag attached to the component by the reading device 352. When the item collection apparatus 2D moves to a shelf in a warehouse where collected components are stored, the components are moved from the storage position to the vicinity of the reading device 352 by an arm installed on the shelf. The RF tag attached to the component is read by the reading device 352, and the component is stored in the item storage 351. Alternatively, a person may be disposed in the neighborhood of the shelf in the warehouse. When the person moves together with the item collection apparatus 2D and the item collection apparatus 2D moves to the position of the shelf at the storage position, the person may hold the component and hold the RF tag of the component over the reading device 352. Thereafter, the components are stored in the item storage 351. The item collection apparatus 2D may include an arm, and the component may be moved by the arm so that the RF tag is read and the component is stored in the item storage 351.

The component identification information read in step S171 is transmitted from the item collection apparatus 2D to the server apparatus 3 (step S172) and is received by the server apparatus 3 (step S173). The server apparatus 3 determines whether the received component identification information corresponds to the component included in the collection information with reference to the instruction information management table (step S174).

When the received component identification information does not correspond to the component included in the collection information (NO in step S174), error information is transmitted from the server apparatus 3 to the instruction apparatus 4A (step S175). The instruction apparatus 4A receives the error information (step S176) and outputs the error information (step S177). The processing of step S177 is also referred to as processing for notifying that a component different from the component included in the collection information has been collected when it is determined that the component identification information read from the RF tag is not the identification information corresponding to the component included in the collection information.

Here, the error information is information for notifying the user that the component collected by the item collection apparatus 2D does not correspond to the component included in the collection information. The output of the error information may be any of display of text, an image, and/or a moving image on the display screen and emission of a sound, light, and/or vibration. As the error information is output by the instruction apparatus 4A, the user can recognize that different components are collected by the item collection apparatus 2D and take measures.

The error information may be transmitted to the item collection apparatus 2D and may be output by the item collection apparatus 2D. When a person boards the item collection apparatus 2D, the person on board can recognize that different components are collected by the item collection apparatus 2D and take measures. That is, the method of notifying that different components have been collected is not particularly limited. Examples of the method include turning on a lamp included in the item collection apparatus 2D or turning on in a specific color, outputting a sound by a speaker included in the item collection apparatus 2D, displaying information by the instruction apparatus 4A, and outputting a sound.

When the received component identification information does not correspond to the component included in the collection information (NO in step S174), the component corresponding to the component identification information may be returned to the storage shelf by using an arm installed in the storage shelf or included in the item collection apparatus 2D.

When the received component identification information corresponds to a component included in the collection information (YES in step S174), the server apparatus 3 stores a change in the status of the instruction information management table of the corresponding component (step S178). For example, when the component 363a is collected and the components 363b and 363c are not collected in step S178, a status of the component 363a in the instruction information management table is "collection completion" and statuses of the components 363b and 363c are "during collection". The status of the product remains in the "during collection" state. The processing of step S178 is also referred to as processing for detecting that the components have been collected by reading the RF tag by the reading device.

When a change in the status of the instruction information management table is stored, the server apparatus 3 determines whether all the components have been collected with reference to the instruction information management table (step S179). Specifically, it is determined whether the statuses of all the components are "collection completion" or whether the statuses of the products are "collection completion". When all the components have not been collected (NO in step S179), the processing after step S169 is executed. When the status of the component 363a in the instruction information management table is "collection completion" and the statuses of the components 363b and 363c are "during collection", the item collection apparatus 2D moves to the position of the component 363b according to the movement route information of the movement route 365b in step S169.

When all the components have been collected (YES in step S179), the item collection apparatus 2D moves to the predetermined position 364 according to the movement route information of the movement route 365d (step S180). The case where all the components have been collected is a state where the components 363a to 363c have been collected, the statuses of the components 363a to 363c in the instruction information management table are "collection completion", and the status of the product is "collection completion". The processing of step S180 is also referred to as processing for controlling the item collection apparatus 2D to move to a predetermined position after the components included in the collection information are collected in the item collection apparatus 2D. The predetermined position can be stored in advance in the server apparatus 3 that specifies the movement route. The predetermined position may be a location where the components are assembled to produce a product, or may be a location where the collected components are loaded on a vehicle for transportation to a production place. The predetermined place may be changed for each product or for each type of product.

When the item collection apparatus 2D arrives at the predetermined position 364, transport completion information, which is information indicating that the item collection apparatus 2D has conveyed all the components to the predetermined position, is transmitted to the server apparatus 3 (step S181). When the transport completion information is received by the server apparatus 3 (step S182), a change in the status of the instruction information management table is stored (step S183). In step S183, the status of the product and the statuses of all the components are changed to "transport completion". The transport completion information can also be said to be movement completion information that is information indicating that the item collection apparatus 2D has moved to the predetermined position 64. The collection processing ends through the processing of steps S161 to S183 described above.

Here, when it is necessary to collect a plurality of same type of components, the component identification information may be transmitted to the server apparatus 3 in step S174 after reading of all the number of RF tags of the same type of components. The server apparatus 3 can determine whether the number of times the component identification information is read corresponds to the number of components included in the collection information with reference to the instruction information management table.

The warehouse 360 may include two or more item collection apparatuses 2D and simultaneously operate two or more item collection apparatuses 2D. The movement route information may specify a movement route that does not overlap with the movement route of the other item collection apparatus 2D so that the item collection apparatus 2D does not collide with the other item collection apparatus 2D. In the case of the same movement route, one item collection apparatus 2D may be temporarily stopped and a movement timing may be different.

The item collection apparatus 2D that receives the collection information and the movement route information are received in step S168 may be an item collection apparatus 2D that has not executed the collection processing, such as the item collection apparatus that waits at the waiting place 361 or the item collection apparatus that has completed transport. That is, the collection information and the movement route information may not be transmitted to the item collection apparatus 2D that executes the processing of steps S168 to S181 and is in the status of "during collection" or "collection completion". That is, after the collection information and the movement route information are transmitted from the server apparatus 3 in step S167, identification information with which the item collection apparatus 2D transmitting the collection information and the movement route information can be identified may be stored in the instruction information management table in association with the type of product or the like. With a change in the status of the product in step S183, the identification information of the item collection apparatus 2D is deleted from the instruction information management table. Alternatively, when the collection information and the movement route information are transmitted to the item collection apparatus 2D executing the processing of steps S168 to S181, the collection information and the movement route information may be stored in the item collection apparatus 2D, and the processing of steps S169 to S181 may be newly executed after end of the collection and transport during processing.

When the types and quantities of components included in the collection information received in step S168 exceed an amount that can be collected by one item collection apparatus 2D, the collection information may be transmitted to two or more item collection apparatuses 2D in step S168. In the server apparatus 3, it is possible to determine whether the components included in the collection information can be transported at a time to the item collection apparatus 2D by registering the sizes of the components in advance and determining that the components cannot be placed at a time at which a total volume of the components to be collected occupies a certain range or more of the item storage 351 (for example, 80% or more). Alternatively, when weights of the components are registered in advance and a total mass of the components to be collected exceeds a maximum loading amount of the item collection apparatus 2D, it can be determined that the components cannot be transported at one time. When it is determined that the components cannot be collected at one time, the server apparatus 3 can divide the collection information into a plurality of pieces of information so that the collected components are within a certain range (for example, within 70%) of the item storage 351 or less than the maximum loading amount.

Alternatively, even when all the components have not been collected (NO in step S179), the processing of step S180 may be executed to take out the collected components at a predetermined position. In this case, transport completion information of the components is transmitted through an operation input to the item collection apparatus 2D, and the status of the removed component becomes "transport completion" in step S183. Then, the processing of steps S169 to S183 may be repeated until the statuses of all the components included in the collection information become "transport completed".

In the above description, steps S163 to S167, S173 to S175, S178, S179, S182, and S183 are executed in the server apparatus 3, but may be executed in the instruction apparatus 4A. In this case, the processing of steps S162 and S163 and S175 and S176 can be omitted. The processing of the server apparatus 3 may be executed in the item collection apparatus 2D. In this case, the processing of steps S167 and S168 and steps S172 and S173 can be omitted. When the processing is executed by the instruction apparatus 4A or the item collection apparatus 2D instead of the server apparatus 3, various types of information (for example, a product master table, an instruction information management table, map information, storage positions of the components, and the like) necessary for executing the processing are stored in advance in the instruction apparatus 4A or the item collection apparatus 2D.

In the above description, the case where the components of a product including a plurality of components are collected and transported has been described. However, a case where the component of a product including only one component is collected and transported can be similarly executed.

Further, the system 10 according to the fifth embodiment of the present invention can also be applied to a case where one or a plurality of commodities are collected and transported when the commodities are ordered in a warehouse such as a retail store where the commodities are stored. From step S161 to step S183, the above description can be referred to within a necessary range. In this case, in step S161, types and quantities of the commodities are selected instead of products. In step S164, order identification information with which an order can be identified, the types and quantities of the commodities, an instruction time at which the instruction information has been received, and the statuses of the commodities are stored in the instruction information management table in association. In step S165, the position of selected commodities is specified. The collection information includes the types and quantities of commodities to be collected. In step S179, it is determined whether all the commodities included in the collection information have been collected.

In the above description, the case where components of a product including a plurality of components are collected and transported has been described, but the present invention can also be applied to a case where a package is collected and transported in a warehouse such as a delivery center where the package is stored. From step S161 to step S183, the above description can be referred to within a necessary range.

In this case, in step S161, a package to be collected is selected instead of the product. Information of a destination is stored in association with the package. For example, when a predetermined city, town, or village is input, a package associated with an address of the city, the town, or the village may be selected. In step S164, the package identification information with which the package is identified, an instruction time at which the instruction information has been received and a status of the package are stored in the instruction information management table in association. In step S165, the position of the selected package is specified. The collection information includes a package identification information to be collected. In step S179, it is determined whether all the packages included in the collection information have been collected. The collected package is loaded on a cargo stand such as a truck from the item collection apparatus 2D moved to a predetermined position in step S180.

In the system 10 according to the fifth embodiment of the present invention, during the movement of the item collection apparatus 2D (steps S169, S170, and S180), the distance calculation processing for calculating a distance between the first device 1 to be described below and the item collection apparatus 2D, the position specifying processing for specifying the position of the item collection apparatus 2D, and the determination processing for determining whether the position of the item collection apparatus 2D matches the movement route information are executed. Although any frequency at which the processing is executed can be set, the processing may be executed once every several seconds, for example, in order to accurately manage the movement of the item collection apparatus 2D.

### [Distance Calculation Processing]

Next, distance calculation processing according to the fifth embodiment of the present invention will be described. The distance calculation processing is processing for calculating a distance between each of the plurality of first devices 1 and the second device 2a based on a propagation time of information or a signal between each of the plurality of first devices 1 and the second device 2a. Since the second device 2a is included in the item collection apparatus 2D, it can be said that the processing is processing for calculating the distance between each of the plurality of first devices and the item collection apparatus 2D. In the distance calculation processing according to the fifth embodiment, the same processing as the distance calculation processing according to the first embodiment (Fig. 6) can be applied to the item collection apparatus 2D instead of the work vehicle as the mobile object 2. Therefore, repeated description will be omitted.

### [Position Specifying Processing]

Next, position specifying processing according to the fifth embodiment of the present invention will be described. The position specifying processing is processing for specifying the position of the second device based on the distance between each of the plurality of first devices 1 and the second device 2a calculated in the distance calculation processing. Since the second device 2a is included in the item collection apparatus 2D, it can be said that the processing is processing for specifying the position of the item collection apparatus 2D. In the position specifying processing according to the fifth embodiment, the same processing as the position specifying processing according to the first embodiment (Fig. 7) can be applied to the item collection apparatus 2D instead of the work vehicle as the mobile object 2. Therefore, repeated description will be omitted. position specifying processing

The system 10 according to the fifth embodiment of the present invention preferably includes at least three first devices 1. When the first device 1 and the second device 2a included in the item collection apparatus 2D are installed in the same floor in the warehouse at the same height (for example, the same altitude or the same Z coordinate), the position of the second device 2a can be specified by at least three first devices 1. When the first device 1 and the second device 2a included in the item collection apparatus 2D are not installed at the same height, the position of the second device 2a can be specified by at least four first devices.

### [Determination Processing]

Next, determination processing according to the fifth embodiment of the present invention will be described. The determination processing is processing for determining whether the position of the second device 2a specified in the position specifying processing matches the movement route information regarding the movement route of the item collection apparatus 2D. In the determination processing according to the fifth embodiment, the same processing as the determination processing according to the first embodiment (Fig. 8) can be applied to the item collection apparatus 2D instead of the work vehicle serving as the mobile object 2. Therefore, repeated description will be omitted. However, in the fifth embodiment, in addition to the matters described in the first embodiment, the following embodiments can be added or replaced.

In the fifth embodiment of the present invention, the predetermined distance used in step S52 can be appropriately set according to the area of the warehouse and the size of the item collection apparatus 2D.

In the fifth embodiment of the present invention, the movement route information can be modified similarly to the processing for specifying the movement route of the item collection apparatus 2D. Specifically, the movement route can be specified based on the departure point and the target point using the specified position of the second device 2a as the departure point. For example, the movement route may be specified so that the movement distance is minimized, the movement route may be specified so that obstacles are avoided according to map information of the warehouse, or the movement route may be specified so that the movement route moves through a movable region set in the map information of the warehouse.

In the fifth embodiment of the present invention, the RF tag in which the component identification information is stored is attached to the item as described above, but an active RF tag that has a built-in power supply and has the same function as the first device 1 may be used. That is, the first device and the RF tag directly communicate with each other, and the position of the item in the warehouse can be specified through processing similar to the distance calculation processing and the position specifying processing. In step S166, the movement route may be specified using the positional information of the item specified by the above processing.

According to the invention of the fifth embodiment, since the item collection apparatus is controlled to move to the position at which the item included in the collection information transmitted by the input to the instruction apparatus is stored, a burden on the item collection work can be reduced. It is possible to make a contribution to labor saving related to collection work. According to the invention of the fifth embodiment, since the item collection apparatus is controlled to move to the predetermined position after the item included in the collection information is collected in the item collection apparatus, a burden on the transport work of the item can be reduced. It is possible to make a contribution to labor saving related to transportation work.

According to the invention of the fifth embodiment, since it is detected that an item has been collected by reading the RF tag by the reading device, it is possible to confirm whether the item to be collected has been collected. According to the invention of the fifth embodiment, when it is determined that the identification information of the item read from the RF tag is not the identification information corresponding to the item included in the collection information, it is notified that an item different from the item included in the collection information has been collected. Therefore, the user can become aware that a different item has been collected and take measures.

### [Sixth Embodiment]

In a sixth embodiment, as an example, a case where the mobile object is applied to an electronic information creation apparatus or an unmanned aircraft including the electronic information creation apparatus will be described. In the sixth embodiment, a case where an electronic information creation apparatus or an unmanned aircraft is used instead of the work vehicle in the first embodiment and various types of processing are executed will be described.

### [Configuration of System]

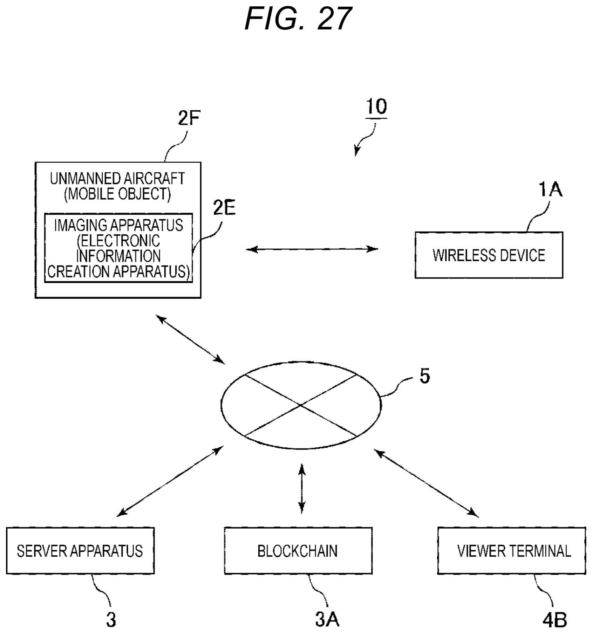

Fig. 27 is a block diagram illustrating a configuration of a system according to the sixth embodiment of the present invention. In the sixth embodiment, the system 10 includes an electronic information creation apparatus. In Fig. 27, the electronic information creation apparatus is an imaging apparatus 2E and is included in an unmanned aircraft 2F that is the mobile object 2.

As illustrated in Fig. 27, the system 10 may include at least one wireless device 1A. The at least one wireless device 1A and the imaging apparatus 2E may be directly connected to each other through wireless communication. When the system 10 includes a plurality of wireless devices 1A, each of the plurality of wireless devices 1A and the imaging apparatus 2E may be directly connected to each other through wireless communication.

As illustrated in Fig. 27, the system 10 may include a server apparatus 3. The imaging apparatus 2E, the server apparatus 3, a blockchain 3A, and a viewer terminal 4B may be communicably connected to each other via a communication network 5. Although not illustrated, the wireless device 1A may also be communicably connected to the imaging apparatus 2E, the server apparatus 3, the blockchain 3A, and the viewer terminal 4B via the communication network 5.

The server apparatus 3 may be distributed to a plurality of computer apparatuses to function. For example, instead of the server apparatus 3, a distributed ledger technique such as a blockchain may be used. In this case, a blockchain that executes a function instead of the server apparatus 3 may be the same as the blockchain 3A or may be different from the blockchain 3A.

The blockchain 3A is not particularly limited, and a known blockchain can be used. The blockchain 3A may be a public blockchain or a private blockchain.

Although not illustrated, the system 10 may include a manager terminal operated by a manager who manages the system 10. The manager terminal may be communicably connected to the imaging apparatus 2E, the wireless device 1A, the server apparatus 3, the blockchain 3A, and the viewer terminal 4B via the communication network 5.

### [Electronic Information Creation Apparatus]

The electronic information creation apparatus is not particularly limited as long as the electronic information creation apparatus is an apparatus capable of creating electronic information. The electronic information created by the electronic information creation apparatus may be digital data selected from a group formed by images, sounds, text, symbols, and numerical values. More specifically, the electronic information may be commercial transaction information such as banking, settlement, or contract; text information, symbol information, or numerical information such as an e-mail, SNS posting, or an answer of an online test; ticket reservation information such as an airline ticket, a boarding ticket, an entrance ticket, or a parking ticket; presence or absence information such as presence or absence of attendance, coming to work, participation, or presence or absence of an object; image information of a moving image, a still image, or the like; sound information such as music, call voice, or conference voice; numerical information acquired by sensor; or the like. In the sixth embodiment of the present invention, the electronic information and the digital data may not include time information and/or positional information.

The electronic information creation apparatus is, for example, an imaging apparatus, a recording apparatus, a computer, a document creation apparatus, a sensor, a computer apparatus, a server apparatus, or the like. The electronic information creation apparatus may be fixed at a predetermined location, may be provided in the mobile object 2, or may be the mobile object 2 in which the electronic information creation apparatus itself moves. For example, the electronic information creation apparatus may be included in a mobile object other than the unmanned aircraft 2F or may be carried by a human. The electronic information creation apparatus may be a user terminal carried or possessed by the user. For example, in the sixth embodiment, the viewer terminal 4B and the manager terminal may function as the electronic information creation apparatus. As the mobile object 2, the mobile object described in the first embodiment can be applied as long as there is no inconsistency.

In the following, as an example of the electronic information creation apparatus, a case where the electronic information creation apparatus is the imaging apparatus 2E and is included in the unmanned aircraft 2F that is the mobile object 2 will be described as an example. The imaging apparatus 2E is an apparatus that creates an image as electronic information.

### [Imaging Apparatus and Unmanned Aircraft]

Next, an imaging apparatus according to the sixth embodiment of the present invention will be described. As a function and a hardware configuration of the imaging apparatus according to the sixth embodiment, the function and the hardware configuration (Fig. 3) of the mobile object 2 according to the first embodiment can be applied within a necessary range by replacing the mobile object 2 with the imaging apparatus 2E. Therefore, repeated description will be omitted. However, in the sixth embodiment, in addition to the matters described in the first embodiment, the following embodiments can be added or replaced.

In the sixth embodiment of the present invention, a time clocked by the clock 22a is controlled by the control unit 21 such that the time is transmitted to the wireless device 1A via the RF chip 22. The phase detector 22b detects a phase of a carrier wave included in the information received from the wireless device 1A and detects a phase of a signal oscillated by the oscillator 23 of the imaging apparatus 2E.

In the sixth embodiment of the present invention, the imaging unit 29 images a landscape. The imaging unit 29 may be controlled to start, stop, and/or end imaging in response to an input from the input unit or may be controlled to start, stop, and/or end imaging in response to an instruction from another computer apparatus.

It can also be said that the imaging apparatus 2E in the sixth embodiment includes the second device 2a according to the first embodiment.

The unmanned aircraft 2F is not particularly limited as long as the unmanned aircraft 2F includes a control unit and a sensor unit. A known unmanned aircraft 2F can be used. The unmanned aircraft 2F may be a drone or the like. The shape of the unmanned aircraft 2F may be a rotorcraft type or a fixed-wing type of aircraft. Further, the unmanned aircraft 2F may be controlled so that the unmanned aircraft flies autonomously based on predetermined flight route information or the like or may be controlled so that the unmanned aircraft is operated by a pilot wirelessly or the like.

The control unit of the unmanned aircraft 2F includes a CPU, a RAM, and a ROM and controls flight of the unmanned aircraft 2F based on information obtained from the sensor unit, flight route information, a piloting instruction from another computer apparatus, and/or the like. The control unit of the unmanned aircraft 2F may be provided separately from the control unit 21 of the imaging apparatus 2E or may also serve as the control unit 21 of the imaging apparatus 2E. In addition to the control unit 21, at least one or more of the hardware configurations included in the imaging apparatus 2E can also be used as the hardware configuration of the unmanned aircraft 2F.

The sensor unit may include a gyro sensor, an acceleration sensor, an atmospheric pressure sensor, an ultrasonic sensor, a magnetic orientation sensor, a global navigation satellite system (GNSS), an infrared sensor, or a visible light sensor. It is possible to mainly detect an inclination, that is, an attitude of the unmanned aircraft 2F by a gyro sensor, a speed of the unmanned aircraft 2F by an acceleration sensor, an altitude of the unmanned aircraft 2F by an atmospheric pressure sensor and an ultrasonic sensor, a direction in which the unmanned aircraft 2F is directed by a magnetic azimuth sensor, latitude and longitude of the unmanned aircraft 2F by a GNSS, and obstacles around the unmanned aircraft 2F by an infrared sensor, a visible light sensor, or an ultrasonic sensor.

The unmanned aircraft 2F may be communicably connected to the imaging apparatus 2E, the wireless device 1A, the server apparatus 3, the blockchain 3A, the viewer terminal 4B, the manager terminal, another computer apparatus, and the like via a communication network.

### [Wireless Device]

Next, the wireless device according to the sixth embodiment will be described. As a function and a hardware configuration of the wireless device 1A according to the sixth embodiment, the function and the hardware configuration (Fig. 2) of the first device 1 according to the first embodiment can be applied within a necessary range. Therefore, repeated description may be omitted. The wireless device 1A is an example of the first device 1.

In the sixth embodiment of the present invention, a time clocked by the clock 12a is controlled by the control unit 11 such that the time is transmitted to the imaging apparatus 2E via the RF chip 12. The phase detector 12b detects a phase of a carrier wave included in the information received from the imaging apparatus 2E and detects a phase of a signal oscillated by the oscillator 13 in the wireless device 1A.

A place at which the wireless device 1A is not particularly limited, but the wireless device 1A can be installed, for example, in a power transmission tower supporting an overhead electric wire path, a utility pole, or the like.

### [Server Apparatus]

Next, a hardware configuration of the server apparatus 3 according to the sixth embodiment will be described. As a hardware configuration of the server apparatus 3 according to the sixth embodiment, the hardware configuration (Fig. 4) of the server apparatus 3 according to the first embodiment can be applied within a necessary range. Therefore, repeated description will be omitted. In the sixth embodiment, the control unit 31 reads a program and data from the RAM 32, and executes program execution processing based on information or the like received from the imaging apparatus 2E, the unmanned aircraft 2F, the wireless device 1A, the server apparatus 3, the blockchain 3A, the viewer terminal 4B, the manager terminal, or the like.

### [Viewer Terminal]

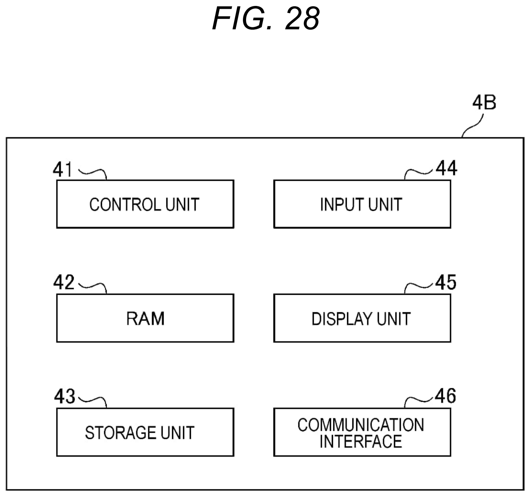

Fig. 28 is a block diagram illustrating a hardware configuration of the viewer terminal according to the sixth embodiment of the present invention. The viewer terminal 4B includes at least a control unit 41, a RAM 42, a storage unit 43, an input unit 44, a display unit 45, and a communication interface 46 that are connected via an internal bus.

The control unit 41 includes a CPU and a ROM. The control unit 41 executes a program stored in the storage unit 43 and controls the viewer terminal 4B. The RAM 42 is a work area of the control unit 41. The storage unit 43 is a storage area where programs and data are stored. That is, the storage unit 43 functions as a recording medium storing a program. The control unit 41 executes arithmetic processing based on the program and data read from the RAM 42 and the data input by the input unit 44.

The display unit 45 has a display screen. The control unit 41 outputs a video signal for displaying an image on a display screen according to a result of the arithmetic processing. Here, the display screen of the display unit 45 may be a touch panel including a touch sensor. In this case, the touch panel functions as the input unit 44.

The communication interface 46 can be connected to the communication network 5 in a wireless or wired manner and can transmit and receive data to and from the imaging apparatus 2E, the unmanned aircraft 2F, the wireless device 1A, the server apparatus 3, the blockchain 3A, a manager terminal, another computer apparatus, or the like via the communication network 5. Data received via the communication interface 46 is loaded into the RAM 42, and arithmetic processing is executed by the control unit 41.

### [Manager Terminal]

When the system 10 includes a manager terminal, the description of the hardware configuration of the viewer terminal can be appropriately adopted as the hardware configuration of the manager terminal.

### [Imaging Process]

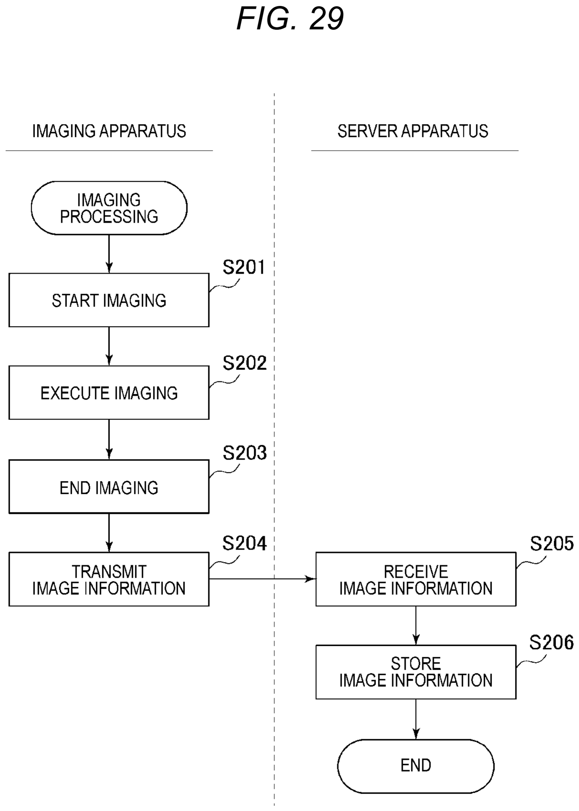

Hereinafter, a mode in which, in the system 10 according to the sixth embodiment of the present invention, imaging is executed by the imaging apparatus 2E included in the unmanned aircraft 2F, and an NFT is issued in association with an image captured by the imaging apparatus 2E and a position at which the image is captured will be described. Fig. 29 is a flowchart illustrating imaging processing according to the sixth embodiment of the present invention.

First, the imaging apparatus 2E starts imaging (step S201). Then, the imaging apparatus 2E executes the imaging (step S202). The imaging apparatus 2E ends the imaging (step S203). Image information regarding the captured image is transmitted from the imaging apparatus 2E to the server apparatus 3 (step S204). The server apparatus 3 receives the transmitted image information (step S205). In the server apparatus 3, the received image information is stored (step S206) and the imaging processing ends.

The start and end of the imaging in steps S201 and S203 may be executed in response to an input from the input unit included in the imaging apparatus 2E, may be executed in response to an instruction from the manager terminal or the like, or may be executed under the condition that the imaging apparatus 2E has reached a predetermined point and/or time.

The image information transmitted in step S204 includes the captured image, the number of pixels of the captured image, a model of the imaging apparatus 2E that has captured the image, and a setting (for example, an aperture, an f-number, and ISO sensitivity) of the imaging condition of the imaging apparatus 2E when capturing the image. The image may be a moving image or a still image.

In step S204, positional information regarding the position of the imaging apparatus 2E when capturing the image is transmitted to the server apparatus 3 together with image information regarding the captured image. In step S204, time information regarding a time at which the image is captured may be transmitted to the server apparatus 3 together with the image information regarding the captured image.

The position of the imaging apparatus 2E when capturing an image may be represented by latitude, longitude, altitude, and the like. When the image is a still image, the position of the imaging apparatus 2E when capturing the image may be specified. When the image is a moving image, it is preferable to specify the position of the imaging apparatus 2E at predetermined time intervals while the image is captured. The position of the imaging apparatus 2E may be specified, for example, every 1/240 seconds, every 1/120 seconds, or every 1/60 seconds. When the image is a moving image, the positional information may be associated with each of still images forming a moving image.

A method of specifying a position of the imaging apparatus 2E is not particularly limited, and can be appropriately designed. For example, a position (for example, latitude, longitude, and altitude) of the unmanned aircraft 2F measured by the unmanned aircraft 2F may be specified as the position of the imaging apparatus 2E. The unmanned aircraft 2F can measure the latitude, longitude, and altitude of the unmanned aircraft 2F based on information detected by an atmospheric pressure sensor, an ultrasonic sensor, and/or the GNSS.

Alternatively, for example, the position of the imaging apparatus 2E may be specified based on a distance between the wireless device 1A, which is installed at a predetermined location, and the imaging apparatus 2E. The location at which the wireless device 1A is installed may be, for example, a power transmission tower or a utility pole. The position at which the wireless device 1A is installed (for example, latitude, longitude, and altitude) is preferably stored in advance in any apparatus included in the system 10. Details of a method of specifying the position of the imaging apparatus 2E based on the distance between the wireless device 1A and the imaging apparatus 2E will be described below.

A time at which an image is captured may be a time clocked by the clock 22a included in the imaging apparatus 2E when the imaging apparatus 2E captures an image. The clock 22a included in the imaging apparatus 2E, that is, an internal clock of the imaging apparatus 2E, preferably keeps a standard time. As will be described below, the internal clock of the imaging apparatus 2E may execute time synchronization with the internal clock of the wireless device 1A to keep the standard time.

When the image is a still image, a time at which the image is captured may be associated with the image as time information. When the image is a moving image, a time at which the still image is captured may be associated with each of the still images forming a moving image as time information.

In step S206, the image information, the positional information, the time information, and the like are stored in the storage unit 33 in association.

In the above description, a mode has been described in which the image information is transmitted from the imaging apparatus 2E to the server apparatus 3 after the imaging of the image is completed. However, for example, the image information may be transmitted from the imaging apparatus 2E to the server apparatus 3 in real time while the imaging of the moving image is executed. Then, the server apparatus 3 may store the transmitted image information.

### [Distance Calculation Processing]

Next, details of a method of specifying a position of the imaging apparatus 2E (distance calculation processing) based on the distance between the wireless device 1A and the imaging apparatus 2E will be described. A distance between the wireless device 1A and the imaging apparatus 2E can be calculated based on a propagation time of information or a signal between the wireless device 1A and the imaging apparatus 2E.

Since the same processing as the distance calculation processing (Fig. 6) according to the first embodiment can be applied to the position specifying processing in the sixth embodiment, repeated description will be omitted. In the sixth embodiment, when the distance calculation processing illustrated in Fig. 6 is applied, the wireless device 1A is used instead of the first device 1, and the imaging apparatus 2E is used instead of the second device 2a. However, in the sixth embodiment, in addition to the matters described in the first embodiment, the following embodiments can be added or replaced.

In the sixth embodiment of the present invention, the distance calculation processing can be executed at predetermined time intervals. The distance calculation processing may be executed, for example, every 1/240 seconds, every 1/120 seconds, or every 1/60 seconds. The distance calculation processing may be executed while the unmanned aircraft 2F is flying or may be executed while the imaging apparatus 2E executes imaging.

### [Position Specifying Processing]

Next, a method of specifying a position of the imaging apparatus 2E (position specifying processing) based on a distance between the wireless device 1A and the imaging apparatus 2E will be described. A method of specifying the position of the imaging apparatus 2E based on the distance between the wireless device 1A and the imaging apparatus 2E is not particularly limited, and can be appropriately designed. For example, when a plurality of wireless devices 1A are provided, the position of the imaging apparatus 2E may be specified based on a distance between one imaging apparatus 2E and each of the plurality of wireless devices 1A.

Since the same processing as the position specifying processing (Fig. 7) according to the first embodiment can be applied to the position specifying processing according to the sixth embodiment, repeated description will be omitted. In the sixth embodiment, when the position specifying processing illustrated in Fig. 7 is applied, the wireless device 1A is used instead of the first device 1, and the imaging apparatus 2E is used instead of the second device 2a. However, in the sixth embodiment, in addition to the matters described in the first embodiment, the following embodiments can be added or replaced.

In the sixth embodiment of the present invention, the position of the imaging apparatus 2E may be specified based on the latitude, longitude, and altitude of the unmanned aircraft 2F measured by the unmanned aircraft 2F and the distance between the wireless device 1A and the imaging apparatus 2E.

In the sixth embodiment of the present invention, for example, among the latitude, longitude, and altitude measured by the unmanned aircraft 2F, the measured latitude and longitude may be specified as they are, and the altitude may be specified based on the distance between the wireless device 1A and the imaging apparatus 2E calculated in step S39. In this case, altitude of an intersection between a straight line passing through the measured latitude and longitude and parallel to the gravity direction and a sphere centering on the wireless device 1A and having a radius of the distance between the wireless device 1A and the imaging apparatus 2E may be specified as altitude of the imaging apparatus 2E. In this case, the number of pieces of data of the distance between the wireless device 1A and the imaging apparatus 2E necessary for specifying the position is 1.

When there are two intersections of a straight line passing through the latitude and longitude measured by the unmanned aircraft 2F and parallel to the gravity direction and a sphere centering on the wireless device 1A and having a radius of the distance between the wireless device 1A and the imaging apparatus 2E, altitude of the intersection close to the altitude measured by the unmanned aircraft 2F among the two intersections may be specified as the altitude of the imaging apparatus 2E. Alternatively, when the altitude of any one of the two intersections is lower than the ground surface, the altitude of the intersection where the altitude is higher than the ground surface may be specified as the altitude of the imaging apparatus 2E. When there is an error in the latitude and/or longitude measured by the unmanned aircraft 2F and/or the distance between the wireless device 1A and the imaging apparatus 2E calculated in step S39, there is a possibility of two intersections being located.

In the sixth embodiment of the present invention, for example, when the number of pieces of data of the distance between the wireless device 1A and the imaging apparatus 2E is two or more, measured latitude and longitude may be specified as they are among the latitude, the longitude, and the altitude measured by the unmanned aircraft 2F, and the altitude may be specified based on the calculated data of the distance between two or more wireless devices 1A and the imaging apparatus 2E. In this case, altitude of an intersection between a straight line passing through the latitude and longitude measured by the unmanned aircraft 2F and parallel to the direction of gravity and two or more spheres each having the wireless device 1A as the center and a distance between each wireless device 1Aand the imaging apparatus 2E as a radius may be specified as the altitude of the imaging apparatus 2E.

In the sixth embodiment of the present invention, a position of the imaging apparatus 2E is first specified in the imaging apparatus 2E (step S41). Then, in the imaging apparatus 2E, the specified position of the imaging apparatus 2E is stored (step S42), and the position specifying processing ends.

The position of the imaging apparatus 2E may be specified in step S41 according to the method as described above.

When the distances between the plurality of wireless devices 1A and the imaging apparatus 2E are used and a position of the imaging apparatus 2E is specified, the times at which the respective distances are acquired are preferably synchronized. For example, the times at which the propagation time of the information or the signal between the plurality of wireless devices 1A and the imaging apparatus 2E is measured are preferably the same time or close times.

Further, when the position of the imaging apparatus 2E is specified and the distance between the wireless device 1A and the imaging apparatus 2E and the position of the unmanned aircraft 2F are used, it is preferable to synchronize the time at which the distance between the wireless device 1A and the imaging apparatus 2E is acquired with the time at which the position of the unmanned aircraft 2F is measured. For example, the time at which the propagation time of the information or the signal between the wireless device 1A and the imaging apparatus 2E is measured is preferably the same time as or close to the time at which the latitude, the longitude, and the altitude of the unmanned aircraft 2F are measured.

Here, the close times are not particularly limited, but are preferably times within a range of a predetermined time from time 1. By using the distance and/or the position calculated at the same time or the close times, a more accurate position at the time can be specified.

In step S42, the time at which the position of the imaging apparatus 2E is specified, the time at which the distance used to specify the position is calculated, the identification information of the wireless device 1A, the position of the wireless device 1A, and the like may be stored in the storage unit 25 of the imaging apparatus 2E in association with the position of the imaging apparatus 2E.

As described above, the positional information regarding the position of the imaging apparatus 2E stored in the storage unit 25 of the imaging apparatus 2E is associated with the image information regarding the image captured by the imaging apparatus 2E, and is stored in the server apparatus 3 in step S206 of the imaging processing.

### [Viewing Process]

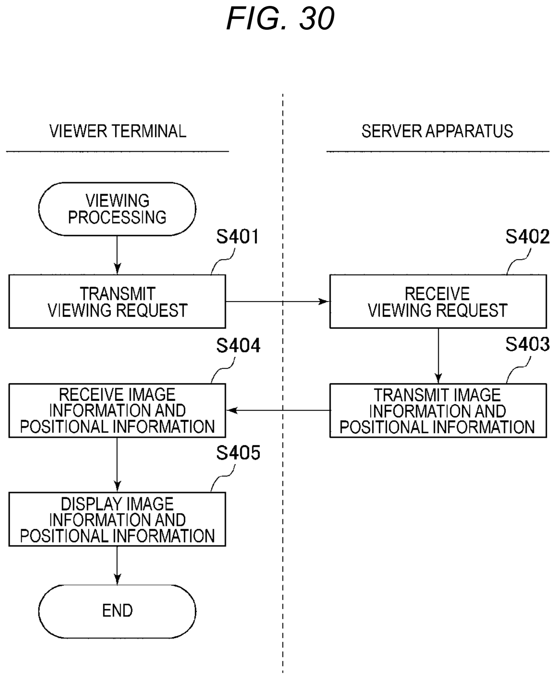

The image information and the positional information stored in the server apparatus 3 may be viewable in the viewer terminal 4B. That is, the server apparatus 3 may control such that the image information and the positional information can be viewed by the viewer terminal 4B. Fig. 30 is a flowchart illustrating viewing processing according to the sixth embodiment of the present invention.

First, a viewing request for making a request for viewing of the image information is transmitted from the viewer terminal 4B to the server apparatus 3 (step S401). The server apparatus 3 receives the transmitted viewing request (step S402). Image information and positional information corresponding to the image information are transmitted from the server apparatus 3 to the viewer terminal 4B (step S403). The viewer terminal 4B receives the transmitted image information and the positional information (step S404). In the viewer terminal 4B, the received image information and positional information are displayed (step S405), and the viewing processing ends.

In step S401, a viewing request for the image selected by the viewer may be transmitted. For example, a viewer may access a website for viewing a captured image by the viewer terminal 4B, select an image to be viewed from viewable images displayed on the website, and transmit a viewing request for the selected image.

In step S403, the image information regarding the image corresponding to the received viewing request and the positional information corresponding to the image information may be transmitted. Further, in step S403, time information regarding the time at which the image corresponding to the received viewing request is captured may be transmitted to the viewer terminal 4B together with the image information and the positional information.

When the time information is transmitted in step S403, the time information can be displayed together with the image information and the positional information in step S405.

When the image information is transmitted from the imaging apparatus 2E to the server apparatus 3 in real time and is stored in the server apparatus 3 while the capturing of the moving image, it may be possible to view the captured image in real time in the viewer terminal 4B.

### [NFT Issuing Processing]

The system 10 according to the sixth embodiment of the present invention can issue an NFT in association with the image information and the positional information stored in the server apparatus 3. That is, the server apparatus 3 can make a request for issuing the NFT in association with the image information and the positional information.

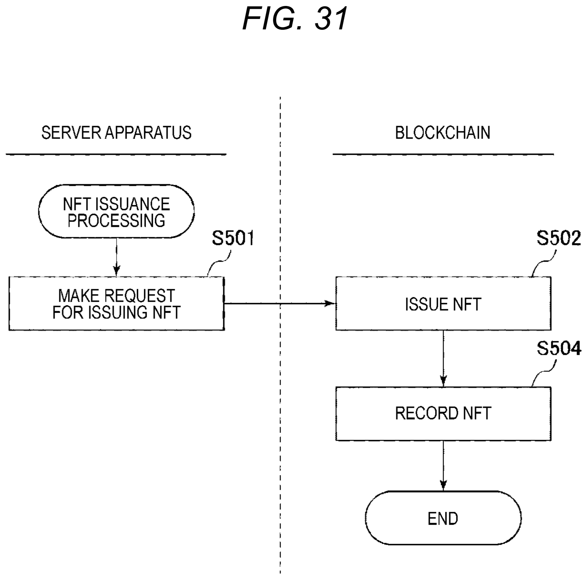

Fig. 31 is a flowchart illustrating NFT issuance processing according to the sixth embodiment of the present invention.

First, in the server apparatus 3, an issuance request for requesting issuance of an NFT is made (step S501). Then, the NFT is issued in the blockchain 3A (step S502). In the blockchain 3A, the NFT is recorded (step S503), and the NFT issuance processing ends.

In step S501, the server apparatus 3 makes a request for issuing the NFT in association with the image information regarding the captured image and the positional information regarding the position of the imaging apparatus 2E when the image is captured. At this time, the server apparatus 3 may also make a request for issuing the NFT in association with a right holder regarding the real estate corresponding to the position of the imaging apparatus 2E when capturing the image and/or the position of the imaging target in the imaged landscape. The case where "association with the right holder of the real estate" also includes "association with an account of the right holder of the real estate".

Here, the "right holder of real estate" refers to a person who has an ownership right of real estate or a person who has a land lease right of real estate. The land lease right includes a rental right and a surface right. The surface right includes an aerial right and an underground right. The person who has a land lease right of real estate includes a person who rents real estate and a person who rents real estate. The right holder of real estate may have a mortgage of the real estate.

The "real estate corresponding to the position of the imaging apparatus 2E when capturing an image" refers to a land or a building of a location where the imaging apparatus 2E is located when capturing an image. When the imaging apparatus 2E is located in the sky, the real estate may be a land or a building in a location where the latitude and longitude of the imaging apparatus 2E are located. The "real estate corresponding to a position of an imaging target in the imaged landscape" refers to a land or a building in a location where the imaging target is located in the imaged landscape.

In step S501, the server apparatus 3 may make a request for issuing an NFT in association with time information regarding a time at which an image is captured, information regarding real estate corresponding to the position of the imaging apparatus 2E when the image is captured and/or the position of the imaging target in the imaged landscape, and/or information regarding the landscape.

The request for issuing an NFT may be made, for example, by using, as work information, image information regarding a captured image, positional information regarding a position of the imaging apparatus 2E when capturing the image, time information regarding a time when capturing the image, information regarding real estate corresponding to a position of the imaging apparatus 2E when capturing the image and/or a position of an imaging target in an imaged landscape, and/or information regarding the scene, and using an account of a right holder of real estate corresponding to the position of the imaging apparatus 2E when capturing the image and/or the position of the imaging target in the imaged landscape to make a request for issuing the NFT. By making the request for issuing the NFT in this way, the NFT can be issued in association with the work information and the right holder regarding the real estate.

The request for issuing the NFT may be automatically made when the image capturing ends and the image is stored in the server apparatus 3, may be automatically made when a predetermined time is reached, or may be automatically made when another predetermined condition is satisfied.

Alternatively, the request for issuing the NFT may be made according to an operation input in the manager terminal of the system 10. For example, the manager terminal of the system 10 may access a web site or the like that accepts a request for issuing an NFT, inputting, as the work information, image information regarding a captured image, positional information regarding the position of the imaging apparatus 2E when capturing the image, time information regarding the time when capturing the image, information regarding real estate corresponding to the position of the imaging apparatus 2E when capturing the image and/or the position of an imaging target in the imaged landscape, and/or information regarding the landscape on the web site or the like, and may use an account of a right holder of real estate corresponding to the position of the imaging apparatus 2E when capturing the image and/or the position of the imaging target in the imaged landscape to make the request for issuing the NFT.

The NFT may be issued by an NFT manager who manages the issuance of the NFT. The NFT manager may manage, for example, a digital work storage server, a metadata recording server, the blockchain 3A, and the like. Here, the digital work storage server may store a digital work associated with the NFT and information regarding the digital work as work information. The metadata recording server may record metadata including work information, a storage location of a digital work, and information regarding an NFT to be issued. The blockchain 3A may record metadata and index data related to a token. In this case, the work information can be said to be associated with the NFT in a state where the work information is converted into metadata. The work information may be associated with data associated with the NFT as long as the work information can follow the association from the NFT.

Alternatively, for example, the work information may be recorded on the blockchain 3A in association with the NFT.

Here, it is assumed that the work information includes image information regarding a captured image, positional information regarding the position of the imaging apparatus 2E when capturing the image, information regarding a time when capturing the image, information regarding real estate corresponding to the position of the imaging apparatus 2E when capturing the image and/or the position of an imaging target in the imaged landscape, and/or information regarding the landscape.

The information regarding the right holder regarding the real estate corresponding to the position of the imaging apparatus 2E when capturing the image and/or the position of the imaging target in the imaged landscape may be recorded on the blockchain 3A as information regarding an owner of the NFT.

The NFT issued in this way can be distributed in an NFT market. For example, when an owner of a certain land thinks to sell the land as a construction site of a high-rise apartment, it is possible to search for a person who wants to purchase the land by issuing an NFT in association with an image aerially captured from above the land and information regarding a position at which the aerial imaging has been executed, and distributing the NFT.

As described above, the system 10 including an imaging apparatus includes the imager that images landscape, a position specifier that specifies the position of the imaging apparatus, and an NFT issuance requestor that makes a request for issuing a non-fungible token (NFT) in association with image information regarding the image captured by the imager and the positional information regarding the position of the imaging apparatus when capturing the image, the positional information being specified by the position specifier. Thus, it is possible to provide a novel system issuing the NFT.

In this way, since the imaging apparatus is included in a mobile object, it is possible to issue the NFT associated with the image captured from the mobile object. Since the imaging apparatus is included in an unmanned aircraft, it is possible to issue an NFT associated with an image captured from above.

In this way, the system 10 includes a viewing enablementer that controls the captured image information and the positional information so that the image information and the positional information can be viewed on the viewer terminal. Thus, the viewer can view the captured image and the position at which the image is captured.

In this way, the NFT issuance requestor makes a request for issuing the NFT in association with the right holder of the real estate corresponding to the position of the imaging apparatus and/or the position of an imaging target in the landscape when capturing the image. Thus, the NFT can be issued in association with the right holder of the real estate at the imaged position and/or the imaged position.

In this way, the system 10 includes at least one wireless device and includes a distance calculator that calculates a distance between the wireless device and the imaging apparatus based on a propagation time of information or a signal between the wireless device and the imaging apparatus. The position specifier specifies a position of the imaging apparatus based on the distance calculated by the distance calculator. Thus, it is possible to specify the position of the imaging apparatus based on the distance between the wireless device and the imaging apparatus. In this way, since the distance calculator calculates a distance based on a time deviation between an internal clock included in the wireless device and an internal clock included in the imaging apparatus, the distance between the wireless device and the imaging apparatus can be accurately calculated. Therefore, the position of the imaging apparatus can be accurately specified.

In this way, the system 10 includes a time deviation calculator that calculates a time deviation between the internal clock of the wireless device and the internal clock of the imaging apparatus by transmitting and receiving information or a signal between the wireless device and the imaging apparatus, and a time deviation corrector that corrects a time deviation between the internal clock of the wireless device and the internal clock of the imaging apparatus based on the calculated time deviation. The distance calculator calculates a distance after the time deviation corrector corrects the time deviation, and thus can accurately calculate the distance between the wireless device and the imaging apparatus. Therefore, it is possible to accurately specify the position of the imaging apparatus. The time can be synchronized between the internal clock of the wireless device and the internal clock of the imaging apparatus.

In this way, the system 10 includes the phase deviation calculator that calculates a phase deviation between the internal clock of the wireless device and the internal clock of the imaging apparatus by transmitting and receiving information or a signal between the wireless device and the imaging apparatus, and a phase deviation corrector that corrects a phase deviation between the internal clock of the wireless device and the internal clock of the imaging apparatus based on the calculated phase deviation. The time deviation calculator calculates a time deviation after the phase deviation corrector corrects the phase deviation. Thus, a distance between the wireless device and the imaging apparatus can be calculated more accurately. Therefore, it is possible to more accurately specify the position of the imaging apparatus. It is possible to more accurately synchronize the time between the internal clock included in the wireless device and the internal clock included in the imaging apparatus.

In the above description, the case where the electronic information creation apparatus is the imaging apparatus 2E and creates an image as the electronic information has been described as an example. However, an example in which the electronic information creation apparatus is a user terminal or a server apparatus and creates the commercial transaction information as electronic information will be described. When the electronic information creation apparatus creates the commercial transaction information as electronic information, the distance calculation processing, the position specifying processing, the viewing processing, and/or the NFT issuance processing according to the sixth embodiment are executed using the user terminal or the server apparatus instead of the imaging apparatus and using the commercial transaction information instead of the image information. Therefore, repeated description will be omitted. Here, hereinafter, in addition to the matters described above, the following embodiments can be added or replaced.

The imaging processing is executed as creation processing as follows. The creation processing is processing for creating electronic information. The imaging processing can also be said to be processing for creating image information regarding an image by imaging landscape.

In the creation processing, text or the like related to a commercial transaction is first input in the user terminal. Commercial transaction information including the input text is transmitted from the user terminal to the server apparatus 3. When the commercial transaction information is transmitted from the user terminal, the positional information regarding the position of the user terminal is transmitted to the server apparatus 3 together with the commercial transaction information. The server apparatus 3 receives the transmitted commercial transaction information. In the server apparatus 3, the received commercial transaction information is stored, and the creation processing ends. In the server apparatus 3, the commercial transaction information, the positional information, the time information, and the like are stored in the storage unit 33 in association. The positional information may be positional information of the user terminal or positional information of the server apparatus 3. Note that the storage of the commercial transaction information in the server apparatus 3 may be executed when the transaction is approved.

The time information corresponds to a time at which the electronic information is created, and the time information may be, for example, either a time at which the creation of the electronic information is completed or a time from the time at which the creation of the electronic information is started to the time at which the creation is completed. When the electronic information creation apparatus is a user terminal, a time at which the commercial transaction information is transmitted to the server apparatus 3 or a time at which the commercial transaction information is stored is the time at which the electronic information is created. When the electronic information creation apparatus is the server apparatus 3, a time at which the commercial transaction information is stored is the time at which the electronic information is created. When there are a plurality of parties related to the commerce, positional information of a user terminal operated by each party and/or time information when the commercial transaction information is created or approved in each user terminal may be stored in the storage unit 33 in association with the commercial transaction information.

In step S501 of the NFT issuance processing, the server apparatus 3 may make a request for issuing the NFT in association with the time information regarding the time at which the electronic information is created and the positional information of the electronic information creation apparatus when the electronic information is created.

When the electronic information creation apparatus creates the electronic information other than the image information or the commercial transaction information, the creation processing, the distance calculation processing, the position specifying processing, the viewing processing, and/or the NFT issuance processing are executed in the same manner as described above.

That is, the system 10 according to the sixth embodiment of the present invention may be a system including an electronic information creation apparatus. The system includes: an electronic information creator that creates electronic information, a position specifier that specifies a position of the electronic information creation apparatus, and an NFT issuance requestor that makes a request for issuing an NFT in association with the electronic information created by the electronic information creator and the positional information specified by the position specifier and related to the position of the electronic information creation apparatus when the electronic information is created. Accordingly, it is possible to provide a novel system that issues an NFT.

In this way, since the NFT issuance requestor makes a request for issuing the NFT in association with the time information related to the time at which the electronic information is created and the positional information of the electronic information creation apparatus when the electronic information is created. Therefore, the NFT can be issued in association with the time at which the electronic information creation apparatus creates the electronic information and the position of the electronic information creation apparatus at that time. The "time at which the electronic information is created" may be either the time at which the creation of the electronic information is completed or the time from the time at which the creation of the electronic information is started to the time at which the creation is completed.

As described above, since the electronic information is digital data selected from a group formed by images, sounds, text, symbols, and numerical values, the NFT can be issued by associating the digital data created by the electronic information creation apparatus with the position of the electronic information creation apparatus when the digital data is created.

The system 10 according to the sixth embodiment of the present invention may be a system that specifies the position of the electronic information creation apparatus based on a distance between the wireless device 1A and the electronic information creation apparatus. That is, the system 10 is a system including at least one wireless device and an electronic information creation apparatus, and may include a creation electronic information creator that creates electronic information, a position specifier that specifies a position of the electronic information creation apparatus, and a distance calculator that calculates a distance between the wireless device and the electronic information creation apparatus based on a propagation time of information or a signal between the wireless device and the electronic information creation apparatus. The position specifier specifies the position of the electronic information creation apparatus based on the distance calculated by the distance calculator.

### [Seventh Embodiment]

In a seventh embodiment, as an example, a case where the mobile object is applied to a receptacle transported by a suspended rope will be described. In the seventh embodiment, a case where a receptacle transported by the suspended rope is used instead of the work vehicle in the first embodiment and various types of processing are executed will be described.

The system 10 in the seventh embodiment of the present invention may be used to transport items to users. Examples of the items include foodstuffs, beverages, water, fuel, pharmaceuticals, daily necessities, clothing, toys, and electric appliances. The system 10 in the seventh embodiment of the present invention may be used to transport a user from a predetermined point to a predetermined point. For example, it is possible to transport a user who needs rescue or a user who goes to rescue.

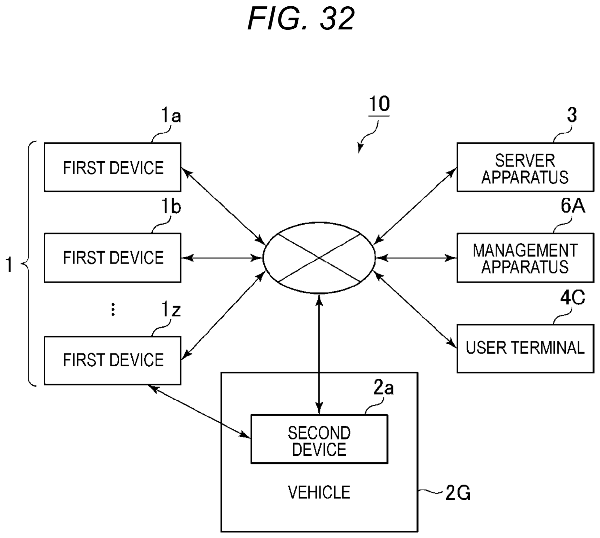

Fig. 32 is a block diagram illustrating a configuration of a system according to the seventh embodiment of the present invention. As illustrated, the system 10 according to the seventh embodiment of the present invention includes a plurality of first devices 1 (first devices 1a to 1z) and a receptacle including a second device 2a. The receptacle includes a space where items can be stored. The receptacle may be, for example, a vehicle 2G capable of storing items or may be a cargo container. The cargo container is, for example, a box-shaped receptacle (for example, a rectangular parallelepiped or a receptacle having a shape close to a rectangular parallelepiped) made of wood, a resin, or a metal. Wheels or the like may be provided on the bottom surface of the cargo container to function as a vehicle that has an automatic traveling function or a vehicle that does not have an automatic traveling function. However, the cargo container may not have a function of a vehicle. For example, the cargo container can be moved on the ground using another vehicle or the like, and a location where it is difficult to move only on the ground can be transported by the suspended rope. The size of the "space where items can be stored" in the receptacle is not particularly limited, but the volume of the space is preferably 30 vol% or more, preferably 50 vol% or more, and preferably 70 vol% or more with respect to the volume of the outer shape of the receptacle including the space.

Hereinafter, a case where the vehicle 2G includes a plurality of first devices 1 (first devices 1a to 1z) and a second device 2a and including a space where items can be stored inside will be described.

The system 10 according to the seventh embodiment of the present invention preferably includes three or more first devices 1. The system 10 according to the seventh embodiment of the present invention may include a plurality of vehicles 2G. As illustrated in the drawing, the system 10 according to the seventh embodiment of the present invention may include a server apparatus 3, a management apparatus 6A, and a user terminal 4C.

The first device 1 and the second device 2a can be directly communicably connected. The server apparatus 3 can be communicably connected to each of the first device 1, the second device 2a, the vehicle 2G, the management apparatus 6A, and the user terminal 4C via a communication network. Each of the vehicle 2G, the management apparatus 6A, and the user terminal 4C can transmit and receive information via a communication network.

### [First Device]

The first device 1 is a reference device that synchronizes a clock of the second device 2a. As a function and a hardware configuration of the first device 1 according to the seventh embodiment, the function and the hardware configuration (Fig. 2) of the first device 1 according to the first embodiment can be applied within a necessary range. Therefore, repeated description will be omitted.

In the system 10 according to the seventh embodiment of the present invention, a location where the first device 1 is installed is not particularly limited, but the first device 1 is preferably installed at a fixed position at which the installation position can be specified. For example, the first device may be installed in a support of a ropeway, a power transmission tower supporting an overhead electric wire path, or the like. A plurality of first devices 1 are installed. In order to accurately specify the position of the second device 2a, the plurality of first devices 1 may be arrayed at each predetermined distance (for example, every 500 m).

### [Second Device and Vehicle]

In the seventh embodiment of the present invention, the second device 2a is included in the vehicle 2G, and is communicably connected to the vehicle 2G in a wired or wireless manner. The case where "the second device 2a is included in the vehicle 2G" has the same meaning as "the second device 2a is provided in the mobile object 2" in the first embodiment.

The vehicle 2G according to the seventh embodiment of the present invention will be described. The vehicle 2G can be communicably connected to the first device 1, the server apparatus 3, the management apparatus 6A, and the user terminal 4C via the server apparatus 3.

As the vehicle 2G, a known vehicle capable of traveling on the ground can be used. The vehicle 2G is not particularly limited as long as the vehicle is a vehicle capable of traveling on the ground, but preferably has wheels. The ground is a land on which a vehicle can move and is a concept including, for example, a pier provided on the sea.

The vehicle 2G may be driven by an engine, may be driven by an electric motor, or may be driven by a hybrid. The vehicle 2G may be a vehicle of the related art driven by a person or may be an automatic driving vehicle that has an automatic traveling function or an automatic driving function. For example, the vehicle 2G can move along a movement route according to the movement route information. The vehicle 2G moves according to the movement route information, and can execute predetermined processing at an arrival place after the movement. Examples of the predetermined processing include reception of an input of removal information to the ropeway, and reception of an input of receipt information of an item. Processing for generating the movement route information will be described below.

The vehicle 2G has a space where items can be stored. The vehicle 2G may be a vehicle that can be boarded by a person. When items are stored in the vehicle 2G, it is also possible to monitor that a person boards in the space and the items are transported without any problem.

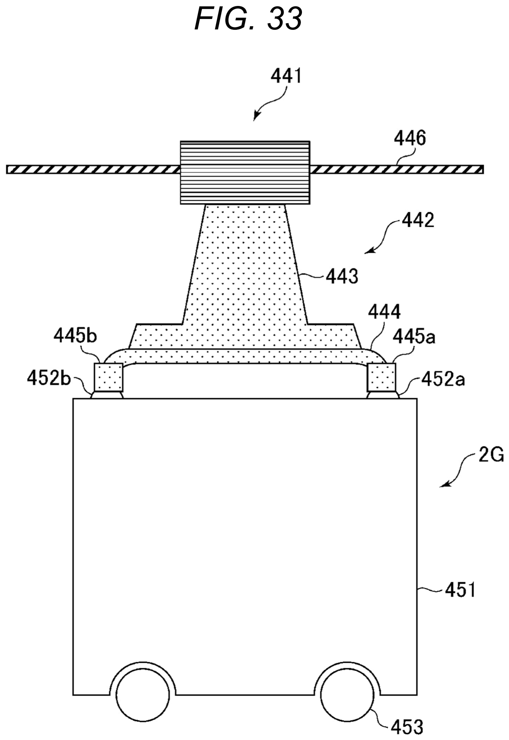

Fig. 33 is a diagram illustrating an example of a connection body in which a vehicle and a suspender are connected according to the seventh embodiment of the present invention. Fig. 33 is a diagram illustrating a connection body viewed from the side in the traveling direction of a ropeway. The vehicle 2G includes a vehicle body 451 and a plurality of attachment units 452 (452a and 452b) connecting a vehicle to a suspender 442. The vehicle 2G may include wheels 453 and various sensors (not illustrated) to be described below. The wheels 453 may be crawlers. The attachment unit 452 connects the suspender 442 included in the rope 446 and the vehicle 2G. The attachment unit 452 enables attachment and detachment of the vehicle 2G to and from the ropeway.

In the system 10 according to the seventh embodiment of the present invention, the vehicle 2G can be transported by a suspended rope. A ropeway according to the seventh embodiment of the present invention includes a traveling machine 441 that has traveling wheels capable of traveling on a support in order to transport the vehicle 2G by the suspended rope, and the suspender 442. The traveling machine 441 may include a pulley as a traveling wheel. The suspender 442 includes a body 443, a connection unit 444, and a support unit 445. The attachment unit 452 of the vehicle 2G can be fixed to the connection unit 444 of the suspender 442 by the support unit 445.

Here, between two stops, the ropeway forms a railway track by making a rope (also referred to as a supporting rope) as a fixed rope overhead and making a rope (also referred to as a pulling rope) as a moving rope overhead in parallel with the supporting rope, and supporting the supporting rope and the pulling rope with a support column. The traveling machine 441 is connected to a pulling rope. By driving the pulling rope, the vehicle 2G can move between stops along the supporting rope.

Alternatively, between two stops, the ropeway forms a track by making a rope (also referred to as a supporting rope) as a fixed rope overhead and supporting the supporting rope with a support pole. The traveling machine 441 is connected to the supporting rope, and can travel along the supporting rope while holding the supporting rope in the vertical direction by driving wheels and passive wheels arranged side by side in the vertical direction in the traveling machine 441, and can move a stop. At this time, the traveling machine 441 is driven by a battery included in the vehicle 2G, the traveling machine 441, or the suspender 442. That is, the traveling machine 441 may be a self-propelled traveling machine.

In the above description, the method of transporting the vehicle 2G by the ropeway has been described in the configuration in which the vehicle 2G is fixed to the suspender 442 using the attachment unit 452, but the present invention is not limited thereto as long as the vehicle 2G can be transported by the ropeway. For example, a housing unit that can house the vehicle 2G may be attached to the suspender 442, and the vehicle 2G may be transported by the ropeway by placing the vehicle 2G in the housing unit. A cargo bed may be attached to the suspender 442, and the vehicle 2G may be transported by a ropeway by fixing the vehicle 2G to the cargo stand with a rope or the like.

Next, hardware configurations of the second device 2a and the vehicle 2G will be described. As a function and a hardware configuration of the second device 2a according to the seventh embodiment, the function and the hardware configuration (Fig. 3) of the second device 2a according to the first embodiment can be applied within a necessary range. As a function and a hardware configuration of the vehicle 2G according to the seventh embodiment, the function and the hardware configuration (Fig. 3) of the mobile object 2 according to the first embodiment can be applied within a necessary range by replacing the mobile object 2 with the vehicle 2G. Therefore, repeated description will be omitted. Here, in the seventh embodiment, in addition to the matters described in the first embodiment, the following embodiments can be added or replaced.

In the seventh embodiment of the present invention, the RF chip 22 may receive a GPS signal. In the seventh embodiment of the present invention, the positions where the second device 2a (the control unit 21), the RAM 24, and the storage unit 25 are installed are not particularly limited, and examples of the positions include a ceiling of the vehicle 2G, an underfloor space of the space for storing items, and a wall of the vehicle 2G.

In the seventh embodiment of the present invention, the drive unit 26 drives a battery and an engine to operate the vehicle 2G. In the seventh embodiment of the present invention, a pressure sensor included in the sensor unit 28 may be provided in a portion that is a front surface in the traveling direction of the vehicle 2G or a convex portion in the outer shape of the vehicle 2G. In the seventh embodiment of the present invention, when the control unit 21 detects that the vehicle 2G has overturned or collided, a notification indicating that the vehicle 2G has overturned or collided can be transmitted from the vehicle 2G to the management apparatus 6A via the server apparatus 3.

In the seventh embodiment of the present invention, the position at which the imaging unit 29 is installed is not particularly limited as long as the position is a position at which the surroundings of the vehicle 2G can be imaged. For example, the imaging unit may be installed in a space in the vehicle or outside of the vehicle 2G. When the imaging unit is installed in a vehicle, the imaging unit 29 may be installed at a position at which a general drive recorder is installed.

### [Server Apparatus]

Next, a server apparatus according to the seventh embodiment of the present invention will be described. The server apparatus 3 can acquire information such as positional information and recording information from the second device 2a or the vehicle 2G. The acquired information can be transmitted to the management apparatus 6A or the user terminal 4C.

As a hardware configuration of the server apparatus 3 according to the seventh embodiment, the hardware configuration (Fig. 4) of the server apparatus 3 according to the first embodiment can be applied within a necessary range. Therefore, repeated description will be omitted. In the seventh embodiment, the control unit 31 reads a program and data from the RAM 32, and executes program execution processing based on information or the like received from the first device 1, the second device 2a, the vehicle 2G, or the management apparatus 6A.

The server apparatus 3 may communicate with the first device 1, the second device 2a, the vehicle 2G, the management apparatus 6A, or the user terminal 4C via the smart meter.

### [Management Apparatus]

Next, a management apparatus according to the seventh embodiment of the present invention will be described. A person who operates the management apparatus 6A is not particularly limited. For example, a person who prepares an item to be transported, a person who manages the vehicle 2G, or the like can execute an operation. Specifically, a manager, a person in charge, or the like of a local government or a private company can operate the management apparatus 6A. A person who operates the management apparatus 6A is referred to as a manager.

The management apparatus 6A may be a stationary apparatus and installed in a warehouse where supplies and the vehicle 2G are stored, or may be a portable apparatus and carried when a manager moves. The management apparatus 6A has a similar configuration to the server apparatus 3 and includes, for example, a control unit, a RAM, a storage unit, a communication interface, an input unit, and a display unit that are connected via an internal bus. The management apparatus 6A is preferably a computer apparatus including an input unit, a display unit, and a control unit, such as a tablet terminal, a smartphone, or a desktop or notebook type personal computer.

The position of the vehicle 2G can be confirmed in the management apparatus 6A and the user terminal 4C. Specifically, by receiving the positional information of the vehicle 2G by the management apparatus 6A or the user terminal 4C and associating the positional information with the map information, the position of the vehicle 2G can be displayed on a map on a display screen of the management apparatus 6A or the user terminal 4C. The positional information of the vehicle 2G may be confirmed as latitude and longitude information or a coordinate position of an XYZ coordinate system. The positions of the plurality of vehicles 2G may be simultaneously confirmed. Further, the recording information transmitted from the second device 2a or the vehicle 2G may be able to be confirmed in the management apparatus 6A or the user terminal 4C.

### [User Terminal]

Next, the user terminal 4C according to the seventh embodiment of the present invention will be described. The user terminal 4C is an apparatus that makes a request for transport of an item, rescue, or support. A person who operates the user terminal 4C is not particularly limited. For example, a local resident, a manager or a person in charge of a local government or a private company, or the like can operate the user terminal 4C.

The user terminal 4C may be a stationary terminal installed at home, or may be a portable terminal carried when the user moves. The user terminal 4C has a similar configuration to the server apparatus 3 and includes, for example, a control unit, a RAM, a storage unit, a communication interface, an input unit, and a display unit that are connected via an internal bus. The user terminal 4C is preferably a computer apparatus such as a tablet terminal, a smartphone, or a desktop or notebook type personal computer that including an input unit, a display unit, and a control unit. The user terminal 4C may include the second device 2a.

### [Transport Processing]

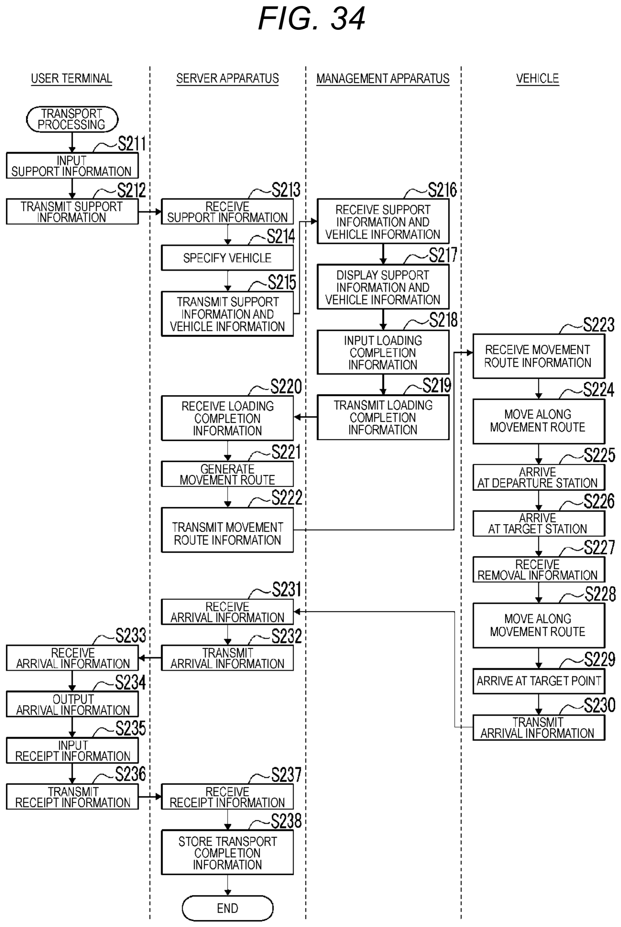

Next, transport processing according to the seventh embodiment of the present invention will be described. The transport processing is processing for transporting an item to a predetermined position according to the support information transmitted from the user terminal 4C. Alternatively, the transport processing is processing for moving a rescuer who requests rescue or a rescuer who moves to rescue according to the support information transmitted from the user terminal 4C. Fig. 34 is a flowchart illustrating transport processing according to the seventh embodiment of the present invention. Hereinafter, processing for transporting an item to a predetermined position according to the support information will be described.

The map information and the positional information regarding a stop of a ropeway, a road on which the vehicle 2G can move, or the like are stored in the storage unit 33 of the server apparatus 3 in latitude, longitude, and altitude, or coordinates of a coordinate system. The vehicle information regarding a vehicle may be stored in the storage unit 33 of the server apparatus 3. The vehicle information includes vehicle identification information with which the vehicle 2G can be identified, and information regarding a capacity and a mass of an item and the number of people that can be transported by the vehicle.

First, the user operates the user terminal 4C to input support information for making a request for relief supplies (step S211). The support information includes information regarding the type and number of items. The support information may be input by selecting an option displayed on the user terminal 4C or may be input as text. In step S211, it is preferable to input positional information of a target point at which an item is transported. The positional information of the target point may be specified based on the positional information of the user terminal 4C. Alternatively, when the positional information of the target point is registered in the server apparatus 3 in advance in association with the user identification information with which the user can be identified, the user identification information is transmitted from the user terminal 4C to the server apparatus 3, and the target point corresponding to the user identification information can be specified in the server apparatus 3 in step S2111 to be described below.

Subsequently, the support information is transmitted from the user terminal 4C to the server apparatus 3 (step S212) and received by the server apparatus 3 (step S213). In step S213, the server apparatus 3 also receives information regarding an address of the target point. The support information can also be said to be an item transport request. The server apparatus 3 specifies the operable vehicle 2G (step S214). In the processing of step S214, the vehicle 2G located at a predetermined place (for example, a waiting place) stored in advance in the server apparatus 3 may be specified, or the vehicle 2G that is not moving may be specified. That is, the vehicle 2G that has not executed the transport processing is specified.

The vehicle specification in step S214 may specify the vehicle 2G according to the support information. For example, the size of the vehicle may be specified according to the type and number of items of the support information, and the vehicle with the size may be specified. In the specifying of the vehicle in step S214, the vehicle 2G may be specified based on a plurality of pieces of support information. For example, there is a case where the vehicle 2G is too large to carry an item of only one piece of support information. Therefore, when a capacity or weight of the item specified from the support information exceeds a predetermined amount, the vehicle 2G may be specified by the server apparatus 3.

For example, in the specifying of the vehicle in step S214, the vehicle 2G stored in advance in the server apparatus 3 may be specified, or the vehicle 2G satisfying a predetermined condition may be specified according to the target point. The predetermined condition may be, for example, a condition that the vehicle 2G is closest to the target point, or a condition that the vehicle 2G is located within a predetermined range (for example, within a radius of 10 km) from the target point.

The processing of steps S211 to S214 may be transmitted through data transmission as in steps S211 and S212, or the user may make a phone call or fax to a predetermined counter, and the vehicle may be specified by the manager who has received the information.

When the vehicle 2G is specified, the support information and the vehicle information regarding the specified vehicle are transmitted from the server apparatus 3 to the management apparatus 6A (step S215) and are received by the management apparatus 6A (step S216). The management apparatus 6A displays the support information and the vehicle information (step S217). The manager checks the support information (for example, the type and number of items) and the vehicle information displayed on a display screen of the management apparatus 6A. Then, the manager loads the displayed items on the vehicle. In step S215, information indicating that the specified vehicle 2G is transported may be transmitted, and the vehicle 2G may move from the waiting place to a predetermined position for loading the item.

When the loading of the item included in the support information on the vehicle 2G is completed by the manager, loading completion information indicating that the loading is completed is input to the management apparatus 6A (step S218). The input of step S218 can be executed by pressing the display screen of the management apparatus 6A. For example, in step S217, the displayed item is displayed in a list, and the manager presses a column of the item that has been loaded. Then, when the pressing is completed for all the items, the loading completion information is input.

Subsequently, the loading completion information is transmitted from the management apparatus 6A to the server apparatus 3 (step S219) and is received by the server apparatus 3 (step S220). The server apparatus 3 generates a movement route (step S221).

The movement route generation processing in step S221 will be described. The server apparatus 3 generates a movement route from the positional information of the target point and current positional information of the vehicle 2G received in step S213.

Specifically, the movement route can be generated based on the positional information of the vehicle 2G, the map information, and the positional information of the target point. In the system 10 according to the seventh embodiment of the present invention, a movement route from a current position of the vehicle 2G which is a departure point to a stop of a ropeway (also referred to as a departure station), from the stop of the ropeway to a destination (also referred to as a target station) after movement by the ropeway from the stop of the ropeway, is generated. The ropeway may be used a plurality of times according to the target point. That is, a route corresponding to the generated movement route information can include a route for transporting the vehicle by the suspended rope.

For example, the server apparatus 3 specifies the stop of the ropeway located closest to the target point as the target station. Then, a stop that can be moved along the rope from the stop and is closest to the departure point is specified as the departure station. A movement route can be generated based on positional information of the specified departure station and target station. Whether to use the ropeway may be determined according to the target point and the position of the vehicle 2G. For example, a distance of the movement route is compared between a case where the ropeway is used and a case where the ropeway is not used, and the ropeway may not be used when the distance of the movement route is shorter in the case where the ropeway is not used.

Here, the movement route information may be generated in accordance with a predetermined algorithm related to specification of a route known in the server apparatus 3, or may be stored in advance in the storage unit 33 of the server apparatus 3. Alternatively, the movement route information may be generated by a manager operating the vehicle 2G or the management apparatus 6A to set a movement route. The movement route information may include, for example, a departure point, a target point, and positional information of the vehicle 2G from movement start to movement end. The movement route information may include one or a plurality of via-points.

When the movement route information is generated according to a predetermined algorithm, the movement route information may be generated based on the departure point and the target point so that to the movement distance is minimized, or the movement route information may be generated according to the map information so that obstacles such as buildings and debris are avoided. In this case, the map information is stored in advance in the server apparatus 3. In the map information, information regarding a region where the vehicle 2G cannot move, such as a position of an obstacle, and a region where the vehicle 2G can move are stored.

The movement route of the vehicle 2G in step S221 may be generated by the control unit 21 of the vehicle 2G. The movement route information may be generated in accordance with a predetermined program in the control unit 21 included in the vehicle 2G, or may be stored in advance in the storage unit 25 of the vehicle 2G. In this case, when the server apparatus 3 specifies the vehicle in step S214, the support information and the positional information of the target point are transmitted to the vehicle 2G and the movement route is specified in the vehicle 2G. The movement route information may be generated by the first device 1, the second device 2a, or the management apparatus 6A.

The description returns to the flowchart. When the movement route information is transmitted from the server apparatus 3 to the vehicle 2G (step S222), the movement route information is received by the vehicle 2G (step S223). When the movement route information is received, the vehicle 2G moves according to the movement route information (step S224). Step S224 and S228 to be described below are processing for controlling the vehicle to move according to the generated movement route information.

When the vehicle 2G arrives at the departure station of the ropeway (step S225), the movement of the vehicle 2G is stopped. The vehicle 2G is attached to the suspender 442 of the ropeway. Specifically, the attachment unit 452 of the vehicle 2G and the connection unit 444 of the suspender 442 are connected via the support unit 445. When the attachment is completed, the traveling machine 441 of the ropeway travels, and the vehicle 2G arrives at the target station of the ropeway (step S226).

At the target station, the vehicle 2G is removed from the suspender 442 of the ropeway. The vehicle 2G receives an input of removal information indicating that the removal has been completed (step S227). The input of the removal information in step S227 is executed, for example, by pressing a button included in the vehicle 2G or pressing "removal completion" displayed on the display screen. The control unit 21 of the vehicle 2G instructs the drive unit 26 to start moving based on the input removal information. Step S227 may be executed through an operation input to the management apparatus 6A of the manager who gets on the vehicle or a terminal of an operator of the system. In this case, instruction information to start moving is transmitted from the management apparatus 6A or the terminal to the vehicle 2G via the server apparatus 3.

As will be described below, the work of attaching and detaching the vehicle 2G to and from the ropeway and loading and unloading an item may be executed by a user who inputs the support information, a neighboring resident who uses the present system, an operator of the present system, a person entrusted by the operator, or the like. Alternatively, when the computer apparatus provided in the ropeway detects that the vehicle 2G has moved to a predetermined position of the departure station or the target station, the vehicle 2G may be automatically attached to or detached from the ropeway.

When the vehicle 2G is detached from the suspender 442 of the ropeway, the vehicle 2G moves according to the movement route information received in step S224 (step S228). When the vehicle 2G arrives at the target point (step S229), arrival information indicating that the vehicle 2G has arrived at the destination is transmitted from the vehicle 2G to the server apparatus 3 (step S230). When the arrival information is received by the server apparatus 3 (step S231), the arrival information is transmitted from the server apparatus 3 to the user terminal 4C corresponding to the user who has input the support information (step S232).

When the arrival information is received in the user terminal 4C (step S233), the arrival information is output (step S234). In the output of the arrival information in step S233, text, an image, and/or a moving image may be displayed on the display screen of the user terminal 4C, or a sound, light, and/or vibration may be output. As the arrival information, information regarding the transported item and the loaded place may be displayed.

When the vehicle 2G arrives at the target point, the work of loading and unloading the item is executed. When the user receives the item, the receipt information indicating that the item has been received by the user terminal 4C is input (step S235), and the receipt information is transmitted from the user terminal 4C to the server apparatus 3 (step S236). When the receipt information is received by the server apparatus 3 (step S237), transport completion information indicating that transport of the item has been completed is stored in the storage unit 33 of the server apparatus 3 (step S238). Through the processing of steps S211 to S238, the transport processing ends.

After completion of the transport processing, the vehicle 2G may move to a predetermined position (for example, the waiting place). In this case, the movement route information for moving to a predetermined position may be transmitted from the server apparatus 3, or the movement route information may be generated in the vehicle 2G.

The system 10 according to the seventh embodiment of the present invention may include two or more vehicles 2G and simultaneously operate the two or more vehicles 2G. In the movement route information, a movement route that does not overlap with the movement route of another vehicle 2G may be specified so that the vehicle 2G does not to collide with another vehicle 2G. When the movement routes are the same, one vehicle 2G may temporarily stop and movement timings may be different. A plurality of vehicles 2G may be loaded onto other vehicles (for example, a cargo stand of a truck) and carried to an intermediate point such as the departure point of the ropeway.

When the vehicle 2G executing the transport processing is specified in step S214, the processing of steps S218 to S238 may be newly executed after end of the transport in the processing.

When the type and number of items included in the support information received in step S213 exceed an amount that can be loaded in one vehicle 2G, two or more vehicles 2G may be specified in step S214. The server apparatus 3 can determine whether the items included in the support information can be transported at one time by one vehicle 2G by registering the sizes of the items in advance and determining that the items cannot be transported at one time at which a total volume of the items occupies a certain range or more of the vehicle 2G (for example, 80% or more). Alternatively, weights of the items are registered in advance, and when the total mass of the items exceeds the maximum loading amount of the vehicle 2G, it can be determined that the items cannot be carried at one time. When it is determined that the item cannot be transported at one time, the server apparatus 3 can divide the support information into a plurality of pieces of information so that the items to be transported are within a certain range (for example, within 70%) of the vehicle 2G or less than a maximum loading amount. The fact that the support information is divided into a plurality of pieces of information and an arrival time of each item can be transmitted to the user terminal 4C. Alternatively, it is possible to transmit, to the user terminal 4C, the fact that the items to be transported have been changed to be within a certain range (for example, within 70%) of the vehicle 2G or less than the maximum loading amount, and information regarding the item to be transported.

As described above, steps S213 to S215, S220 to S222, S231 and S232, and S237 and S238 are executed in the server apparatus 3, but may be executed in the management apparatus 6A. In this case, the processing of steps S215 and S216, and S219 and S220 can be omitted. Further, the processing of the server apparatus 3 may be executed in the vehicle 2G. In this case, the processing of steps S222 to S13 and S230 to S21 can be omitted. When the processing is executed by the management apparatus 6A or the vehicle 2G instead of the server apparatus 3, various types of information (for example, map information or the like) necessary to execute the processing are stored in advance in the management apparatus 6A or the vehicle 2G.

In the above description, the configuration for transporting the items as relief supplies has been described. However, in the following description, a configuration for transporting a person from a predetermined place to a predetermined place for rescue or relief will be described. When users left in a disaster area are rescued, the number of people to be rescued is input instead of the type and number of items as an input of the support information in step S211. Then, the processing of steps S212 to S234 is similarly executed. The processing of steps S215 to S220 may be omitted. When the user gets on the vehicle 2G after the arrival information is output in step S234, boarding information indicating that the boarding on the vehicle 2G is completed is input through an operation input to the user terminal 4C or the vehicle 2G, and is transmitted to the server apparatus 3. The movement route information for the vehicle 2G to move from the current position to a predetermined place is transmitted from the server apparatus 3, and the processing of steps S224 to S229 is executed.

When a user who is going to rescue is dispatched to a disaster area, the type of rescue is input instead of the type and the number of items in the input of the support information in step S211. For example, types of rescue include rescue, treatment, counseling, cooking, cleaning, tidying, and trivial work. Alternatively, the number of people necessary for rescue may be input. Then, the processing of steps S212 to S238 is similarly executed.

When a user who goes to rescue is dispatched to a disaster area, the transmission of the support information in step S215 may be transmitted to a user terminal that is a user registered in advance and satisfies the condition. Specifically, the user registers user information regarding the user in the system 10 in advance. During the registration of the user information, the type of rescue that can be handled by the user and an address of the user are input, and are stored in the server apparatus 3 as user information in association with identification information with which the user can be identified. The server apparatus 3 can specify a user corresponding to the type of rescue included in the support information received in step S213 with reference to the user information. The server apparatus 3 may specify a user within a predetermined range (for example, within a radius of 5 km) from the target point.

Then, a period, a departure point, and the like for rescue are displayed on the user terminal receiving the support information, information regarding a target point in addition to the rescue content. The user confirming the support information and deciding to go to rescue may move to the displayed departure point or may input agreement information indicating that the user agrees to go to rescue to the user terminal. The agreement information is received by the management apparatus 6A via the server apparatus 3.

The above-described configurations relating to transport of relief supplies, rescue of people, and dispatch of rescuers may be executed in combination. For example, the transport of the items and the dispatch of the rescuers may be executed at the same time, or the dispatch of the rescuers and the rescue of people may be executed at the same time.

In the system 10 according to the seventh embodiment of the present invention, during movement of the vehicle 2G (steps S224, S225, S226, S228, and S229), distance calculation processing for calculating a distance between the first device 1 and the vehicle 2G, as will be described below, position specifying processing for specifying the position of the vehicle 2G, and determination processing for determining whether the position of the vehicle 2G matches the movement route information are executed. Although any frequency at which the types of processing are executed can be set, the types of processing may be executed once every several seconds, for example, in order to accurately manage the movement of the vehicle 2G.

### [Distance Calculation Processing]

Next, distance calculation processing according to the seventh embodiment of the present invention will be described. The distance calculation processing is processing for calculating a distance between each of the plurality of first devices 1 and the second device 2a based on a propagation time of information or a signal between each of the plurality of first devices 1 and the second device 2a. Since the second device 2a is included in the vehicle 2G, it can be said that the processing is processing for calculating the distance between each of the plurality of first devices and the vehicle 2G. In the distance calculation processing according to the seventh embodiment, the same processing as the distance calculation processing according to the first embodiment (Fig. 6) can be applied to the vehicle 2G instead of the work vehicle as the mobile object 2. Therefore, repeated description will be omitted.

### [Position Specifying Processing]

Next, position specifying processing according to the seventh embodiment of the present invention will be described. The position specifying processing is processing for specifying the position of the second device based on the distance between each of the plurality of first devices 1 and the second device 2a calculated in the distance calculation processing. Since the second device 2a is included in the vehicle 2G, it can be said that the processing is processing for specifying the position of the vehicle 2G. In the position specifying processing according to the seventh embodiment, the same processing as the position specifying processing according to the first embodiment (Fig. 7) can be applied to the vehicle 2G instead of the work vehicle as the mobile object 2. Therefore, repeated description will be omitted.

The system 10 according to the seventh embodiment of the present invention preferably includes at least four first devices 1. In a case where the first device 1 is fixed on a transmission line tower or a pillar, the first device 1 and the second device 2a do not exist in the same height.

### [Determination Processing]

Next, determination processing according to the seventh embodiment of the present invention will be described. The determination processing is processing for determining whether the position of the second device 2a specified in the position specifying processing matches the movement route information regarding the movement route of the vehicle 2G. In the determination processing according to the seventh embodiment, the same processing as the determination processing according to the first embodiment (Fig. 8) can be applied to the vehicle 2G instead of the work vehicle serving as the mobile object 2. Therefore, repeated description will be omitted. However, in the seventh embodiment, in addition to the matters described in the first embodiment, the following embodiments can be added or replaced.

In the seventh embodiment of the present invention, the region where the vehicle 2G can move may be set with a width. For example, in the case where vehicle 2G moves on the ground, the movement route may be expanded by a predetermined distance (for example, 1 m) from the left and the right using the straight or curved movement route as a reference to set the movable region having a width twice the predetermined distance. For example, in the case where the vehicle 2G moves in the air, the movement route may be used as a reference, and the cylindrical movable region in which a cross section in the gravity direction is twice the predetermined distance may be set by radially expanding the movement route by a predetermined distance (for example, 1 m). In these cases, in the processing in step S52, when the specified position of the second device 2a is in the movable region, it can be determined that the position of the vehicle 2G matches the movement route information.

### [Arrival Time Calculation Processing]

Next, arrival time calculation processing according to the seventh embodiment of the present invention will be described. The arrival time calculation processing is processing for calculating an arrival time until the arrival at a user's place (target point) based on the specified position of the vehicle.

First, the server apparatus 3 specifies positional information of the vehicle corresponding to the vehicle 2G of which the arrival time is calculated and the time information regarding a time at which the positional information is calculated from the information stored in the processing of step S42. Next, the server apparatus 3 specifies movement route information corresponding to the vehicle 2G of which the arrival time is calculated.

Next, the server apparatus 3 calculates an arrival time according to the specified positional information and movement route information. Specifically, for the server apparatus 3, a time table in which a speed of a vehicle is stored in association with a type of movement route is provided. Examples of the type of movement route include an ordinary road, an expressway, and a ropeway. In the time table, a required time is stored in association with a predetermined point of the movement route. Examples of the predetermined point include a stop where a ropeway is attached or detached. Referring to the time table, an arrival time corresponding to the specified positional information and movement route information can be specified.

For example, a distance to the target point is specified from the specified positional information and movement route information. The type of movement route to the target point is specified from the movement route information. The type of movement route may be specified based on map information. A predetermined point included in the movement route information to the target point is specified. The distance to the target point, the type of movement route, and the arrival time from the predetermined point to the target point are calculated with reference to the time table. The arrival time is calculated by adding the calculated arrival time to the time at which the positional information of the vehicle 2G is calculated. Accordingly, the arrival time can be calculated according to the specified positional information and movement route information.

The time table may be stored in association with the type of vehicle 2G. For example, a speed on a ground route can be changed by the vehicle. That is, the arrival time can be calculated according to the type of vehicle.

When the arrival time is calculated, the calculated arrival time is transmitted to the user terminal 4C. The arrival time may be transmitted to the user terminal 4C in response to a transmission request of the user terminal 4C. The user terminal 4C to which the arrival time is transmitted is a user inputting the support information corresponding to an item transported by the vehicle 2G. In addition to the arrival time, information regarding items to be transported may be transmitted. The arrival time and the information of the items may be displayed on the same display screen.

Although the mode in which the system 10 according to the seventh embodiment of the present invention during a disaster is used has been described above, the system 10 according to the seventh embodiment of the present invention can be used even in a normal time. For example, the system 10 according to the seventh embodiment of the present invention may be used to transport an item to a user who lives in a mountain area or the like, or the system 10 according to the seventh embodiment of the present invention may be used to move from a predetermined position to a predetermined position.

According to the invention of the seventh embodiment, since the vehicle has an automatic traveling function, it is possible to contribute to labor saving related to transport work. According to the invention of the seventh embodiment, since the vehicle capable of traveling on the ground is transported by the suspended rope, the vehicle can be moved to a location where it is difficult to move only along a ground route.

### [Eighth Embodiment]

In an eighth embodiment, a case where a mobile object is applied to an electric storage apparatus will be described as an example. In the eighth embodiment, a case where an electric storage apparatus is used instead of the work vehicle in the first embodiment and various types of processing are executed will be described.

### [Configuration of System]

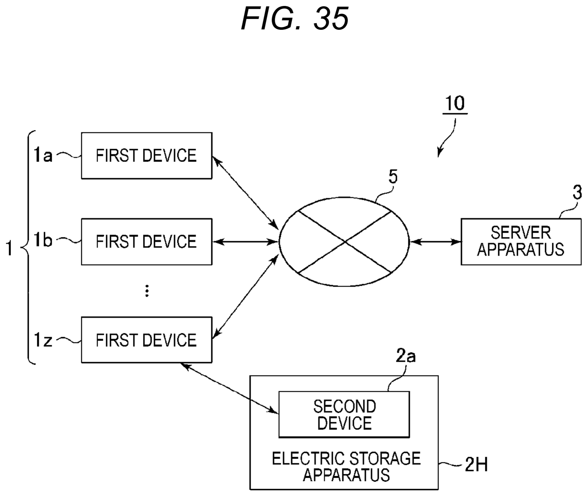

Fig. 35 is a block diagram illustrating a configuration of a system according to the eighth embodiment of the present invention. As illustrated in the drawing, a system 10 according to the eighth embodiment of the present invention includes a plurality of first devices 1 (first devices 1a to 1z) and the electric storage apparatus 2H including a second device 2a. The system 10 may include the server apparatus 3 and the communication network 5. The system 10 may have another configuration as necessary, and may include, for example, a management terminal operated by a person who manages the electric storage apparatus 2H.

The "first computer apparatus" is a computer apparatus (that is, a computer apparatus that receives the information) as a transmission destination of predetermined information regarding a state of charge of the electric storage apparatus 2H. For example, the server apparatus 3 can be the "first computer apparatus". A computer apparatus other than the server apparatus 3, for example, a management terminal operated by a person in charge of management such as a local government or a company that manages supply of an electric storage apparatus may be referred to as a "first computer apparatus".

The electric storage apparatus 2H is a concept including both a first electric storage apparatus and a second electric storage apparatus to be described below.

The first devices 1a to 1z and the second device 2a can be directly communicably connected without the communication network 5. The first devices 1a to 1z can be communicably connected to the server apparatus 3 via the communication network 5. The second device 2a may be communicably connected to the server apparatus 3 via the communication network 5.

### [First Device]

The first device 1 is a reference device that synchronizes a clock of the second device 2a. As a function and a hardware configuration of the first device 1 according to the eighth embodiment, the function and the hardware configuration (Fig. 2) of the first device 1 according to the first embodiment can be applied within a necessary range. Therefore, repeated description will be omitted.

In the system 10 according to the eighth embodiment of the present invention, a location where the first device 1 is installed is not particularly limited, but the first device 1 is installed outdoors or indoors where the electric storage apparatus 2H is disposed.

### [Second Device and Electric Storage Apparatus]

In the system 10 according to the eighth embodiment of the present invention, the second device 2a is included in the electric storage apparatus 2H or is connected to the electric storage apparatus 2H to be able to communicate with each other in a wired or wireless manner. The case where "the second device 2a is included in the electric storage apparatus 2H" has the same meaning as "the second device 2a is included in the mobile object 2" in the first embodiment.

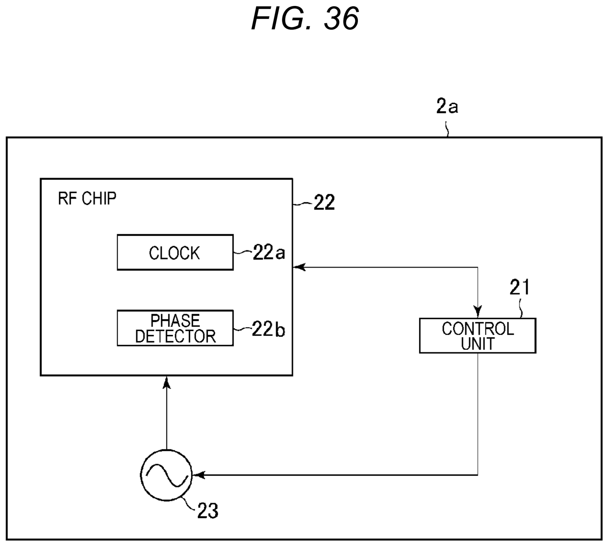

The second device 2a according to the eighth embodiment of the present invention will be described. Fig. 36 is a block diagram illustrating a configuration of the second device according to the eighth embodiment of the present invention. The second device 2a includes a control unit 21, an RF chip 22, and an oscillator 23 and is connected via a bus. The RF chip 22 includes a clock 22a and a phase detector 22b. The second device 2a may have another configuration as necessary in addition to the control unit 21, the RF chip 22, the oscillator 23, the clock 22a, and the phase detector 22b.

The control unit 21 is not particularly limited. For example, a microcomputer can be used. The control unit 21 executes program execution processing based on a program and the data. The RF chip 22 executes processing for receiving and transmitting a radio signal. Data received by the RF chip 22 is an arithmetic processing target of the control unit 21.

The oscillator 23 oscillates at a predetermined frequency and outputs a signal for giving an operational timing of each unit of the apparatus. As the oscillator 23, for example, a crystal oscillator can be used. The clock 22a clocks the output signal of the oscillator 23 as a vibration source and outputs a time. The time clocked by the clock 22a is controlled by the control unit 21 such that the time is transmitted to the first device 1 via the RF chip 22. The phase detector 22b detects a phase of a carrier wave included in information received from the first device 1 and detects a phase of a signal oscillated by the oscillator 23 of the second device 2a.

The position at which the second device 2a is attached to the electric storage apparatus 2H is not particularly limited. A plurality of second devices 2a may be mounted on one electric storage apparatus 2H. The positional information of the second device 2a may be stored in the server apparatus 3 or the like in association with identification information with which the second device 2a can be identified or identification information with which the electric storage apparatus 2H including the second device 2a can be identified.

The electric storage apparatus 2H according to the eighth embodiment of the present invention will be described. The electric storage apparatus 2H is not particularly limited as long as the electric storage apparatus is an apparatus capable of storing electric energy and extracting electricity as necessary. The electric storage apparatus 2H may have not only a function of storing electric energy and extracting electricity as necessary (that is, a function of a storage battery) but also a different function. The electric storage apparatus 2H may be a storage battery itself capable of storing electric energy and extracting electricity as necessary. The storage battery included in the electric storage apparatus 2H is not particularly limited, but a lead storage battery, a nickel-metal hydride battery, a nickel-cadmium battery, a lithium ion battery, a lithium polymer battery, a vanadium battery, or the like can be used. A capacitor such as a lithium ion capacitor can also be applied as the electric storage apparatus 2H. From the viewpoint of excellent portability, a lithium ion battery which is easily downsized is preferable. From the viewpoint of chargedischarge characteristics and durability, a lead-acid battery or a nickel-cadmium battery is preferable.

The electric storage apparatus 2H may be configured to be able to supply desired power by connecting one type of battery in series and/or in parallel, and includes a battery configured to be able to supply desired power by connecting a plurality of types of batteries in series and/or in parallel. The electric storage apparatus 2H may include a fuel cell and a power generator capable of generating power such as power generated by solar power and may be configured to be able to charge a storage battery included in the electric storage apparatus 2H including the power generator.

The electric storage apparatus 2H is preferably mounted on a mobile object, and/or the electric storage apparatus has an automatic operation function. The electric storage apparatus 2H may be an example of a mobile object. The electric storage apparatus 2H preferably includes a mobile object on which the electric storage apparatus 2H is mounted by rotation of wheels, rollers, propellers, or the like, or a rotator capable of moving the electric storage apparatus 2H itself. The rotator can be provided on the bottom surface, the side surface, and the upper surface of an outermost housing of the electric storage apparatus 2H. The electric storage apparatus 2H itself may have a rotator on which the mobile object on which the electric storage apparatus 2H is mounted can be moved without including the movable rotator. In this case, the mobile object includes, for example, an aircraft such as a drone in addition to a vehicle such as a bogie and an autonomous vehicle. "Mounting" means that the electric storage apparatus 2H is disposed on/loaded on a part of the mobile object. The electric storage apparatus 2H may be mounted on a stand for moving the electric storage apparatus 2H along a cable provided in an overhead state, such as an overhead electric wire, an overhead optical fiber, or an overhead wire rope. With such a configuration, the electric storage apparatus 2H can be more easily transported.

A potential difference between a positive electrode and a negative electrode of the storage battery included in the electric storage apparatus 2H, that is, a voltage output from the electric storage apparatus 2H, can be measured by an apparatus capable of measuring a voltage of a voltmeter or the like. When the storage battery is charged, the voltage output from the storage battery increases. When power is supplied (discharged) from the storage battery to a load, the voltage output from the storage battery decreases. For example, the voltage output from the storage battery is measured by a voltmeter or the like installed in the electric storage apparatus 2H, and a value of the measured voltage is transmitted to the server apparatus 3 via the second device 2a of the electric storage apparatus 2H. When the power is supplied (discharged) from the storage battery to the load, the voltage output from the storage battery drops. However, for example, by using a circuit (a voltage stabilization circuit or the like) or a device capable of making an output voltage constant even when the input voltage fluctuates, the voltage supplied to the load can be kept constant even when the voltage output from the storage battery drops.

A current output from the electric storage apparatus 2H can be measured by a device capable of measuring the current such as an ammeter. The magnitude of the current output from the electric storage apparatus 2H changes according to a voltage request of a load to which power is supplied from the electric storage apparatus 2H. For example, the current output from the storage battery is measured by an ammeter or the like installed in the electric storage apparatus 2H, and the value of the measured current is transmitted to the server apparatus 3 via the second device 2a of the electric storage apparatus 2H.

### [Server Apparatus]

As a hardware configuration of the server apparatus 3 according to the eighth embodiment, the hardware configuration (Fig. 4) of the server apparatus 3 according to the first embodiment can be applied within a necessary range. Therefore, repeated description will be omitted.

### [Distance Calculation Processing]

Next, distance calculation processing according to the eighth embodiment of the present invention will be described. The distance calculation processing is processing for calculating a distance between each of the plurality of first devices 1 and the second device 2a based on a propagation time of information or a signal between each of the plurality of first devices 1 and the second device 2a. In the system 10, by correcting a time deviation and a phase deviation of the second device 2a based on the first device 1, it is possible to accurately clock a time of the second device. As described below, the position of the second device can be specified based on the positions of the plurality of first devices 1 and the distance between each of the plurality of first devices 1 and the second device 2a. By specifying the position of the second device 2a, it is possible to specify the position of the electric storage apparatus 2H including the second device 2a.

The same processing as the distance calculation processing (Fig. 6) according to the first embodiment can be applied to the distance calculation processing according to the eighth embodiment. Therefore, repeated description will be omitted. In the distance calculation processing illustrated in Fig. 6, the calculation of the distance between the first device 1 and the second device 2a has been described. However, the second device 2a that is a calculation target may be included in the first electric storage apparatus to be described below or may be included in the second electric storage apparatus to be described below.

In the eighth embodiment of the present invention, the distance calculation processing can be executed, for example, every predetermined time or whenever a predetermined condition is satisfied. For example, it is possible to execute a setting such that the distance calculation processing in steps S1 to S20 is started once a day at a predetermined time set in advance.

### [Position Specifying Processing]

Next, position specifying processing according to the eighth embodiment of the present invention will be described. The second device 2a that is a position specification target may be included in the first electric storage apparatus to be described below or may be included in the second electric storage apparatus to be described below. The same processing as the position specifying processing (Fig. 7) according to the first embodiment can be applied to the position specifying processing according to the eighth embodiment. Therefore, repeated description will be omitted.

In the eighth embodiment of the present invention, the position specifying processing can be executed by any one of the first device 1, the second device 2a, and the server apparatus 3, for example.

In the eighth embodiment of the present invention, the fact that the position of the second device 2a can be specified means that the position of the electric storage apparatus 2H including the second device 2a can be specified. By ascertaining the specified positional information of the electric storage apparatus 2H together with information such as a state of charging of the electric storage apparatus, it is possible to ascertain information regarding an available power source in a disaster or the like. The information can be ascertained in this manner. Therefore, for example, when charging of one electric storage apparatus is not sufficient, a system specifying the position of another exchangeable electric storage apparatus can be constructed.

### [Control Processing]

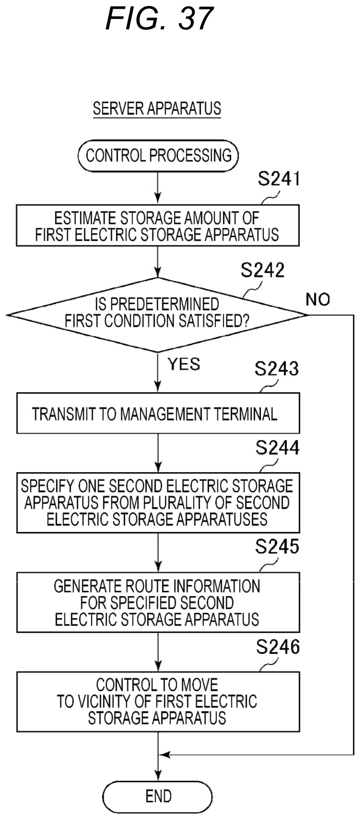

Hereinafter, a system moving another electric storage apparatus that is exchangeable with one electric storage apparatus to the vicinity of the one electric storage apparatus will be described. Fig. 37 is a flowchart illustrating control processing according to the eighth embodiment of the present invention. The following control processing can be executed every predetermined time or whenever a predetermined condition is satisfied. Any predetermined time can be set and is, for example, every 5 minutes, every 1 minute, every 30 seconds, every 5 seconds, or the like. The control processing may be executed in response to an instruction input for executing the processing by a person in charge of management or the like.

First, the server apparatus 3 estimates a current storage amount of the first electric storage apparatus (step S241). The "first electric storage apparatus" is an electric storage apparatus that supplies power to a load (hereinafter referred to as "during power supply"). The term "during power supply" is not limited to a state in which power is actually supplied from the electric storage apparatus to a predetermined load, and refers to a state in which supply of power to the load is not executed despite connection to the load so that the power can be supplied from the predetermined load in response to a request or a state in which the electric storage apparatus is disposed in the vicinity of the predetermined load without connection to the load in order to supply power to the load. When a current from a storage battery is detected within a predetermined time (for example, within 30 minutes or 1 hour) from the electric storage apparatus based on the ammeter installed in the electric storage apparatus, it can be determined that "power is supplied". "Vicinity" means that, for example, an electric storage apparatus is within a predetermined distance such as a radius of 10 m.

In step S241, a storage amount in the first electric storage apparatus can be estimated based on a voltage output from the storage battery and/or a current output from the storage battery. The storage amount can be estimated in accordance with a known method. As a method of estimating the storage amount, in a method of calculating a storage amount using an integrated value of a current output from a storage battery, a correspondence relationship between the output voltage and the storage amount is stored for each storage battery or for each product type of the storage battery, and the storage amount can be estimated from the measured voltage of the storage battery. A value of the voltage output from the storage battery can be measured by a voltmeter installed in the first electric storage apparatus, and the measured voltage value is transmitted to the server apparatus 3. Similarly, a value of the current output from the storage battery can be measured by an ammeter installed in the first electric storage apparatus, and the measured current value is transmitted to the server apparatus 3.

Subsequently, the server apparatus 3 determines whether the storage amount estimated in step S241 satisfies a predetermined first condition (step S242). Specifically, in step S242, the server apparatus 3 determines whether the storage amount estimated in step S241 is equal to or less than a predetermined value or less than the predetermined value. The predetermined value is not particularly limited, but can be appropriately set according to a capacity, a type, and the like of the storage battery.

When it is determined in step S242 that the estimated storage amount is not equal to or less than the predetermined value or is not less than the predetermined value (NO in step S242), the processing ends. Conversely, when it is determined in step S242 that the estimated storage amount is equal to or less than the predetermined value or less than the predetermined value (YES in step S242), the server apparatus 3 transmits predetermined information regarding the first electric storage apparatus to the management terminal used by a person in charge of management (step S243). The predetermined information transmitted to the management terminal is not particularly limited and includes, for example, information indicating that the storage amount of the storage battery of the first electric storage apparatus decreases, or information indicating that sufficient power supply is likely not to be able to be received from the first electric storage apparatus in the near future such as several hours or several days.

Here, it is determined in step S242 whether the estimated storage amount is equal to or less than the predetermined value or whether the estimated storage amount is less than the predetermined value. Instead of steps S241 and S242, it may be determined whether the voltage output from the storage battery is equal to or less than the predetermined value or whether the voltage is less than the predetermined value. In this case, when it is determined that the voltage output from the storage battery is not equal to or less than the predetermined value or is not less than the predetermined value, the processing ends. Conversely, when it is determined that the voltage output from the storage battery is equal to or less than the predetermined value or less than the predetermined value, the server apparatus 3 transmits predetermined information regarding the first electric storage apparatus to the management terminal.

Subsequently, the server apparatus 3 specifies one second electric storage apparatus satisfying a predetermined second condition from the plurality of second electric storage apparatuses (step S244). The second electric storage apparatus is different from the first electric storage apparatus. The second electric storage apparatus may be an apparatus that is being supplied with power or one that is not being supplied with power. The "predetermined second condition" in step S244 can be appropriately set. As the "predetermined second condition", a condition related to a storage amount of a storage battery included in the second electric storage apparatus or a voltage output from the storage battery and/or a condition related to a position with respect to the first electric storage apparatus can be set.

Examples of the condition related to the storage amount of the storage battery included in the second electric storage apparatus include a condition that the storage amount is equal to or more than the second predetermined value or a condition that the storage amount is greater than the second predetermined value. As the condition related to the voltage output from the storage battery included in the second electric storage apparatus, a condition that the voltage is equal to or more than the second predetermined value or is greater than the second predetermined value can be set. Here, the second predetermined value is a value greater than the predetermined value in step S242. The "second predetermined value" can be appropriately set by a person in charge of management or the like. For example, a storage amount of 80% or more or 90% or more relative to a storage amount of the theoretically fully charged second electric storage apparatus can be set as the second predetermined value.

The "condition related to a position with respect to the first electric storage apparatus" may be any one of a condition that the second electric storage apparatus is within a predetermined distance to the first electric storage apparatus as a linear distance, a condition that a shortest route to the first electric storage apparatus is within a predetermined distance, and a condition that an estimated movement time to the first electric storage apparatus is within a predetermined time. A positional relationship between the first electric storage apparatus and the second electric storage apparatus can be determined based on positional information regarding each second device 2a included in the first electric storage apparatus and the second electric storage apparatus.

The shortest route may be generated according to a predetermined program or may be stored in advance in a storage unit of the server apparatus 3. Further, the shortest route may be generated by a person who is in charge of management and operates the management terminal, may be transmitted to the server apparatus 3, and may be stored.

The shortest route is determined based on the route information. The route information may include, for example, a departure point, a target point, and positional information of the second electric storage apparatus from the start of movement to the end of movement. The positional information may be represented by latitude, longitude, and altitude or may be represented by coordinates of a coordinate system (for example, XYZ coordinates of an orthogonal coordinate system). The route information may include one or a plurality of waypoints.

When the server apparatus 3 generates the route information according to a predetermined program, the information regarding the shortest route is generated based on the departure point and the target point so that the movement distance is minimized. The route information may be generated according to the map information so that obstacles are avoided, and the route information having the shortest distance may be generated as the information of the shortest route. In this case, the map information is stored in advance in the storage unit of the server apparatus 3. In the map information, information regarding a region where the second electric storage apparatus cannot move, such as a position of an obstacle or a wall, or a region where the second electric storage apparatus can move is stored as latitude, longitude, altitude, coordinates of a coordinate system, or the like.

The movement time can be calculated based on a movement distance per unit time of a route, that is, a speed. The movement distance per unit time of the route may be specified based on, for example, past records or may be specified based on a measured value obtained by measuring in advance a speed such as 15 km/h at which the electric storage apparatus can move stably. For the movement time, "within a predetermined time" may be appropriately set by a person in charge of management. The movement time estimated based on the route to the first electric storage apparatus or the movement time estimated to the vicinity of the first electric storage apparatus is preferably shorter than a time at which the storage amount of the first electric storage apparatus is less than the first predetermined amount.

Subsequently, when the server apparatus 3 specifies one second electric storage apparatus according to the predetermined second condition, route information to the first electric storage apparatus is generated for the specified second electric storage apparatus (step S245). The route information can be information regarding a route considered as the shortest route. The route may be a route generated when the person in charge of management operates the management terminal.

Then, the server apparatus 3 controls the second electric storage apparatus to move to the vicinity of the first electric storage apparatus (step S246). Then the processing ends. In step S246, the control means that the server apparatus 3 transmits the route information generated in step S245. A transmission destination of the route information can be set to, for example, a control unit in which the second electric storage apparatus is mounted on a mobile object or the second electric storage apparatus has an automatic driving function and controls automatic driving. The automatic operation is achieved in such a manner that the second electric storage apparatus or the mobile object on which the second electric storage apparatus is mounted includes a control unit (such as a CPU), a RAM, and a storage unit, and the control unit controls driving of the second electric storage apparatus or the mobile object on which the second electric storage apparatus is mounted.

"Vicinity" means that an electric storage apparatus is within a predetermined distance such as a radius of 10 m. The predetermined distance can be appropriately set by the person in charge of management according to the length of a power cord of a load to which the second electric storage apparatus is connected.

Through steps S241 to S246, the second electric storage apparatus can be moved to the vicinity of the first electric storage apparatus. The moved second electric storage apparatus is replaced with the first electric storage apparatus to start supplying power to the load. Accordingly, the moved second electric storage apparatus functions as the first electric storage apparatus. By executing the control processing in steps S241 to S246 on the replaced first electric storage apparatus, it is possible to specify and move the second electric storage apparatus capable of supplying power to the load. Accordingly, it is possible to maintain a state in which power can be supplied to the load.

According to the invention of the eighth embodiment, information for securing power in a disaster can be provided in order to specify an accurate position of the electric storage apparatus. According to the invention of the eighth embodiment, it is possible to provide a system that can keep providing an electric storage apparatus capable of supplying power to a load when the second electric storage apparatus is moved to the vicinity of the first electric storage apparatus.

### [Ninth Embodiment]

In a ninth embodiment, as an example, a case where the mobile object includes an IoT device or an loT device is a mobile object that has a moving function will be described. In the ninth embodiment, a case where an loT device is used instead of the work vehicle in the first embodiment and various types of processing are executed will be described.

### [Configuration of System]

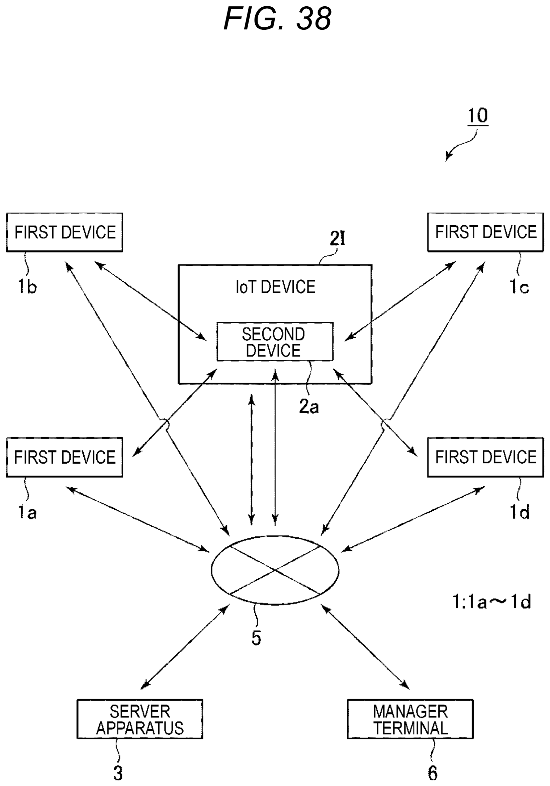

Fig. 38 is a block diagram illustrating a configuration of a system according to the ninth embodiment of the present invention. The system 10 illustrated in Fig. 38 includes four first devices 1 (1a to 1d), a second device 2a, an loT device 2I, a server apparatus 3, and a manager terminal 6. As illustrated, the second device 2a is included in the IoT device 2I.

The number of first devices 1 included in the system according to the ninth embodiment of the present invention is not particularly limited, and can be designed as appropriate. The system according to the ninth embodiment of the present invention may include a plurality of first devices 1. The system according to the ninth embodiment of the present invention preferably includes at least four first devices 1.

The number of second devices 2a included in the system according to the ninth embodiment of the present invention is not particularly limited, and can be designed as appropriate. The system of the present invention may include one or a plurality of second devices 2a. The number of loT devices 2I included in the system according to the ninth embodiment of the present invention is not particularly limited, and can be appropriately designed. The system according to the ninth embodiment of the present invention may include one or a plurality of IoT devices 2I. Preferably, one IoT device 2I includes at least one second device 2a.

The number of manager terminals 6 included in the system according to the ninth embodiment of the present invention is not particularly limited, and can be designed as appropriate. The system according to the ninth embodiment of the present invention may include one or a plurality of manager terminals 6.

The first device 1 and the second device 2a can be directly communicably connected. The first device 1 can be communicably connected to the server apparatus 3 and the manager terminal 6 via the communication network 5. The second device 2a can be communicably connected to the server apparatus 3 and the manager terminal 6 via the communication network 5. The loT device 2I can be communicably connected to the server apparatus 3 and the manager terminal 6 via the communication network 5. The first device 1, the second device 2a, and the loT device 2I may be communicably connected to each other via the communication network 5.

### [First Device]

The first device 1 is a reference device that synchronizes a clock of the second device 2a. As a function and a hardware configuration of the first device 1 according to the ninth embodiment, the function and the hardware configuration (Fig. 2) of the first device 1 according to the first embodiment can be applied within a necessary range. Therefore, repeated description will be omitted.

In the system 10 according to the ninth embodiment of the present invention, a location where the first device 1 is installed is not particularly limited. As will be described below, since the position of the loT device 2I is specified based on distances between the plurality of first devices 1 and the second device 2a included in the loT device 2I, the plurality of first devices 1 may be disposed in a lattice shape in order to cover a region where the position of the IoT device 2I (the second device 2a) can be specified. It is preferable to specify the position of the first device 1 in advance and the first device 1 is preferably installed at a fixed location. Positional information corresponding to the installation place of the first device 1 (hereinafter also referred to as positional information of the first device 1) may be stored in advance in a storage unit or the like of the server apparatus 3. The positional information of the first device 1 may be represented by latitude, longitude, and altitude, or may be represented by XYZ coordinates in a predetermined coordinate space.

Identification information for identifying the first device 1 (for example, a first device ID) may be set for each of the plurality of first devices 1. Hereinafter, identification information with which the first device 1 is identified is referred to as a first device ID. The positional information of the first device 1 may be stored in the server apparatus 3 in association with the first device ID.

### [Second Device]

The second device 2a according to the ninth embodiment of the present invention will be described. As a function and a hardware configuration of the second device 2a according to the ninth embodiment, the function and the hardware configuration (Fig. 36) of the second device 2a according to the eighth embodiment can be applied within a necessary range. Therefore, repeated description will be omitted.

### [IoT Device]

Next, an loT device 2I according to the ninth embodiment of the present invention will be described. The loT device 2I is not particularly limited as long as the loT device can be connected to the Internet or a local network. The loT device 2I preferably includes a control unit, a communication interface, a storage unit, a sensor, and an imaging unit. Further, the loT device 2I may include an input unit. Further, the loT device 2I may include any another configuration.

The loT device 2I may be used by a business operator such as a manufacturing industry, a construction industry, a distribution industry, a real estate industry, a financial industry, an agriculture, forestry, and fishery industry, a wholesale industry, a retail industry, a public infrastructure industry, an educational industry, a food and drink industry, and a medical and welfare industry or may be used by an individual.

The IoT device 2I may be able to acquire surrounding or environmental information by a sensor and/or an imaging unit. The loT device 2I may be able to acquire information by receiving an input of information by the user.

The information acquired by the IoT device 2I is not particularly limited, and can be appropriately designed. For example, when the loT device 2I is used in a production line of a manufacturing industry, the information acquired by the IoT device 2I may be an operational status of a machine, the number of components in stock, an image of a production line, or the like. Further, for example, in a case where the loT device 2I is used in a retail store, the information acquired by the loT device 2I may be the sales quantity, the sales price, the inventory quantity, the image in the store, the age and sex of the customer, the temperature, the atmospheric pressure, the humidity, the weather, and the like on the business day. Further, for example, when the loT device 2I is used in agricultural farmland, the information acquired by the loT device 2I may be a temperature, humidity, an amount of sunlight, a carbon dioxide concentration, a soil temperature, an amount of water, a water level of a paddy field, or the like of the farmland. For example, when the loT device 2I is used in a financial business transaction, the information acquired by the loT device 2I may be information of a person involved in the transaction, transaction content, a situation after the transaction, or the like. For example, when the IoT device 2I is a smart meter, the information acquired by the loT device 2I may be a power consumption amount or the like. For example, when the IoT device 2I is a wearable device, the information acquired by the loT device 2I may be a body temperature, a heart rate, a movement (acceleration) of a human body, and the like of a wearer.

The information acquired by the loT device 2I may be transmitted to the server apparatus 3 and/or the manager terminal 6. The information transmitted to the server apparatus 3 and/or the manager terminal 6 may be visualized and/or analyzed in the server apparatus 3 and/or the manager terminal 6.

The loT device 2I may be provided in a mobile object or may be a mobile object that has a function of moving the loT device 2I itself. That is, the IoT device 2I may be movable. When the loT device 2I can move, the loT device 2I may be able to move by being carried by a user, or may be able to move by being provided in a mobile object, or the loT device 2I itself may be able to move.

A mode in which the IoT device 2I includes the second device 2a is not particularly limited, and can be appropriately designed. The case where "the second device 2a is included in the loT device 2I" has the same meaning as a case where "the second device 2a is included in the mobile object 2" according to the first embodiment.

Identification information with which the loT device 2I is identified (for example, an loT device ID) may be set in the loT device 2I. Identification information with which the second device 2a is identified (for example, a second device ID) may be set in the second device 2a. Hereinafter, the identification information with which the loT device 2I is identified is referred to as an loT device ID, and the identification information with which the second device 2a is identified is referred to as a second device ID. The second device ID may be stored in the server apparatus 3 in association with the loT device ID.

### [Server Apparatus]

Next, the server apparatus 3 according to the ninth embodiment of the present invention will be described. As a hardware configuration of the server apparatus 3 according to the ninth embodiment, the hardware configuration (Fig. 4) of the server apparatus 3 according to the first embodiment can be applied within a necessary range. Therefore, repeated description will be omitted. In the ninth embodiment of the present invention, the control unit 31 reads a program and data from the RAM 32, and executes program execution processing based on information or the like received from the first device 1, the second device 2a, the loT device 2I, or the manager terminal 6.

In the ninth embodiment of the present invention, the server apparatus 3 may function in a distributed manner in a plurality of computer apparatuses. For example, instead of the server apparatus 3, a distributed ledger technique such as a blockchain may be used. Alternatively, for example, a distributed ledger technique such as a blockchain may be used together with the server apparatus 3.

### [Manager Terminal]

Next, the manager terminal 6 according to the ninth embodiment of the present invention will be described. The manager terminal 6 is operated by a manager who manages the system 10. The manager of the system 10 may be the same as or different from the person who manages the loT device 2I.

As a hardware configuration of the manager terminal 6 according to the ninth embodiment, the hardware configuration (Fig. 28) of the viewer terminal 4B according to the first embodiment can be applied within a necessary range. Therefore, repeated description will be omitted.

The program may be stored in a recording medium such as a CD-ROM. In this case, the program stored in the recording medium may be installed in the first device 1, the second device 2a, the loT device 2I, the server apparatus 3, and/or the manager terminal 6 to execute a predetermined function.

Alternatively, the program may be distributed from a computer apparatus outside of the system 10. In this case, the program distributed from a computer apparatus outside of the system 10 may be installed in the first device 1, the second device 2a, the loT device 2I, the server apparatus 3, and/or the manager terminal 6 to execute a predetermined function.

Hereinafter, a mode in which the position of the loT device 2I is specified using the system 10 will be described. According to the system 10, distances between the plurality of first devices 1 and the second device 2a can be calculated through communication between each of the plurality of first devices 1 and the second device 2a. The position of the second device 2a can be specified based on the plurality of calculated distances. By including the second device 2a in the IoT device 2I, the position of the loT device 2I can be specified.

Since the distance between the first device 1 and the second device 2a is calculated based on a propagation time of communication between the first device 1 and the second device 2a, an accurate distance can be calculated as a time deviation and a phase deviation between the internal clocks of the first device 1 and the second device 2a are smaller. Hereinafter, an example in which the distance between the first device 1 and the second device 2a is calculated after synchronization of the internal clocks of the first device 1 and the second device 2a will be described.

### [Distance Calculation Processing]

The distance calculation processing according to the nineth embodiment of the present invention will be described. The distance calculation processing is processing for calculating a distance between each of the plurality of first devices 1 and the second device 2a based on a propagation time of information or a signal between each of the plurality of first devices 1 and the second device 2a. Since the second device 2a is included in the IoT device 2I, it can be said that the processing is processing for calculating the distance between each of the plurality of first devices and the loT device 2I. In the distance calculation processing according to the nineth embodiment, the same processing as the distance calculation processing according to the first embodiment (Fig. 6) can be applied. Therefore, repeated description will be omitted.

In the ninth embodiment, the distance calculation processing can be executed, for example, every predetermined time or whenever a predetermined condition is satisfied. For example, the distance calculation processing may be executed a predetermined number of times in one second, may be executed once in several seconds, may be executed once in several hours, or may be executed once a day.

### [Position Specifying Processing]

Next, position specifying processing according to the ninth embodiment of the present invention will be described. The position specifying processing is processing for specifying the position of the second device based on the distance between each of the plurality of first devices 1 and the second device 2a calculated in the distance calculation processing. Since the second device 2a is included in the loT device 2I, it can be said that the second device 2a is processing for specifying the position of the loT device 2I. The same processing as the position specifying processing (Fig. 7) according to the first embodiment can be applied to the position specifying processing according to the ninth embodiment. Therefore, repeated description may be omitted.

The position specifying processing illustrated in Fig. 7 can be executed by, for example, any of the first device 1, the second device 2a, and the server apparatus 3. Information regarding the distance between each of the plurality of first devices 1 and the second device 2a (the distance calculated in step S19) may be transmitted in advance to a device that executes the position specifying processing in association with time information regarding the calculated time, identification information of the first device 1 (first device ID) or positional information of the first device 1, and identification information of the second device 2a (second device ID), and may be used in the position specifying processing. Here, an example in which the server apparatus 3 executes the position specifying processing will be described.

When the second device 2a transmits the information to the server apparatus 3, communication between the second device 2a and the server apparatus 3 may be executed via a smart meter installed in a nearby building. Communication between the second device 2a and the server apparatus 3 may be executed via an optical fiber installed alongside the power transmission tower.

In the position specifying processing, the position of the second device 2a is specified based on the distance between each of the plurality of first devices 1 and the second device 2a and the positions of the first devices 1 (step S41). The position of the first device 1 may be stored in advance in the server apparatus 3. The calculation processing for specifying the position of the second device 2a is not particularly limited.

The specified position of the second device 2a is stored in the storage unit 33 of the server apparatus 3 in association with time information regarding the calculated time (time information regarding the time at which the distance is calculated or time information regarding the time at which the position is specified), identification information of the first device 1 (first device ID) or positional information of the first device 1, and identification information of the second device 2a (second device ID) (step S42). With steps S41 and S42, the position specifying processing ends.

The distance between each of the plurality of first devices 1 and the second device on which the position of the second device 2a is specified in step S41 is preferably calculated at the same time or a close time (for example, it is calculated when the time at which the propagation time of the information or the signal between each of the plurality of first devices 1 and the second device 2a is measured is the same time or a close time). Here, the close time is not particularly limited, but is preferably a time within a range of a predetermined time from one time. By using the distance between each of the plurality of first devices 1 and the second device calculated at the same time or the close time, it is possible to specify a more accurate position at that time.

The position of the second device 2a specified in step S41 may be represented by latitude, longitude, and altitude, or may be represented by XYZ coordinates in a predetermined coordinate space. The position of the second device 2a specified in step S41 may be displayed on a map by the manager terminal 6 or another computer apparatus.

The position of the loT device 2I is specified by specifying the position of the second device 2a. Since the second device ID and the loT device ID are stored in association in the server apparatus 3, the position of the second device 2a is stored in association with the loT device ID in step S42.

When the first device 1 or the second device 2a executes the position specifying processing, the specified position of the second device 2a may be stored in a memory in the control unit 11 of the first device 1 or a memory in the control unit 21 of the second device 2a in step S42.

Next, a mode in which information acquired by the loT device 2I is encrypted to be stored in the server apparatus 3 using the system according to the ninth embodiment of the present invention will be described.

### [Encryption Processing]

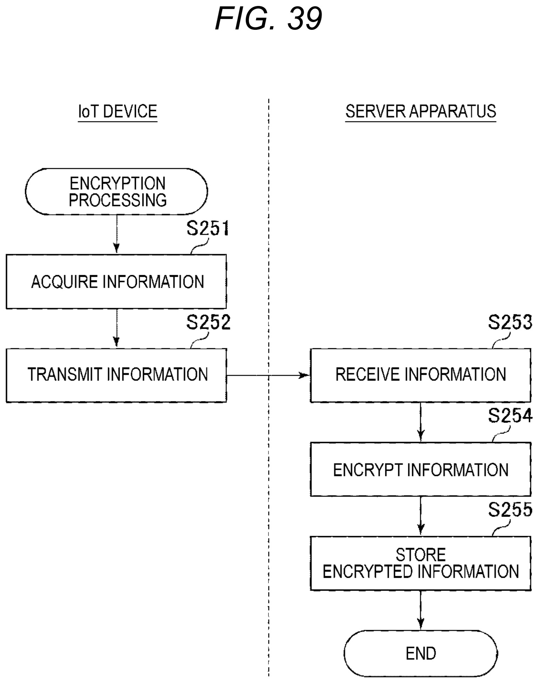

Fig. 39 is a diagram illustrating a flowchart of encryption processing according to the ninth embodiment of the present invention. First, the loT device 2I acquires information (step S251). Subsequently, the loT device 2I transmits the acquired information to the server apparatus 3 (step S252). The server apparatus 3 receives the transmitted information (step S253). The server apparatus 3 encrypts the received information (step S254). The server apparatus 3 stores the encrypted information in the storage unit 33 (step S255). Through steps S251 to S255, the encryption processing ends.

A method in which the IoT device 2I acquires information in step S251 is not particularly limited, and can be appropriately designed. The loT device 2I may acquire information by a sensor or may acquire information by receiving an input from a user.

A frequency at which the loT device 2I acquires information is not particularly limited, and can be appropriately designed. The loT device 2I may normally continue to acquire information, may acquire information periodically, or may acquire information irregularly.

The transmission frequency of the information in step S252 is not particularly limited, and can be designed as appropriate. The loT device 2I may transmit information at a timing at which the information is acquired, or may transmit information at a timing different from the timing at which the information is acquired. The loT device 2I may normally continue to acquire, may transmit information periodically, or may transmit information irregularly.

In step S254, the information acquired by the loT device 2I is encrypted based on the position and a time of the second device 2a corresponding to the loT device 2I acquiring the information. The position of the second device 2a corresponding to the loT device 2I may be stored in the server apparatus 3 in step S42 of the above-described position specifying processing. The time may be a time at which the distance is calculated in step S19 of the above-described distance calculation processing, may be a time at which the position is specified in step S41 of the above-described position specifying processing, or may be a time at which the information is encrypted in step S254 of the encryption processing.

A method of encrypting information in step S254 is not particularly limited, and can be designed as appropriate. In step S254, for example, information may be encrypted by ID-based encryption in which a public key can be generated based on any identifier. In this case, an identifier can be generated based on the position and the time of the IoT device 2I (the second device 2a). For example, a combination of numerical values representing latitude, longitude, and altitude indicating the position of the loT device 2I (the second device 2a) and a numerical value representing the time may be used as the identifier. The server apparatus 3 can generate the identifier based on the position and the time of the loT device 2I (the second device 2a) and encrypt the information using a public key corresponding to the identifier. The server apparatus 3 may generate the public key based on the generated identifier and the master public key. The master public key may be generated by a private key generator (PKG) or may be generated by the server apparatus 3.

According to the ID-based encryption, since the public key can be uniquely generated based on any identifier, the information can be encrypted without distributing the encrypted key in advance. The information encrypted through the ID-based encryption may be able to be decrypted with a secret key generated by a private key generator (PKG).

The processing of step S254 may be executed in the loT device 2I. In this case, information necessary for the encryption is stored in advance in the storage unit of the loT device 2I.

In step S255, the server apparatus 3 may store the encrypted information in association with the loT device ID corresponding to the loT device 2I acquiring the information.

In this way, the encrypted information is stored in the server apparatus 3. Therefore, even when unauthorized access or hacking is executed on the server apparatus 3, a risk of leakage of content of the information can be reduced.

The server apparatus 3 may execute arithmetic processing on the encrypted information in the encrypted state. A method of executing the arithmetic processing while encrypting the information is not particularly limited, and can be appropriately designed. Any secret calculation technique can be adopted to execute the arithmetic processing with the information being encrypted. A scheme of the secret calculation technique may be a homomorphic encryption scheme, a secret distribution scheme, or a hardware-based scheme. In order to execute secret calculation, encryption different from the encryption executed in step S254 may be executed on the information again. Alternatively, the information may be decoded in a secure region to execute secret calculation.

Hereinafter, a mode in which a prediction model is generated by executing machine learning using the encrypted information as input data or output data of the prediction model using the system according to the ninth embodiment of the present invention will be described.

### [Machine Learning Processing]

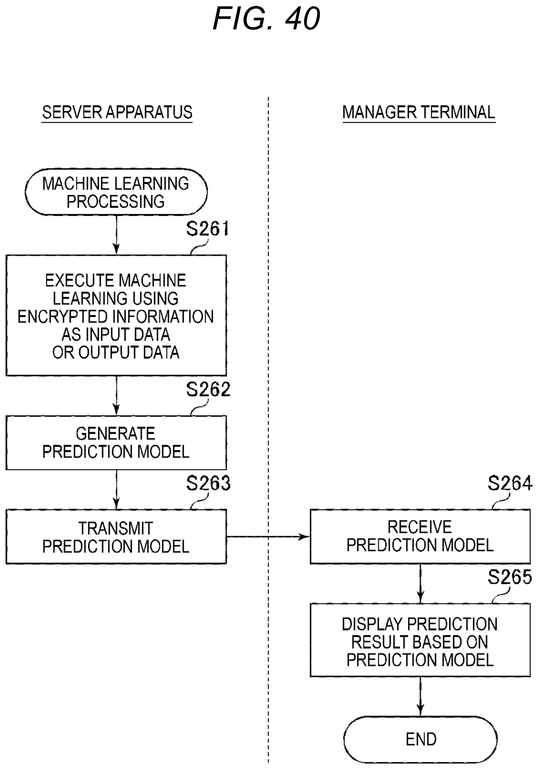

Fig. 40 is a diagram illustrating a flowchart of machine learning processing according to the ninth embodiment of the present invention. The server apparatus 3 executes machine learning using the encrypted information as input data or output data of the prediction model (step S261). The server apparatus 3 generates a prediction model (step S262). The server apparatus 3 transmits the generated prediction model to the manager terminal 6 (step S263). The manager terminal 6 receives the transmitted prediction model (step S264). The manager terminal 6 uses the received prediction model to display a prediction result based on the received prediction model on a display screen (step S265). Through steps S261 to S265, the machine learning processing ends.

The method of executing the machine learning and generating the prediction model in steps S261 and S262 is not particularly limited, and can be appropriately designed. In steps S261 and S262, the machine learning may be executed using the encrypted information as the input data or the output data of the prediction model with the encrypted information being encrypted to generate the prediction model. Any parameter, feature, or the like that is a prediction target may be set according to the type of information acquired by the IoT device 2I, a purpose of generating a prediction model, or the like.

A machine learning algorithm is not particularly limited, and a known algorithm can be used. Linear regression, multiple regression analysis, a support vector machine, a decision tree, a random forest, and deep learning using a multilayer neural network can be given as examples.

The multilayer neural network includes an input layer, an output layer, and a plurality of intermediate layers. A weight is set to an edge connecting a node to a node in each layer. A weight corresponding to each input to the node is set to the edge, and a value obtained by multiplying each input to the node by the weight and multiplying these weights and a bias are added. To calculate an activity value is calculated by performing nonlinear conversion on the value obtained by the addition using an activation function. The calculated activity value is a value of an input passed to the node of the next layer. The number of intermediate layers can be appropriately designed. A weight is optimized with training data.

For example, in steps S261 and S262, the machine learning may be executed to generate the prediction model using the encrypted information as the input data of the prediction model and using unencrypted information corresponding to the encrypted information as the output data of the prediction model. In this case, when the encrypted information is input to the prediction model, the unencrypted information is output as a prediction result. The information used as the output data preferably does not include information with which an individual can be specified. In steps S261 and S262, for example, the system 10 can generate a prediction model of loan determination of a loan or a credit card. In this case, for example, the prediction model is generated using encrypted information regarding a customer as input data and using information regarding whether a loan case of the customer has defaulted as output data. A manager can acquire information regarding whether the customer will default by inputting encrypted information regarding the customer to such a prediction model.

In step S263, the prediction model may be transmitted in an encrypted state or may be transmitted without being encrypted.

In step S265, the manager terminal 6 can acquire output data that is a prediction result by inputting information corresponding to the input data of the prediction model. Depending on the prediction model, the input data may be encrypted. The mode in which the prediction result is displayed in step S265 is not particularly limited, and can be designed as appropriate. The prediction result may be displayed as a graph, a table, or the like.

The machine learning processing may be executed in response to a request from the manager terminal 6 or may be automatically executed at a predetermined frequency. The prediction model generated in step S262 may be stored in a storage unit of the manager terminal 6, and the processing of step S265 may be executed at any timing. When information is input by the manager terminal 6, a prediction model corresponding to the input information may be specified by the server apparatus 3 or the manager terminal 6, and the processing of step S265 may be executed. The processing of steps S264 and S256 may be executed as follows. The prediction model generated in step S262 is stored in the storage unit 33. When the information is input by the manager terminal 6, the input information is transmitted to the server apparatus 3. The prediction result may be output using the information and the prediction model received by the server apparatus 3, and the prediction result may be transmitted to the manager terminal 6.

In the above description, a mode in which machine learning is executed in the server apparatus 3 has been described. However, the machine learning may be executed in another server (hereinafter also referred to as a machine learning server) that executes the machine learning. For example, the server apparatus 3 may transmit the encrypted information to the machine learning server, and the machine learning server may generate the prediction model by executing the machine learning using the encrypted information as input data or output data of the prediction model in the encrypted state. In this case, the generated prediction model may be transmitted to the server apparatus 3 and/or the manager terminal 6.

In the above description, the mode in which the prediction model generated in the server apparatus 3 is transmitted to the manager terminal 6 has been described, but the generated prediction model may be further transmitted to another machine learning server. The generated prediction model may be transmitted to another machine learning server in an encrypted state. For example, the machine learning server may generate a new prediction model by receiving prediction models from the plurality of server apparatuses 3 and executing associative learning on the received prediction models. In this case, a new generated prediction model may be transmitted to the server apparatus 3 and/or the manager terminal 6.

As described above, the IoT device 2I may be included in a mobile object or may be a mobile object that has a function of moving the loT device 2I itself. However, the loT device 2I may not be included in a mobile object and may not have a moving function. That is, the loT device 2I may include a device that does not move. For example, the loT device 2I may be fixed at a predetermined location. Even in this case, the loT device 2I may be moved by a person or an animal or may be moved by a natural phenomenon such as wind or rain. Accordingly, the system 10 according to the present invention also includes a system that includes the plurality of first devices 1, the loT device 2I, and the second device 2a included in the loT device 2I, calculates a distance between each of the plurality of first devices 1 and the second device 2a based on a propagation time of information or a signal between each of the plurality of first devices 1 and the second device 2a, and specifies the position of the second device 2a based on the calculated distance between each of the plurality of first devices 1 and the second device 2a. In the system 10, the information acquired by the loT device 2I can be encrypted based on the specified position and time. Here, the time may be any of the time at which the distance is calculated, the time at which the position is specified, and the time at which the information is encrypted.

As described above, the system includes a plurality of first devices, an IoT device, and the second device included in the loT device. The system includes the distance calculator configured to calculate a distance between each of the plurality of first devices 1 and the second device 2a based on a propagation time of information or a signal between each of the plurality of first devices 1 and the second device 2a, a position specifier configured to specify a position of the second device based on the calculated distance between each of the plurality of first devices 1 and the second device 2a, and an encryptor configured to encrypt information acquired by the loT device based on the position specified by the position specifier and a time. The time is a time at which the distance is calculated by the distance calculator, a time at which the position is specified by the position specifier, or a time at which the information is encrypted by the encryptor, Thus, a novel system protecting information can be provided.

As described above, the encryptor encrypts the information through ID-based encryption using a public key corresponding to an identifier generated based on the position and the time specified by the position specifier. Thus, the information can be protected using the identifier generated based on the position and the time.

As described above, the system 10 includes a prediction model generator configured to generate a prediction model by executing machine learning using encrypted information as input data or output data of the prediction model while the encrypted information remains. Thus, it is possible to generate the prediction model while protecting the information.

In this way, the loT device includes a sensor, and the encryptor can protect information acquired by the sensor by encrypting the information acquired by the sensor.

In this way, the distance calculator calculates a distance between the first device and the second device based on a time deviation between an internal clock of one first device and an internal clock of the second device. Thus, it is possible to calculate a more accurate distance.

In this way, the system 10 includes a time deviation calculator configured to calculate a time deviation between one first device and the second device by executing communication between the one first device and the second device, and a time corrector configured to correct the time in the second device based on the calculated time deviation. Thus, it is possible to synchronize the time of the second device with the time of the first device.

In this way, the system 10 includes a phase deviation calculator configured to calculate a phase deviation of a clock between one first device and the second device by executing communication between the one first device and the second device, and a phase corrector configured to correct the phase in the second device based on the calculated phase deviation. Thus, it is possible to synchronize the phase of the second device with the phase of the first device.

### [Other Embodiments]

The system 10 according to the present invention can be modified within the scope of the gist of the invention without being not limited to the system 10 described in the above-described first to ninth embodiments. The configurations of the system 10 described in the first to ninth embodiments may be arbitrarily combined.

According to the present invention, since the position of the second device is specified based on the distance between each of the plurality of first devices and the second device, the position of the mobile object including the second device can be specified. Accordingly, it is possible to execute various controls on various mobile objects. The mobile object includes, for example, a work vehicle, an indoor work robot, a medication cart, a serving device, an item collection apparatus, an imaging apparatus, a receptacle, or an electric storage apparatus.

According to the present invention, since the distance is calculated based on the time deviation of the clock between the clock of one first device and the second device, it is possible to specify the position of the mobile object 2 without containing an error due to the time deviation. According to the present invention, since the time in the second device is corrected based on the calculated time deviation, the position of the mobile object 2 can be accurately specified based on the synchronized time. In addition, according to the present invention, since the phase in the second device is corrected based on the calculated phase deviation, the position of the mobile object 2 can be accurately specified based on the time at which the phases are synchronized.

According to the present invention, when it is determined that the specified position does not match the movement route, the movement route information is modified. Therefore, when the mobile object 2 is an automatic driving vehicle, autonomous traveling can be supported, and work by the automatic driving vehicle can be made efficient.

**Reference Signs List**

| | | | | | |
|---|---|---|---|---|---|
| 1 | First device, | 1A | Wireless device. | | |
| 2 | Mobile object, | 2A | Indoor work robot, | | |
| 2B | Medication cart, | 2C | Serving device, | | |
| 2D | Item collection apparatus, | 2E | Imaging apparatus, | | |
| 2F | Unmanned aircraft, | 2G | Vehicle, | | |
| 2H | Electric storage apparatus, | 2I | loT device, | | |
| 2a | Second device, | 3 | Server apparatus, | | |
| 3A | Blockchain, | 4 | User terminal, | | |
| 4A | Instruction apparatus, | 4B | Viewer terminal, | | |
| 4C | User terminal, | 5 | Communication network | | |
| 6 | Manager terminal, | 6A | Management apparatus, | | |
| 7 | Ordering apparatus, | 8 | Reader termina, | 9 | RF tag, |
| 10 | System, | | | | |
| 11 | Control unit, | 12 | RF chip, | 12a | Clock, |
| 12b | Phase detector, | 13 | Oscillator, | | |
| 21 | Control unit, | 22 | RF chip, | 22a | Clock, |
| 22b | Phase detector, | 23 | Oscillator, | 24 | RAM, |
| 25 | Storage unit, | 26 | Drive unit, | 27 | Display unit, |
| 28 | Sensor unit, | 29 | Imaging unit, | | |
| 31 | Control unit, | 32 | RAM, | 33 | Storage unit |
| 34 | Communication interface, | | | | |
| 41 | Control unit, | 42 | RAM, | 43 | Storage unit |
| 44 | Input unit, | 45 | Display unit, | 46 | Communication interface, |
| 50 | Building, | 51 | Movement route, | 52 | Region, |
| 53 | Corridor, | | | | |
| 60 | Positional information table, | 61 | Time, | | |
| 62 | Positional information, | | | | |
| 151 | Tray, | 152 | Reading device, | 153 | Display screen, |
| 154 | Roller, | | | | |
| 160 | Hospital, | 161 | Medicine preparation place, | | |
| 162 | Hospital room, | 163 | Waiting place, | 164 | Bed |
| 165 | Movement route, | | | | |
| 170 | Medication information management table, | | | | |
| 171 | Patient ID, | 172 | Tray No., | 173 | Status, |
| 174 | Medication time, | | | | |
| 250 | Restaurant, | 251 | Kitchen, | 252 | Waiting place, |
| 253 | Region, | 254 | Table, | 255 | Mark, |
| 256a,256b, | Route, | | | | |
| 350 | Device body, | 351 | Item storage, | | |
| 352 | Reading device, | 353 | Roller, | | |
| 360 | Warehouse, | 361 | Waiting place, | | |
| 362 | Storage shelf, | 363 | Component, | | |
| 364 | Predetermined position, | 365 | Movement route | | |
| 370 | Product master table, | | | | |
| 371 | Product ID, | 372 | Component ID, | 373 | Number, |
| 374 | Storage position ID | | | | |
| 441 | Traveling machine, | 442 | Suspender, | 443 | Body, |
| 444 | Connection unit, | 445 | Support unit, | 446 | Rope, |
| 451 | Vehicle body, | 452 | Attachment unit, | 453 | Wheel |

## Claims

1. A system including a plurality of first devices and a mobile object including a second device, the system comprising:
a distance calculator that calculates a distance between each of the plurality of first devices and the second device based on a propagation time of information or a signal between each of the plurality of first devices and the second device; and
a position specifier that specifies a position of the second device based on the calculated distance between each of the plurality of first devices and the second device.

2. The system according to claim 1, wherein the distance calculator calculates the distance based on a time deviation between a clock of one of the first devices and a clock of the second device.

3. The system according to claim 1 or 2, comprising:
a time deviation calculator that calculates a time deviation between one of the first device and the second device by executing communication between the one first device and the second device; and
a time corrector that corrects a time in the second device based on the calculated time deviation.

4. The system according to claim 1 or 2, comprising:
a phase deviation calculator that calculates a phase deviation of a clock between one of the first device and the second device by executing communication between the one first device and the second device; and
a phase corrector that corrects a phase in the second device based on the calculated phase deviation.

5. The system according to claim 1 or 2, wherein the mobile object executes automatic driving according to predetermined movement route information.

6. The system according to claim 5, comprising:
a first determinator that determines whether the specified position matches predetermined movement route information; and
a movement route modifier that modifies the movement route information when it is determined that the specified position does not match the predetermined movement route information.

7. The system according to claim 1 or 2, wherein the mobile object is an agricultural machine.

8. The system according to claim 1 or 2, wherein the mobile object is an indoor work robot.

9. The system according to claim 1 or 2, wherein the mobile object is a medication cart capable of transporting medicine to be provided to a patient.

10. The system according to claim 9, wherein the medication cart has an automatic driving function and sequentially moves to positions corresponding to a plurality of patients.

11. The system according to claim 10, comprising:
a position storage that stores a position of a bed for each patient;
a first patient specifier that specifies a plurality of patients to whom medicine is to be delivered;
a movement route generator that generates movement route information of the medication cart based on positions corresponding to the specified patients; and
a movement controller that controls the medication cart to move according to the generated movement route information.

12. The system according to claim 9,
wherein the medication cart includes a plurality of trays, and
wherein the system comprising:
a second patient specifier that specifies the patient scheduled to use contents of one of the plurality of trays; and
a notifier that notifies of the tray corresponding to the specified patient and/or an enablementer that controls the tray corresponding to the specified patient such that the tray is available.

13. The system according to claim 12, wherein, when the patient specified from the position of the medication cart does not match the patient specified by the second patient specifier, the notifier and the enablementer are not executed.

14. The system according to claim 1 or 2, wherein the mobile object is a serving device capable of automatically traveling to serve food and drink.

15. The system according to claim 14, comprising:
an order device operated by a customer of a restaurant;
a first order information transmitter that transmits order information input through an operation executed by the customer on the order device to the serving device; and
a first movement controller that controls the serving device such that the food and drink are moved to a position corresponding to the order device after the food and drink is placed in the serving device.

16. The system according to claim 14, comprising:
a management apparatus operated by a store clerk of a restaurant;
a second order information transmitter that transmits order information input through an operation of a customer on an order device to the management apparatus; and
an order information display that displays at least a part of the order information by the management apparatus.

17. The system according to claim 14, comprising:
a management apparatus operated by a store clerk of a restaurant; and
a second movement controller that controls the serving device to move to a predetermined position in response to an operation of the store clerk on the management apparatus.

18. The system according to claim 14,
wherein the serving device includes a weight sensor; and
wherein the system comprising
a movement controller that controls such that movement of the serving device starts in response to placement of the food and drink on the serving device by the weight sensor and/or serving of the food and drink from the serving device by the weight sensor.

19. The system according to claim 14,
wherein a food and drink dish on which food and drink are placed includes an RF tag, and
wherein the system comprising:
a specifier that specifies food and drink information regarding the served food and drink by reading the RF tag using a reading terminal;
a second determinator that determines whether order information input through an operation of a customer on an order device matches the food and drink information; and
a first display that displays a determined result.

20. The system according to claim 14,
wherein a food and drink dish on which food and drink are placed includes an RF tag, and
wherein the system comprising:
a specifier that specifies food and drink information regarding the served food and drink by reading the RF tag using a reading terminal; and
a second display that displays order information and the food and drink information input through an operation of a customer on an order device.

21. The system according to claim 1 or 2, wherein the mobile object is an item collection apparatus capable of automatically traveling to collect items.

22. The system according to claim 21, comprising:
an instruction apparatus that gives an instruction to produce a product that is able to be produced from a plurality of items or collect an item;
an information transmitter that transmits collection information of the item to the item collection apparatus by an input to the instruction apparatus; and
a first movement controller that controls the item collection apparatus such that the item collection apparatus is moved to a position at which the item included in the collection information is stored.

23. The system according to claim 22, comprising
a second movement controller that controls the item collection apparatus such that the item collection apparatus is moved to a predetermined position after the item collection apparatus collects the item included in the collection information.

24. The system according to claim 21,
wherein the item includes an RF tag and the item collection apparatus includes a reading device of the RF tag, and
wherein the system comprising
a detector that detects that the item has been collected by reading the RF tags by the reading device.

25. The system according to claim 24, comprising:
a third determinator that determines, based on identification information of the item read from the RF tags by the reading device, whether the identification information is identification information corresponding to the item included in the collection information; and
a notifier that notifies that items different from the item included in the collection information are collected when the second determinator determines that the identification information of the item read from the RF tags does not correspond to the identification information corresponding to the item included in the collection information.

26. The system according to claim 1 or 2, wherein the mobile object includes an electronic information creation apparatus.

27. The system according to claim 26,
wherein a position specifier specifies the position of the electronic information creation apparatus, and
wherein the system comprising:
a creator that creates electronic information; and
an NFT issuance requestor that makes a request for issuing a non-fungible token (NFT) in association with the electronic information created by the creator and positional information specified by the position specifier and related to the position of the electronic information creation apparatus during creation of the electronic information.

28. The system according to claim 27, comprising
a viewing enablementer that enables the electronic information and the positional information to be viewed on a viewer terminal.

29. The system according to claim 27, wherein
the electronic information creation apparatus is an imaging apparatus,
the electronic information is image information regarding an image,
the creator creates image information regarding an image by imaging landscape, and
the NFT issuance requestor makes the request for issuing the NFT in association with a position of the imaging apparatus during capturing of the image and/or a right holder of a real estate corresponding to a position of an imaging target object in the landscape.

30. The system according to claim 27, wherein
the electronic information creation apparatus is an imaging apparatus,
the electronic information is image information regarding an image,
the creator creates image information regarding an image by imaging landscape, and
the NFT issuance requestor makes the request for issuing the NFT in association with time information regarding a time at which the image is being captured, information regarding real estate corresponding to a position of the imaging apparatus at which the image is being captured and/or a position of an imaging target in the landscape, and/or information regarding the landscape.

31. The system according to claim 1 or 2, wherein the mobile object is a vehicle that includes a receptacle that has a space capable of storing items and is capable of traveling on ground.

32. The system according to claim 31, wherein the vehicle has an automatic traveling function.

33. The system according to claim 32, comprising:
a transport request receptor that receives a transport request for an item from a user terminal operated by a user;
a route information generator that generates route information for moving the receptacle from a departure point to a target point corresponding to the received transport request; and
a movement controller that controls the receptacle such that the receptacle is moved in accordance with the generated route information,
wherein a route corresponding to the generated route information includes a route along which the receptacle is transported by a suspended rope.

34. The system according to claim 31, wherein the receptacle is a cargo container.

35. The system according to claim 1 or 2, wherein the mobile object includes an electric storage apparatus.

36. The system according to claim 35, wherein predetermined information regarding a first electric storage apparatus is transmitted to a first computer apparatus when a voltage output from a storage battery or a storage amount of the storage battery of the first electric storage apparatus executing power feeding satisfies a predetermined first condition.

37. The system according to claim 36, comprising
a specifier that specifies a second electric storage apparatus that satisfies a predetermined second condition among the second electric storage apparatuses different from the first electric storage apparatus.

38. The system according to claim 37, comprising
a movement controller that controls such that the specified second electric storage apparatus is moved to vicinity of the first electric storage apparatus.

39. The system according to claim 1 or 2, comprising
a billing amount calculator that calculates a billing amount for a user of a mobile object based on an operation time or an operation distance of the mobile object.

40. The system according to claim 39, comprising
an operation time calculator that calculates the operation time or the operation distance of the mobile object based on the propagation time of information or the signal between the first device and the second device, and
wherein the operation time calculator calculates the operation time or the operation distance of the mobile object based on the calculated distance between the first device and the second device.

41. The system according to claim 40, wherein the operation time calculator calculates the operation time or the operation distance based on a change in the specified position.

42. The system according to claim 39, comprising
a billing amount adder that adds another billing amount for the user of the mobile object to the calculated billing amount.

43. The system according to claim 1, wherein
the mobile object is a mobile object that includes an IoT device or
an loT device is the mobile object that has a function of moving.

44. The system according to claim 43, comprising
an encryptor that encrypts information acquired by the loT device based on the position specified by the position specifier and a time, and
wherein the time is a time at which a distance is calculated by the distance calculator, a time at which a position is specified by the position specifier, or a time at which information is encrypted by the encryptor.

45. The system according to claim 44, wherein the encryptor encrypts information through ID-based encryption using a public key corresponding to an identifier generated based on a position and a time specified by the position specifier.

46. The system according to claim 44 or 45, comprising:
a prediction model generator that generates a prediction model by executing machine learning using the encrypted information as input data or output data of the prediction model while the encrypted information remains.

47. The system according to claim 44 or 45, wherein
the loT device includes a sensor, and
the encryptor encrypts information acquired by the sensor.

48. The system according to claim 1 or 2, comprising
a user terminal,
wherein the user terminal includes a position display that displays the specified position on a map.

49. A method executed in a system including a plurality of first devices and a mobile object including a second device, the method comprising:
a distance calculation step of calculating a distance between each of the plurality of first devices and the second device based on a propagation time of information or a signal between each of the plurality of first devices and the second device; and
a position specification step of specifying a position of the second device based on the calculated distance between each of the plurality of first devices and the second device.

50. A mobile object comprising:
a second device;
a distance calculator that calculates a distance between each of the plurality of first devices and the second device based on a propagation time of information or a signal between each of the plurality of first devices and the second device; and
a position specifier that specifies a position of the second device based on the calculated distance between each of the plurality of first devices and the second device.
